(19) Europäisches Patentamt / European Patent Office / Office européen des brevets

(11) **EP 2 595 432 A1**

(12) **EUROPEAN PATENT APPLICATION**

(43) Date of publication:
**22.05.2013 Bulletin 2013/21**

(51) Int Cl.:
*H04W 40/32* (2009.01)

(21) Application number: **12180092.4**

(22) Date of filing: **10.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.10.2011 JP 2011235554**

(71) Applicant: **FUJITSU LIMITED**
**Kawasaki-shi,**
**Kanagawa 211-8588 (JP)**

(72) Inventor: **Murakami, Norio**
**Kawasaki-shi, Kanagawa 211-8588 (JP)**

(74) Representative: **Holz, Ulrike**
**Haseltine Lake LLP**
**Lincoln House, 5th Floor**
**300 High Holborn**
**London WC1V 7JH (GB)**

(54) **Communication network system, node apparatus, and route selection method for communication network system**

(57) A communication network system including: a first node apparatus; a second and third node apparatuses; and a fourth node apparatus which performs radio communication with the first node apparatus via the second node apparatus or the third node apparatus, wherein the first node apparatus includes a control unit which determines a route selection rule for a first route reaching the fourth node apparatus via the second node apparatus and a second route reaching the fourth node apparatus via the third node apparatus, based on an adaptability indicating a reference of the route selection to route selection indicators indicating a state of the first and second routes respectively, and selects the first route or the second route according to the determined route selection rule, and the first and fourth node apparatuses perform the radio communication via the second node apparatus or the third node apparatus.

FIG. 1

COMMUNICATION NETWORK SYSTEM 10

EP 2 595 432 A1

**Description**

FIELD

The embodiments discussed herein are related to a communication network system, a node apparatus, and a route selection method in the communication network system.

BACKGROUND

There is a network system called an "ad hoc network system". For example, the ad hoc network system is a network system which allows terminal apparatus and node apparatus to perform radio communication without passing through a base station.

In the ad hoc network system, for example, the node apparatus can relay radio signal transmitted from one node apparatus to another node apparatus, for example, therefore the ad hoc network system is sometimes called an "autonomous distributed network system". For example, the ad hoc network system is used as a radio communication system between police cars in a disaster or accident situation, or between relay broadcast vehicles in news reporting. Lately the ad hoc network system is sometimes used for an inter-vehicle communication system in ITS (Intelligence Transport Systems), for example.

In such the ad hoc network system, a route may be selected if there is a plurality of routes from the node apparatus to the terminal apparatus, for example. The node apparatus can transmit data, a message or the like to the terminal apparatus via a selected route.

For example, there is a reactive type and proactive type as a method for selecting the route in the ad hoc network system.

In the reactive type method, for example, each node apparatus transmits a message or the like to other node apparatus by broadcasting, and the other node apparatus repeat this transmission by broadcasting, so as to discover the route to a target node apparatus. Examples of the reactive type route selection method are: AODV (Ad hoc On demand Distance Vector algorithm) and DSR (Dynamic Source Routing protocol). For example, according to the route selection method based on AODV, an RREQ (Route REQuest) message that includes a node ID of the target node apparatus is transmitted to peripheral node apparatus by broadcasting, and the peripheral node apparatus repeats this transmission, so as to select the route. However, in the reactive type method, the message for selecting the route is transmitted by broadcasting, so if a number of node apparatuses increases, a number of messages to be transmitted also increases, and the processing load on the node apparatus for selecting the route increases accordingly.

On the other hand, in the proactive type method, for example, the node apparatus generates a routing table of an arbitrary node apparatus by exchanging a message or the like with other node apparatus, and the route to the target node apparatus is discovered using the routing table. Examples of the proactive type routing selection method are OLSR (Optimized Link State Routing protocol) and TBRPF (Topology Broadcast based on Reversed-Path Forwarding routing protocol). In the case of the route selection method based on OLSR, for example, each node apparatus exchanges a HELLO message with other node apparatus, notifying each other of the state of each node apparatus, whereby the routing table is generated and the route is selected based on the routing table. However it takes time for each node apparatus to exchange messages for generating the routing table and to recognize the network topology of all the node apparatus.

For example, there is a following technique as the root selection method. That is, in a radio network system using multi-hop radio communication, a base station transmits a data frame to radio terminal, sums up communication quality information transmitted from each radio terminal, evaluates communication quality of each communication route, and selects an optimum communication route.

Patent Document 1: Japanese Laid-open Patent Publication No. 2010-35068

In the case of the technique described in Japanese Laid-open Patent Publication No. 2010-35068, the base station transmits dedicated data frames to the radio terminal, and amount of data frame to be transmitted and received increases as a number of radio terminals increases. Since the number of data frames to be transmitted and received increases corresponding to the increase in the number of radio terminals, load increases in the base station, not only for route selection processing but also for processing to transmit and receive the data frames. As the number of radio terminals increases, load also increases in each radio terminal for receive processing and transmit processing of the data frames. Therefore, in the radio communication network system transmitting data frame, as a whole, processing load increases compared to a case of not transmitting data frame.

In the case of using the reactive type route selection method as the route selection method in the ad hoc network system, the following problems exist, for example. That is, the route selected based on simply the best quality condition is not always the best route selection, because, in radio communication, the terminal is influenced by a device or terminal unrelated to the communication, and communication quality of the radio communications depends on the communication distance, the peripheral environment and the like, and communication quality changes as time elapses.

As described in "Description of the Related Art", in the case of the reactive type route selection method, for example, the increase of communication amount for processing upon selecting the route becomes a burden on the network. In other words, if a number of nodes or a number of terminals included in the an ad hoc network system exceeds a threshold, the network load suddenly increases, and affects other nodes of which communication established, and in some cases establishing the route itself becomes difficult.

In the case of the proactive type route selection method as well, for example, it takes time for all the nodes included in the ad hoc network to recognize the network topology, and causes to derive limitation in a scale of controllable network just like the case of the reactive type.

On the other hand, in the case of each node apparatus performing the reactive type or proactive type route selection, a route selection algorithm or the like in the ad hoc network system is analyzed when analyzing the node apparatus, and there is a case that security of the network does not be guaranteed. In the ad hoc network system, for example, each node apparatus performs radio communication, and it is still possible that the route selection algorithm can be analyzed when the node apparatus is stolen, therefore network security is a problem, compared with the radio communication system in which the base station performs scheduling.

SUMMARY

Accordingly, it is desirable to provide a communication network system and a node apparatus which can reduce processing for a route selection, and a route selection method used for the communication network system.

Furthermore, it is desirable to provide a communication network system and a node apparatus which can guarantee security, and a route selection method used for the communication network system.

According to an embodiment of an aspect, a communication network system including: a first node apparatus which is connected to a network; a second and third node apparatuses which perform radio communication with the first node apparatus; and a fourth node apparatus which performs radio communication with the first node apparatus via the second node apparatus or the third node apparatus, wherein the first node apparatus includes a control unit which determines a route selection rule for a first route reaching the fourth node apparatus via the second node apparatus and a second route reaching the fourth node apparatus via the third node apparatus, based on an adaptability indicating a reference of the route selection to route selection indicators indicating a state of the first and second routes respectively, and selects the first route or the second route according to the determined route selection rule, and the first and fourth node apparatuses perform the radio communication via the second node apparatus or the third node apparatus located on the selected first route or second route.

BRIEF DESCRIPTION OF DRAWINGS

FIG. 1 illustrates a configuration example of a communication network system;
FIG. 2 illustrates an example of a route selection result in an ad hoc network system and a configuration example thereof;
FIG. 3A and FIG. 3B illustrate examples of a route selection respectively;
FIG. 4 illustrates a configuration example of an anchor AP;
FIG. 5A illustrates a configuration example of a drift AP, and FIG. 5B illustrates a configuration example of an MME (Mobility Management Entity);
FIG. 6 is a flow chart depicting an operation example in an anchor AP;
FIG. 7 is a flow chart depicting an operation example in a drift AP;
FIG. 8A illustrates of a relationship example between an anchor AP and a drift AP, and FIG. 8B is a sequence diagram depicting an operation example of a registration processing;
FIG. 9 is a flow chart depicting an example of the registration processing;
FIG. 10A and FIG. 10B are an example of an IP address management table respectively;
FIG. 11 illustrates a relationship example between an anchor AP and a drift AP;
FIG. 12 is a sequence diagram depicting an operation example of a registration processing;
FIG. 13A illustrates a relationship example between an anchor AP and a drift AP, and FIG. 13B is a sequence diagram depicting an operation example of a registration delete processing;
FIG. 14 is a flow chart depicting an operation example of a registration delete processing;
FIG. 15 illustrates a relationship example between an anchor AP and a drift AP;
FIG. 16 is a sequence diagram depicting an operation example of a registration processing;
FIG. 17 illustrates a relationship example between an anchor AP and a drift AP;

FIG. 18 is a sequence diagram depicting an operation example of a registration processing;

FIG. 19 is a flow chart depicting an example of final drift AP route management table generation processing;

FIG. 20A and FIG. 20B are an example of a drift AP route management table respectively;

FIG. 21 illustrates a configuration example of an ad hoc network system;

FIG. 22 illustrates an example of a drift AP route management table;

FIG. 23 illustrates an example of a drift AP route management table;

FIG. 24 illustrates a relationship example between an anchor AP, a drift AP and a terminal;

FIG. 25 illustrates an example of a drift AP route management table;

FIG. 26A and FIG. 26B are examples of an adjacent relationship list;

FIG. 27A and FIG. 27B are examples of an adjacent relationship list;

FIG. 28A and FIG. 28B are examples of an adjacent relationship list;

FIG. 29 illustrates an example of a final drift AP route management table;

FIG. 30 illustrates an example of a final drift AP route management table;

FIG. 31A illustrates a relationship example between a node apparatus and a weight, and FIG. 31B and FIG. 31C illustrate an example of conditions that allow each node to construct a route respectively;

FIG. 32 illustrates an example of conditions under which each node can construct a route;

FIG. 33 is a table of an example of a result of total evaluation values;

FIG. 34A and FIG. 34B are examples of computing adaptability;

FIG. 35A to FIG. 35C are examples of observation values of composing elements with respect to route indicator;

FIG. 36 illustrates a configuration example of an ad hoc network system;

FIG. 37 is a sequence diagram depicting an operation example;

FIG. 38 is a sequence diagram depicting an operation example;

FIG. 39 illustrates an example of a route selection;

FIG. 40 is a sequence diagram depicting an operation example;

FIG. 41 illustrates a configuration example of a hardware block of an anchor AP; and

FIG. 42A illustrates a configuration example of a hardware block of a drift AP, and FIG. 42B illustrates a configuration example of a hardware block of an MME.

DESCRIPTION OF EMBODIMENTS

Embodiments of the present invention will now be described.

[First embodiment]

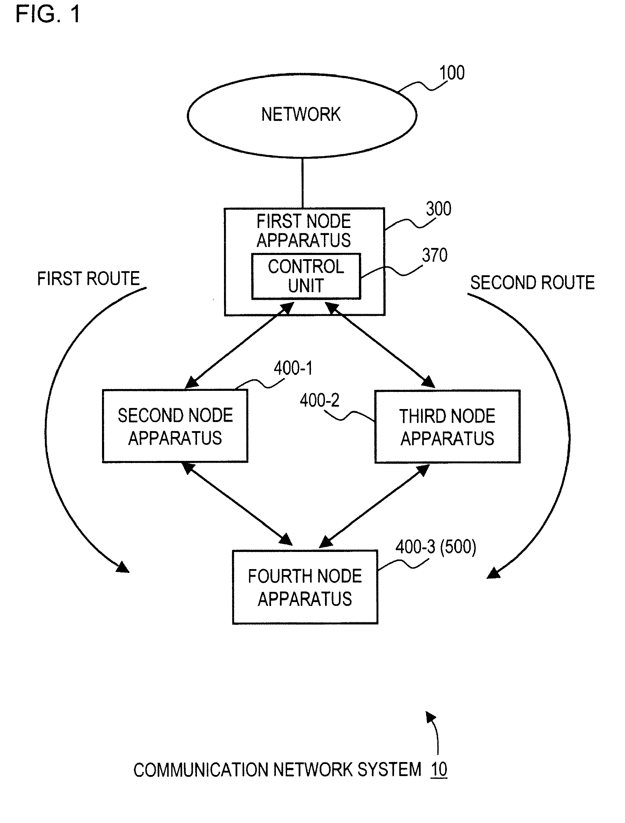

Firstly, a first embodiment will be described. FIG. 1 illustrates a configuration example of a communication network system 10 according to the first embodiment.

The communication network system 10 includes a network 100, a first node apparatus 300, a second node apparatus 400-1, a third node apparatus 400-2, and a fourth node apparatus 400-3 (or 500).

The first node apparatus 300 is connected with the network 100 and can perform radio communication with the second node apparatus 400-1 and the third node apparatus 400-2 respectively. The first node apparatus 300 can also perform radio communication with the fourth node apparatus 400-3 (or 500) via the second node apparatus 400-1 or the third node apparatus 400-2. The second node apparatus 400-1 and the third node apparatus 400-2 can perform radio communication with the first node apparatus 300, and can relay radio communication between the first node apparatus 300 and the fourth node apparatus 400-3 (or 500).

There is a first route via the second node apparatus 400-1 and a second route via the third node apparatus 400-2, when the first node apparatus 300 performs radio communication with the fourth node apparatus 400-3 (or 500).

The first node apparatus 300 includes a control unit 370. The control unit 370 determines a route selection rule for the first route and the second route, based on adaptability indicating a reference of route selection to a route selection indicator indicating states of the first route and the second route respectively, and selects the first route or the second route according to the determined route selection rule.

The first node apparatus 300 and the fourth node apparatus 400-3 (or 500) can perform radio communication via the second node apparatus 400-1 or the third node apparatus 400-2 located on the selected first or second route.

Thus, in the communication network system 10, the first node apparatus 300 selects the route, and radio communication is performed according to the selected route. Since the first node apparatus 300 selects the route, processing for the route selection in the communication network system 10 as a whole can be decreased, compared with the case of selecting the route in the second node apparatus 400-1, the third node apparatus 400-2, and the fourth node apparatus 400-3 (or 500) respectively.

Furthermore, in the communication network system 10, the first node apparatus 300 selects the route, therefore the route selection rule is not analyzed even if the second node apparatus 400-1, the third node apparatus 400-2, or the fourth node apparatus 400-3 (or 500) is analyzed. Therefore, security of the communication network system 10 as a whole can be guaranteed.

[Second embodiment]

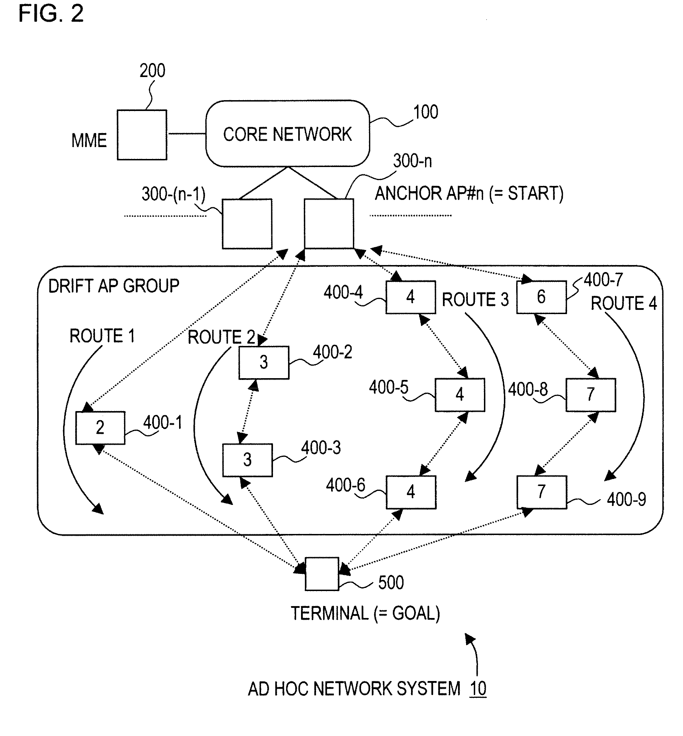

A second embodiment will now be described. FIG. 2 illustrates a configuration example of a communication network system 10 according to the second embodiment, and also illustrates an example of a route selection result. In the second embodiment, an ad hoc network system 10 will be described as an example of the communication network system 10.

In the ad hoc network system 10, a first node apparatus #n (300-n), ... connected with a core network 100 by cable or radio can perform radio communication with second node apparatuses 400-1 to 400-9. The second node apparatuses 400-1 to 400-9 can also relay radio communication between a third node apparatus 500 and the first node apparatus 300-n.

In this case, the first node apparatus #n (300-n), ..., for example, becomes a node for the core network 100, and becomes a fixed access node. The first node apparatus #n (300-n), ... may be called an "anchor AP (Access Point)".

Each of the second node apparatuses 400-1 to 400-9 do not have a direct node with the core network 100, and is a movable node apparatus. And each of the second node apparatuses 400-1 to 400-9 may be called a "drift AP".

The third node apparatus 500 does not have a direct node with the core network 100 either, and is a movable node apparatus. The third node apparatus 500 may be called a "terminal apparatus". The drift APs 400-1 to 400-9 and the terminal apparatus (hereafter may be called a "terminal") 500 may be collectively called an "access node".

In the second embodiment, the anchor AP #n (300-n) is a start and the terminal 500 is a goal, and for example the anchor AP #n (300-n) selects an optimum route at this point, so that processing for the route selection is decreased and security of the ad hoc network 10 is increased.

For example, the core network 100 in the second embodiment corresponds to the network 100 in the first embodiment. And, for example, the anchor AP 300 in the second embodiment corresponds to the first node apparatus 300 in the first embodiment. Furthermore, for example, the drift AP 400 in the second embodiment corresponds to the second node apparatus 400-1, the third node apparatus 400-2 and the fourth node apparatus 400-3 (or 500) in the first embodiment. And, for example, the terminal 500 in the second embodiment corresponds to the fourth node apparatus 400-3 (or 500) in the first embodiment.

The second embodiment will now be described. The sequence of description is as following, considering simplicity of description.

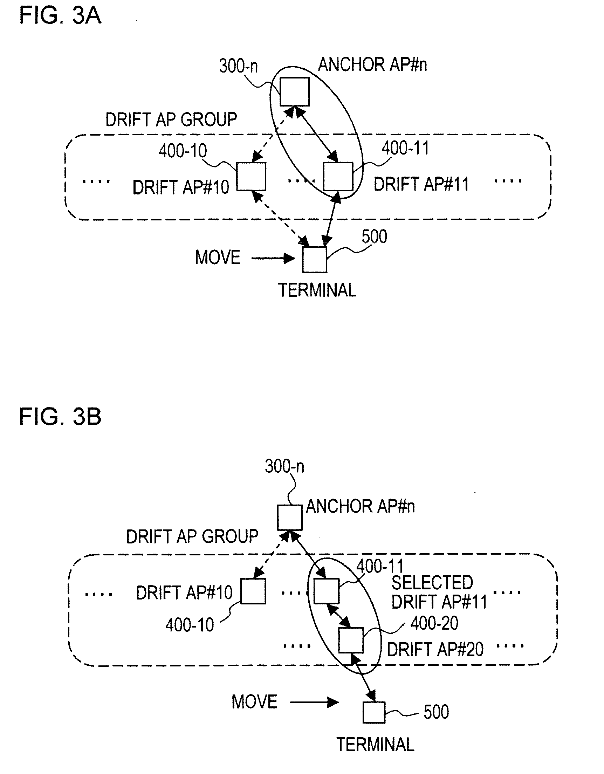

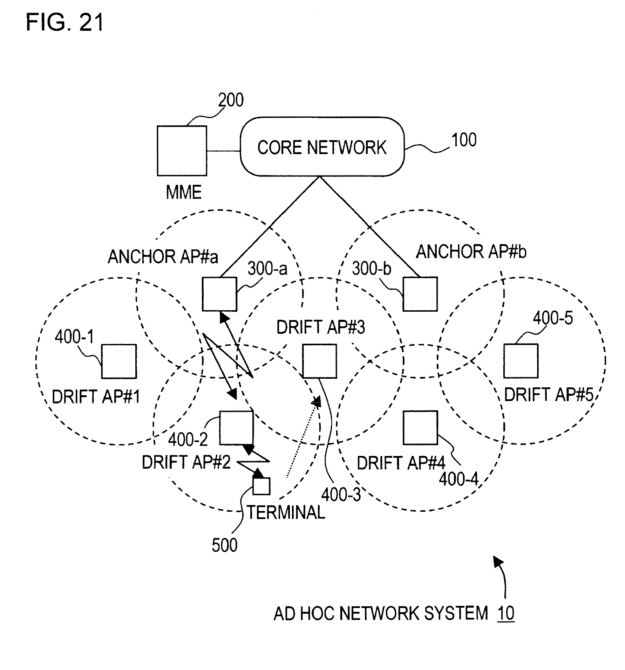

1) Configuration example of ad hoc network system 10 (e.g. FIG. 2, FIG. 21)
2) Example of route selection (e.g. Fig. 2, FIG. 3A to FIG. 3B)
3) Configuration examples of anchor AP, drift AP (or terminal), and MME

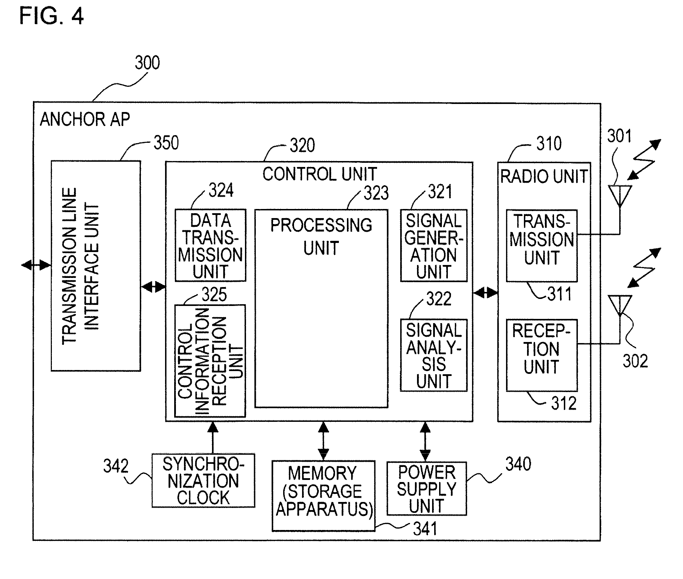

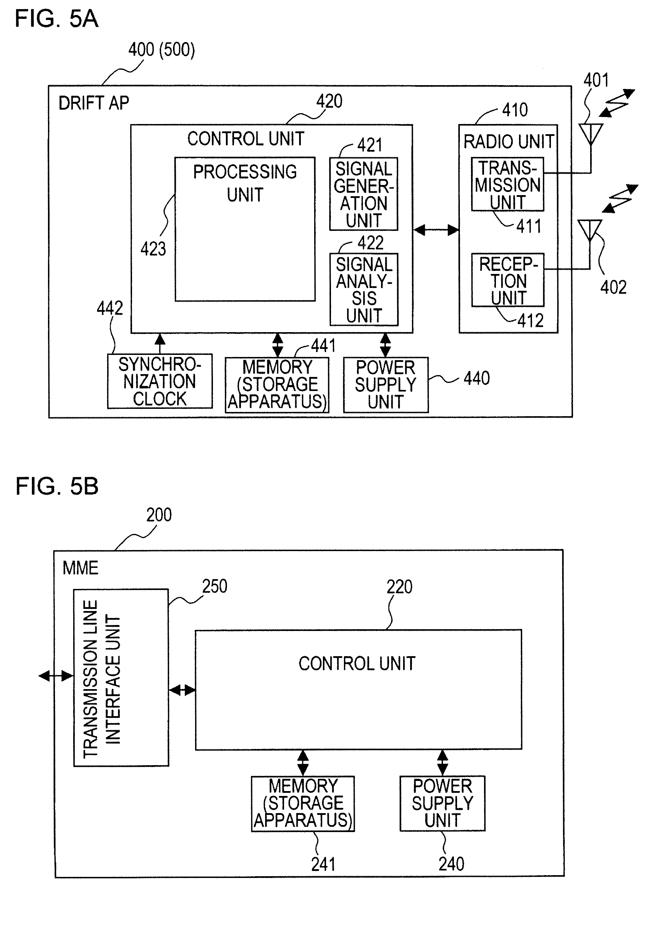

    3.1) Configuration example of anchor AP (e.g. FIG. 4)
    3.2) Configuration example of drift AP (e.g. FIG. 5A)
    3.3) Configuration example of MME (e.g. FIG. 5B)

4) Operation examples

    4.1) Whole operation example

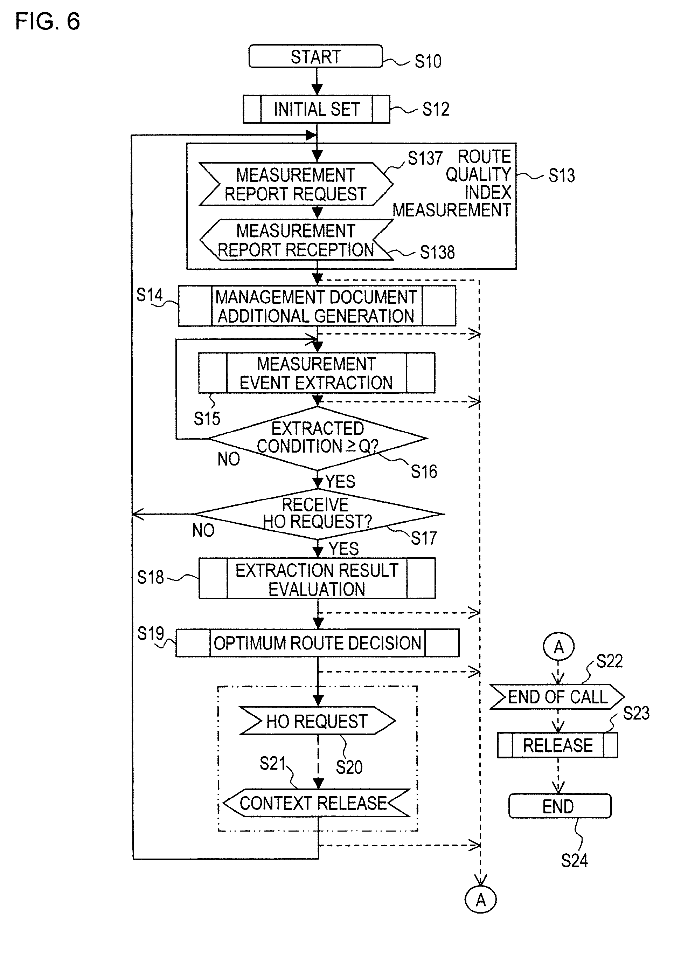

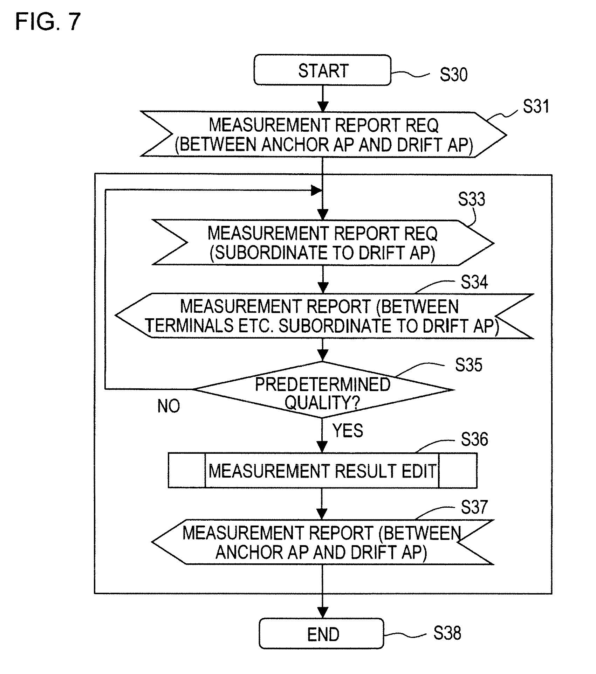

        4.1.1) Whole operation example of anchor AP (e.g. FIG. 6)
        4.1.2) Whole operation example of drift AP (e.g. FIG. 7)

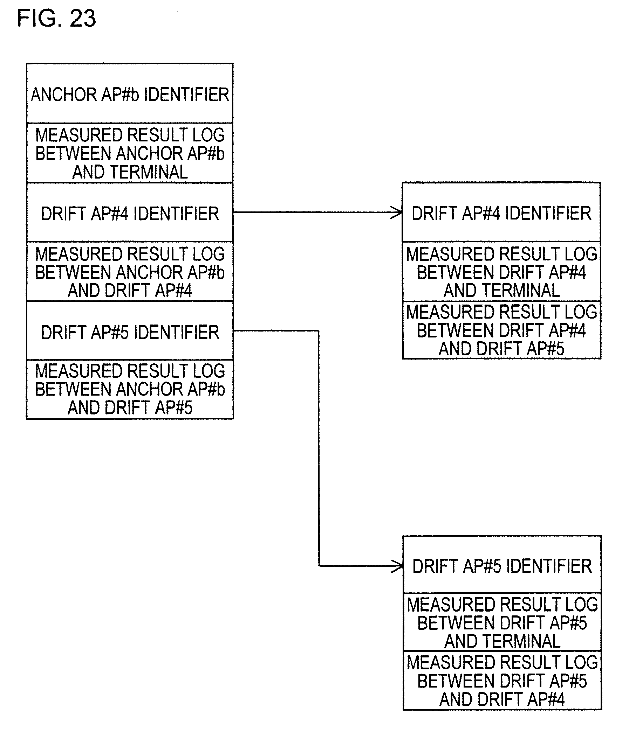

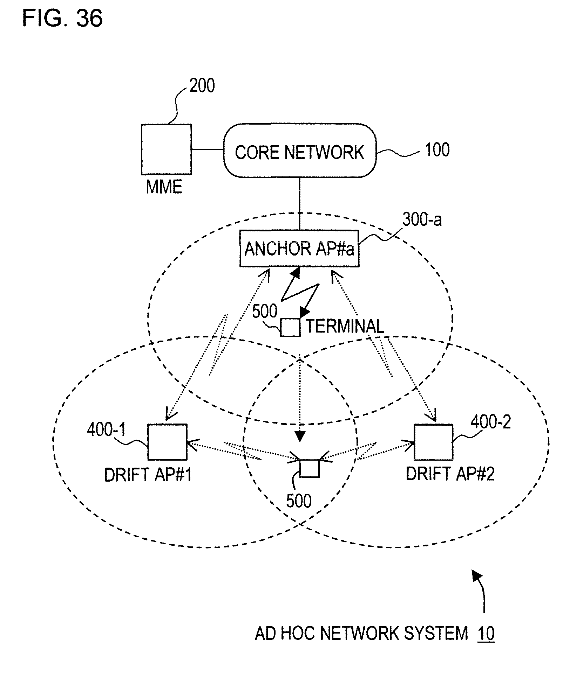

    4.2) Initial set processing and management document additional generation processing ("initial set" and "management document additional generation" in FIG. 6, FIG. 8A to FIG. 30)
    4.3) Measurement event extraction processing and extraction result evaluation ("measurement event extraction" and "extraction result evaluation" in FIG. 6, FIG. 33 to FIG. 35C)
    4.4) Optimum route decision processing ("optimum route decision" in FIG. 6, FIG. 31 to FIG. 35C)
    4.5) Operation when HO is applied (e.g. FIG. 36 to FIG. 40)

1. Configuration example of ad hoc network system 10

A configuration example of the ad hoc network system 10 will be described first. Fig. 2 or Fig. 21 illustrates a configuration example of the ad hoc network system 10. FIG. 2 illustrates an example of a route selection, and includes a configuration example of the ad hoc network system 10 according to the second embodiment. As illustrated in FIG. 2 or FIG. 21, the ad hoc network system 10 includes a core network 100, an MME 200, an anchor AP #n (300-n), ..., a drift AP 400, and a terminal 500. Unless otherwise specified, anchor AP #n (300-n), ... is described as an anchor AP 300 hereinbelow.

The core network 100 is a public mobile communication network, for example, and can provide position information, authentication information, and account management for the terminal 500, the drift AP 400, or the like using various apparatuses connected to the core network 100.

The MME 200 is directly connected with the core network 100, and can issue a connection permission to a connection request transmitted from the drift AP 400 which is newly connected to the ad hoc network. The MME 200 can also perform an exclusion processing when connection request is received from a plurality of drift APs 400 at the same time, and issue a communication permission to one of the drift APs 400.

The anchor AP 300 is directly connected to the core network 100, and can perform a route selection processing to select an optimum route. The anchor AP 300 can also control handover to the drift AP 400 and the terminal 500 after the optimum route is selected. Route select processing and handover processing by the anchor AP 300 will be described later. In the second embodiment, the anchor AP 300 and the core network 100 may be connected by cable or by radio.

The drift AP 400 is not directly connected with the core network 100, and can be installed stationary or moveable as a node apparatus that can perform radio communication with the anchor AP 300 and the terminal 500. The drift AP 400 can also receive radio signal transmitted from the anchor AP 300, or transmit radio signal to the anchor AP 300. The drift AP 400 can relay radio signal transmitted from the terminal 500 to the anchor AP 300, or relay radio signal transmitted from the anchor AP 300 to the terminal 500.

One or a plurality of drift AP(s) 400 existing in a search space of the anchor AP 300 may be called a "drift AP group". The drift AP group has a hierarchical structure having one or a plurality of drift AP(s) 400 in the route from the anchor AP 300 to the terminal 500. In the drift AP group, there are routes having one or more hops, for example. In the example in FIG. 2, the drift AP group includes the drift AP (400-1) to the drift AP (400-9).

The terminal 500 can perform a radio communication via the drift AP 400 or directly with the anchor AP 300, so as to transmit or receive such data as audio, video, and text. The terminal 500 is a moveable information communication terminal apparatus, such as a portable telephone (including a feature phone and smart phone), and a tablet terminal. In the second embodiment, the terminal 500 may be one of the drift APs 400.

2. Example of route selection

An example of route selection in the ad hoc network system 10 will now be described. FIG. 2 to FIG. 3B illustrate an example of the route selection.

In the route selection of the second embodiment, one or a plurality of route selection indicators indicating a state in each route out of a plurality of routes from the anchor AP 300 to the terminal 500, is evaluated, and the route is selected based on the reference of the route selection adopted by the ado hoc network from the route selection indicator, that is, the route is selected according to the adaptability.

Here, for example, the route selection indicator is a collective phrase for indicators indicating the state of the route. For example, the route selection indicator indicates a number of hops between the drift APs 400, a radio quality (e.g. packet loss ratio, error frequency, noise ratio) between drift APs 400, and a remain of (or remaining amount of) radio resource between each drift AP 400.

And, for example, the adaptability is a reference or indicator used to determine which rule is adapted for the route selection.

In the case of FIG. 3A, the route via the drift AP #11 (400-11), of which adaptability is highest among the plurality of routes from the anchor AP #n (300-n) to the terminal 500, is selected. FIG. 3B illustrates an example when a route via a drift AP #20 (400-20), of which adaptability is highest among the drift AP group, is selected.

FIG. 2 illustrates an example of the route selection result, and a numeric value of each drift AP (400-1 to 400-9) indicates the route select indicator. The route selection indicator in FIG. 2 is the remain power of radio resource in each drift AP 400, for example.

In FIG. 2, a route 1 is a route example when the route, of which the number of hops is lowest, is selected out of the routes from the anchor AP #n (300-n) to the terminal 500 (route 1 to route 4). In this case, for example, the route selection indicator is the number of hops and the adaptability is the lowest value. Therefore, the route selection rule is selecting the route of which the number of hops is lowest, out of the routes from the anchor AP #n (300-n) to the terminal 500. The route selected based on this route selection rule is "route 1 ".

A route 2 is an route example when the route, of which remain of radio resource is "3" or higher and the number of hops is lowest, is selected out of the routes from the anchor AP #n (300-n) to the terminal 500. In this case, for example, the route selection indictor is "number of hops" and "remain of radio resource", and the route 2 represents a route selection example based on the route selection rule in which two route selection indicators are decided as adaptability. In the case of this example, the adaptability based on the "number of hops" is a lowest value, and that based on the "remain of radio resource" is "3". Therefore, the route selection rule is selecting a route of which the remain of radio resource is "3" or more and the number of hops is lowest. The route selected based on this route selection rule is "route 2".

A route 3 is a route example when the route, of which route selection indicator (e.g. the remain of radio resource) is a certain standard ("4" in this case) or more, is selected out of the routes from the anchor AP #n (300-n) to the terminal 500. In this case, for example, the route selection indicator is the remain of radio resource, and the adaptability is "4". Therefore, the route selection rule is selecting the route of which the remain of radio resource is "4" or more. The route selected based on this route selection rule is "route 3".

A route 4 is a route example when the route, of which route selection indicator (e.g. the remain of radio resource) is best (or highest), is selected out of the routes from the anchor AP #n (300-n) to the terminal 500. In this case, for example, the route selection indicator is the remain of radio resource and the adaptability is the "highest value". Therefore, the route selection rule is selecting the route of which the remain of radio resource is highest. The route selected based on this route selection rule is "route 4".

One of the route 1 to the route 4 is selected depending on the design concept in the ad hoc network system 10 and the state of each drift AP 400. Therefore, it is possible that the route 1 is selected in one ad hoc network system, and the route 4 is selected in another ad hoc network system. The route selection indicator to be used and the adaptability to be selected may also be different depending on the ad hoc network system.

In the second embodiment, the route selection rule is determined from the route selection indicator depending on the adaptability adapted by the ad hoc network system 10, and the route is selected according to the determined rule.

In the second embodiment, this route selection is performed by the anchor AP #n (300-n). In an "autonomous distributed network system" such as the ad hoc network system 10, each drift AP 400 and terminal 500 perform radio communication with one another, and each drift AP 400 and terminal 500 can also select the route. In the second embodiment, the anchor AP #n (300-n) completely performs the route selection at one location, therefore each drift AP 400 and terminal 500 need not perform processing for route selection, which can decrease the processing of the ad hoc network system 10 as a whole. Even if each drift AP 400 or the like is analyzed, the route selection rule is held by the anchor AP 300, hence security can be guaranteed compared with the case of each drift AP being analyzed for the route selection.

3. Configuration example of each unit in ad hoc network system 10

Now each configuration example of the anchor AP 300, the drift AP 400, the terminal 500, and the MME 200 in the ad hoc network system 10 will be described. The configuration example of the anchor AP 300 is described first, then the configuration example of the drift AP 400 and terminal 500 is described, and finally the configuration example of the MME 200 will be described. In the second embodiment, the configuration example of the drift AP 400 and that of the terminal 500 are identical.

3.1 Configuration example of anchor AP 300

FIG. 4 illustrates a configuration example of the anchor AP 300. The anchor AP 300 includes antennas 301 and 302, a radio unit 310, a control unit 320, a power supply unit 340, a memory 341, a synchronization clock generation unit 342, and a transmission line interface unit 350. The radio unit 310 includes a transmission unit 311 and a reception unit 312. The control unit 320 includes a signal generation unit 321, a signal analysis unit 322, a processing unit 323, a data transmission unit 324, and a control information reception unit 325.

For example, the control unit 320 in the second embodiment corresponds to a control unit 370 in the first embodiment.

The antennas 301 and 302 can receive radio signal transmitted from the drift AP 400 or the terminal 500, and outputs the radio signal to the radio unit 310, or transmits radio signal outputted from the radio unit 310 to the drift AP 400 or the terminal 500.

The transmission unit 311 can convert (up-convert) base band signal outputted from the control unit 320 into radio signal in a predetermined frequency band, and output the radio signal to the antennas 301 and 302. For this conversion, the transmission unit 311 may include an A/D convertor, a frequency band pass filter (BPF and a D/A convertor, for example.

The reception unit 312 can convert (down-convert) radio signal outputted from the antenna 301 or 302 into signal in base band, and output the converted signal to the control unit 320 as base band signal. For this conversion, the reception unit 312 may also include an A/D convertor, a frequency band pass filter, and a D/A convertor, for example.

The control unit 320 processes signal transmitted and received by the radio unit 310, and processes data transmitted to and received from the core network 100 via the transmission line interface unit 350.

The signal generation unit 321 can generate base band signal by performing error correction encoding processing and modulation processing, for example, on data outputted from the processing unit 323 and the transmission line interface unit 350. The signal generation unit 321 can output the generated base band signal to the radio unit 310.

The signal analysis unit 322 can perform demodulation processing and error correction decoding processing, for example, on base band signal outputted from the reception unit 312, and extract data and control signal. The signal analysis unit 322 can analyze data and control signal, and output the data and the control signal to the processing unit 323, or output data to the data transmission unit 324.

The processing unit 323 can perform various processing on data and control signal outputted from the signal analysis unit 322, for example, and access the memory 341 to store data when necessary. The processing unit 323 can perform various processing on data and control information via the transmission line interface unit 350, and access the memory 341 to store data when necessary. In the second embodiment, the processing unit 323 can perform an initial set processing, management document additional generation processing, measurement event extraction processing, extraction result evaluation processing and optimum route decision processing, for example. These processing will be described later.

The data transmission unit 324 can transmit data outputted from the processing unit 323 and the signal analysis unit 322, for example, to the MME 200 via the transmission line interface unit 350.

The control information reception unit 325 can receive control information transmitted from the MME 200, for example, via the transmission line interface unit 350, and output the information to the processing unit 323.

The transmission line interface unit 350 can convert data outputted from the data transmission unit 324 into a format which can be transmitted to the core network 100, and transmit the converted data to the MME 200 as a message, for example. The transmission line interface unit 350 can also receive the message transmitted from the MME 200 extract data and control information from the message, and output the data and the control information to the processing unit 323 and the control information reception unit 325.

The power supply unit 340 can supply power to the control unit 320, or stop supplying power to the control unit 320 according to the operation by the operator.

The memory 341 is a storage apparatus, and can store an IP (Internet Protocol) address management table, an adjacent relationship list, a drift AP route management table and the like. The IP address management table, the adjacent relationship list, and the drift AP route management table is described later.

The synchronization clock generation unit 342 can output synchronization clock to the control unit 320, so that the control unit 320 can perform processing synchronizing with the synchronization clock. For example, the signal generation unit 321 can output base band signal to the radio unit 310 synchronizing with the synchronization clock, and the signal analysis unit 322 can input base band signal outputted from the radio unit 310 synchronizing with the synchronization clock.

3.2 Configuration example of drift AP 400

A configuration example of the drift AP 400 will now be described. FIG. 5A illustrates a configuration example of the drift AP 400. The drift AP 400 is not directly connected with the core network 100, as described above, and is a node apparatus to be stationary or moveable as a node apparatus that can perform radio communication with the anchor AP 300 and the terminal 500. The drift AP 400 can relay radio signal transmitted from the anchor AP 300 to another drift AP 400 or terminal 500, or relay radio signal transmitted from another drift AP 400 or terminal 500 to the anchor AP 300.

The drift AP 400 includes antennas 401 and 402, a radio unit 410, a control unit 420, a power supply unit 440, a memory 441, and a synchronization clock generation unit 442. The radio unit 410 includes a transmission unit 411 and a reception unit 412. The control unit 420 includes a signal generation unit 421, a signal analysis unit 422, and a processing unit 423.

The antennas 401 and 402 can transmit radio signal outputted from the transmission unit 411 to the anchor AP 300 and terminal 500, or receive radio signal transmitted from the anchor AP 300 or terminal 500, and output the radio signal to the reception unit.

The transmission unit 411 can convert (up-convert) base band signal outputted from the control unit 420 into radio signal in a predetermined frequency band, and output the radio signal to the antennas 401 and 402. For this conversion, the transmission unit 411 may include an A/D convertor, a frequency band pass filter (BPF), and a D/A convertor, for example.

The reception unit 412 can convert (down-convert) radio signal outputted from the antenna 401 or 402 into signal in base band, and output the converted signal to the control unit 420 as base band signal. For this conversion, the reception unit may also include an A/D convertor, a frequency band pass filter, and a D/A convertor, for example.

The signal generation unit 421 can generate base band signal by performing error correction encoding processing and modulation processing or the like on data outputted from the processing unit 423. The signal generation unit 421 can output the generated base band signal to the radio unit 410.

The signal analysis unit 422 can perform demodulation processing and error correction decoding processing, for example, on base band signal outputted from the reception unit, and extract data and control signal. The signal analysis unit 422 can analyze data and control signal, and output data and control signal to the processing unit 423.

The processing unit 423 can perform various processing on data and control signal outputted from the signal analysis unit 422, for example, and access the memory 441 to store data when necessary. In the second embodiment, the processing unit 423 can perform initial set processing and route quality indicator measurement processing, for example. The initial set processing and the route quality indicator measurement processing is described later.

The power supply unit 440 can supply power to the control unit 420 or can stop supplying power to the control unit 420, according to the operation by the operator.

The memory 441 is a storage apparatus, and can store data according to the processing by the processing unit 423.

The synchronization clock generation unit 442 can output synchronization clock to the control unit 420 so that the control unit 420 can perform processing for the signal generation unit 421 synchronizing with the synchronization clock. For example, the signal generation unit 421 can output base band signal, or input base band signal outputted from the radio unit 410 synchronizing with the synchronization clock.

3.3 Configuration example of MME 200

A configuration example of the MME 200 will now be described. The MME 200 can issue connection permission to connection request transmitted from the drift AP 400 to be newly connected to the ad hoc network, for example, or perform exclusion processing for redundant connection request. FIG. 5B illustrates the configuration example of the MME 200.

The MME 200 includes a control unit 220, a power supply unit 240, a memory 241, and a transmission line interface unit 250.

The control unit 220 can issue the connection permission to the connection request, and perform exclusion processing, for example. On performing such processing, the control unit 220 can access the memory 241 to write data or read data when necessary.

The power supply unit 240 can supply power to the control unit 220, or stop supplying power to the control unit 220, according to the operation by the operator.

The memory 241 is a storage apparatus and can store data or the like.

The transmission line interface unit 250 is connected to the core network 100, and can convert data outputted from the control unit 220 into a format which can be transmitted to the core network 100, and transmit the converted data to the core network 100. The transmission line interface unit 250 can also receive a message transmitted from the anchor AP 300 via the core network 100, extract data by converting the data into a format which can be processed by the control unit 220, for example, and output the data to the control unit 220.

4. Operation example

An operation example will now be described. A whole operation example in the anchor AP 300 will be described first, and a whole operation example in the drift AP 400 will be described next. After describing the generation operation examples, each processing in the anchor AP 300 (e.g. initial setting processing, management document additional generation processing) will be described in detail.

4.1 Whole operation example

4.1.1 Whole operation example in anchor AP 300

FIG. 6 is a flow chart depicting a whole operation example in the anchor AP 300. Each processing in FIG. 6 can be executed by the processing unit 323 of the anchor AP 300.

The anchor AP 300 generates a call and starts processing (S10). For example, the anchor AP 300 can generate the call and start processing when data addressed to the drift AP 400 or the terminal 500 is received for the first time from another apparatus connected to the core network 100. When data addressed to the drift AP 400 or the terminal 500 is received, for example, the transmission line interface unit 350 outputs the receive data to the processing unit 323, and the processing unit 323 can generate the call when data addressed to the drift AP 400 and the terminal 500 is received for the first time from the transmission line interface unit 350. The processing unit 323 can generate the message on the call, such as a call message, and notify the generation of the call to the drift AP 400 or the terminal 500 via the signal generation unit 321 and the radio unit 310.

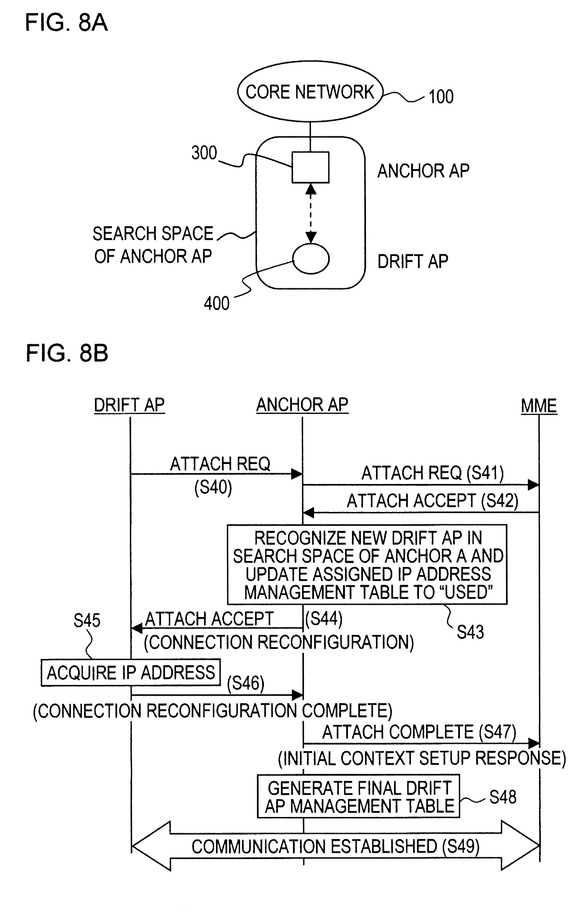

Then the anchor AP 300 performs the initial set (S12). In the initial set, the anchor AP 300 can generate the adjacent relationship list and drift AP route management table, for example, in order to manage and maintain the route quality indicator in each radio block for the drift AP 400 or the terminal 500 involved when the call is generated. The initial set processing will be described later with reference to FIG. 8A to FIG. 30.

The anchor AP 300 performs the route quality indicator measurement processing (S13). For Example, the route quality indicator measurement processing is a processing where the anchor AP 300 requests the drift AP 400 or the terminal 500 to measure the route quality indicator, and when the anchor AP 300 receives the measurement result, the anchor AP 300 stores the received measurement result in a corresponding entry of the drift AP route management table.

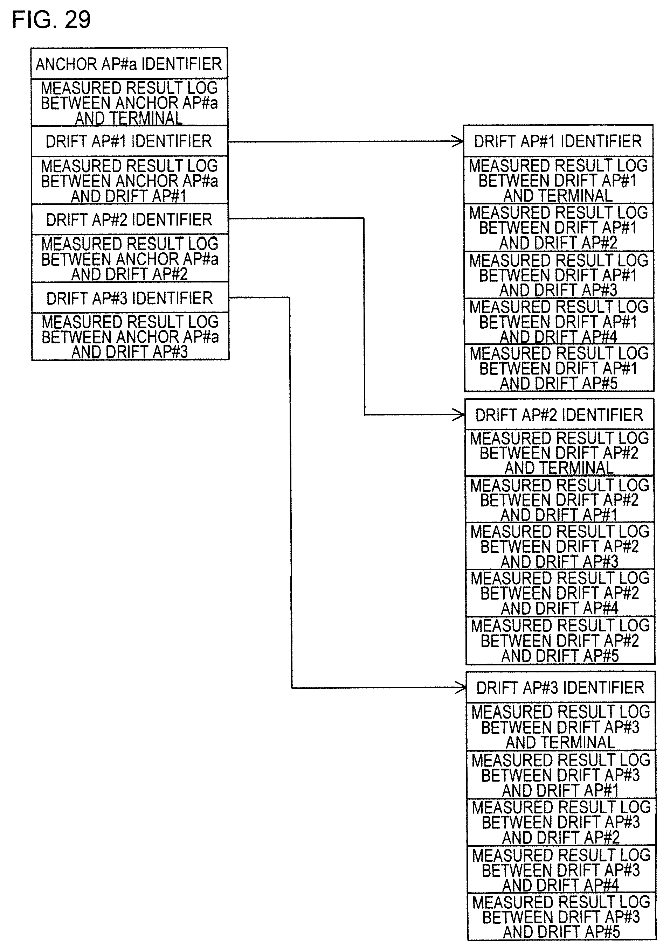

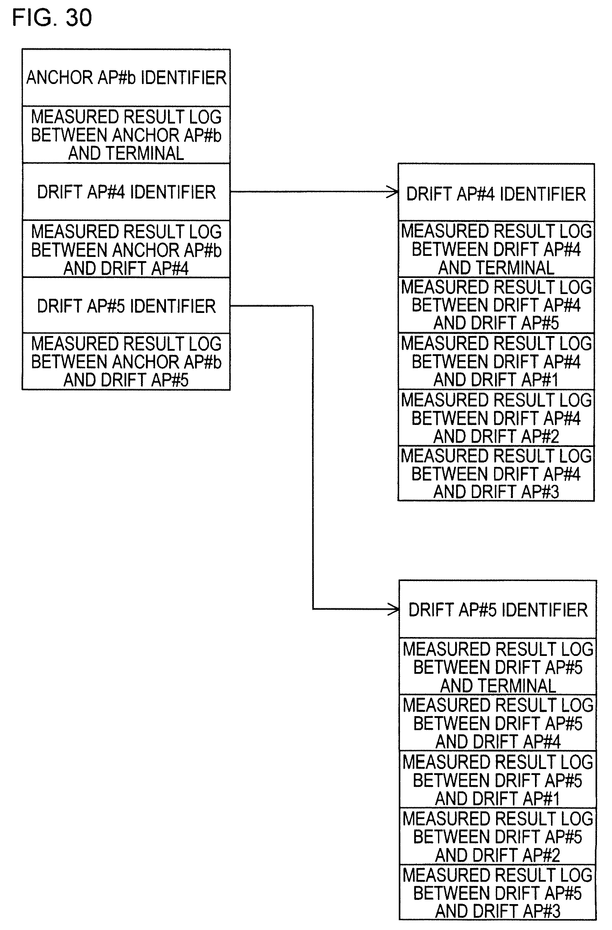

For example, the anchor AP 300 transmits a Measurement Report request or Measurement Report request message (The term "message" may be omitted hereinbelow for a message transmitted or received between node apparatuses, such as between the drift AP 400 and the anchor AP 300.) to the drift AP 400 or the terminal 500 stored in the drift AP route management table. The anchor AP 300 can receive the Measurement Report corresponding to this request, and store the route quality indicator included in this report in the drift AP route management table. For example, the anchor AP 300 can store the route quality indicator in a final drift AP route management table in FIG. 29 or FIG. 30. The final drift AP route management table in FIG. 29 or FIG. 30 will be described later in detail. The route quality indicator includes, for example, a field strength of each radio block, a noise ratio, an error frequency (e.g. SINR (Signal to Interface and Noise Ratio) and CINR (Carrier to Interference and Noise Ratio)), a packet loss ratio, and the number of hops. The route quality indicator may also be a numeric value to indicate the remain of radio resource (or remaining amount of radio resource), or a processing capability of the drift AP 400 or the terminal 500. The route quality indicator is stored in the final drift AP route management table by the route quality indicator measurement processing, for example. The route quality indicator is included in the Measurement Report, for example, and may be used as a same meaning as the route selection indicator.

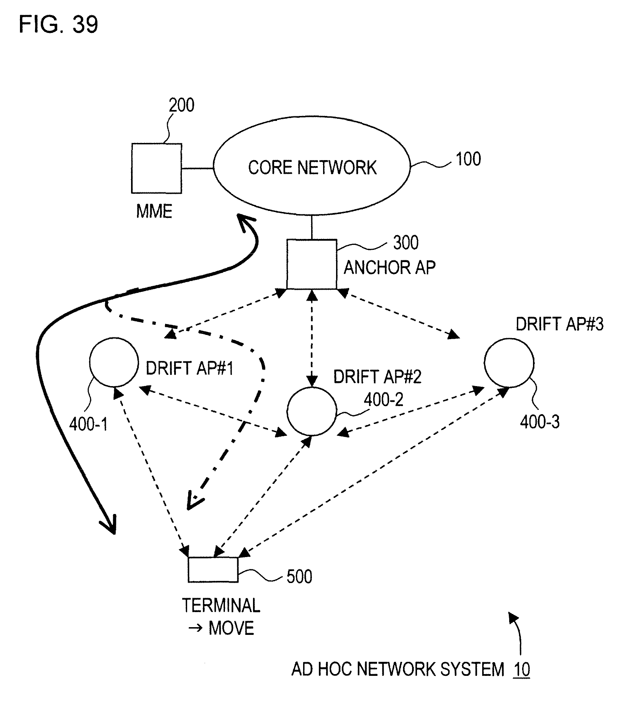

Referring to FIG. 6 again, next, the anchor AP 300 performs a management document additional generation processing (S14). For example, the management document additional generation processing is a processing where a new entry is added to the final drift AP route management table based on the generated Measurement Report. For example, the anchor AP 300 can add the new entry to the final drift AP route management table in FIG. 29 or FIG. 39.

Next, referring to FIG.6 again, the anchor AP 300 performs a measurement event extraction processing (S15). For example, the anchor AP 300 can extract any measurement event from the result in the Measurement Report stored in the final drift AP route management table. For example, in the final drift AP route management table, the field strength in each radio block, noise ratio, error frequency, number of hops, numeric value to indicate the remain of radio resource, or processing capability is stored as the route quality indicator in the final drift AP route management table. Each one of these route quality indicators is a measurement event, and the anchor AP 300 can read the measurement event from the final drift AP route management table.

In the following description, the phrase "route quality indicator" may be used instead of "measurement event" or "measured event" for convenience.

Then the anchor AP 300 determines whether there is a route of which extracted measurement event has a value exceeding the adaptability for route selection (e.g. threshold Q) (S16). For example, if the extracted measurement event has the value of adaptability or more (that is, if the measurement event satisfies the adaptability), the anchor AP 300 performs the following processing. When the extracted measurement event has a value lower than the value of the adaptability (that is, if the measurement event does not satisfy the adaptability), the anchor AP 300 performs the measurement event extraction processing (S15) again.

For example, in the case of the example in FIG. 2, "number of hops" and "remaining ratio of radio resource" are measured as the route quality indicator, and the anchor AP 300 extracts the "remaining ratio of radio resource" (numeric value of each drift AP 400 in FIG. 2) out of the route quality indicators as the measurement event. Then, the anchor AP 300 can determine whether the "remaining ratio of radio resource" is "8" (threshold Q = 8) or more, for example. When the "remaining ratio of radio resources" is "8" (threshold Q = 8) or more, the anchor AP 300 extracts "number of hops" as another measurement event, since there is no such route in the example in FIG.2. Then, the anchor AP 300 determines whether there is a route of which "number of hops" is the threshold Q or more.

Out of the extracted measurement events, the measurement event of which value is the value of the adaptability or more can be regarded as the route selection indicator. The route selection indicator, however, is a collective phrase for indicator that indicates the state of the route, hence all the measurement events can be regarded as the route selection indicator, or the route quality indicator can be regarded as the route selection indicator.

Referring back to FIG. 6, when there is no route of which value of the extracted measurement event is the value of the adaptability or more, (NO in S16), the anchor AP 300 performs the measurement event extraction processing again (S15), and extracts another measurement event.

When there is the route of which value of the extracted measurement event is the value of the adaptability or more (YES in S16), the anchor AP 300 determines whether a handover request is generated (S17). For example, when the field strength for the connected anchor AP 300 and drift AP 400 or the like is a threshold or less in the Measurement Report on the drift AP 400 or the terminal 500, the anchor AP 300 can generate the handover request. The anchor AP 300 makes a decision on this processing depending on whether the handover request is generated. In the ad hoc network system 10, the anchor AP 300 generates the handover request, and instructs the drift AP 400 to perform handover. Details will be described later.

When the handover request is not generated (NO in S17), the anchor AP 300 returns to the route quality indicator measurement processing (S13) and repeats the above mentioned processing. In this case, the terminal 500 does not move by the handover, the current route is maintained, and the route quality indicator is collected again.

When the handover request is generated, on the other hand, (YES in S17), the anchor AP 300 performs an extraction result evaluation processing (S18). For example, the anchor AP 300 performs the extraction result evaluation processing when the route is switched for the drift AP 400 or the terminal 500. For example, the extraction result evaluation processing is a processing to evaluate which route selection indicator is compared with the adaptability, based on the route decision rule that the ad hoc network uses. For example, the extraction result evaluation processing is also a processing to compare and evaluate "route 1" and "route 2" to be selected as a new route, prior to an optimum route decision processing in a subsequent stage. For example, the extraction result evaluation processing may be executed as a part of the optimum route decision processing in a subsequent stage, or the extraction result evaluation processing (S18) and the optimum route decision processing (S19) in FIG. 6 may be integrated as one processing block.

Next, the anchor AP 300 performs the optimum route decision processing (S19). For example, the anchor AP 300 can select an optimum route by selecting the route of which value of the route selection indicator is the value of the adaptability or more. For example, in the case of FIG. 2, the route selection rule is that the route selection indicator is the "remaining ratio of radio resource" and adaptability is "4" or more, hence the route 3 satisfying the rule is selected as the optimum route.

Next, the anchor AP 300 transmits the handover request to the drift AP 400 and another anchor AP 300 and the like on the determined optical route (S20). For example, when the optical route is the route 2 and the handover request is transmitted in the example in FIG. 2, the anchor AP #n (300-n) can transmit the handover request to the drift AP (400-2). When the handover request is transmitted and the route 4 is selected as the optical route in the example in FIG. 2, the anchor AP #n (300-n) can transmit the handover request to the drift AP (400-7).

Next, the anchor AP 300 receives a Context Release as a response to the handover request (S21). For example, the anchor AP 300 can receive the Context Release from the drift AP 400, which is the handover destination.

Next, the processing returns to the route quality indicator measurement processing (S13) again, and the anchor AP 300 repeats the above mentioned processing.

When termination of the call is detected between each processing after the route quality indicator measurement processing (S13), on the other hand, the anchor AP 300 can notify the termination of the call to the connection destination drift AP 400 or terminal 500 (S22). For example, the anchor AP 300 can detect the termination of the call when a message related to the termination of the call, transmitted from the connection destination drift AP 400 or terminal 500, is received, or when the call termination message, transmitted from another apparatus via the core network 100, is received.

Next, the anchor AP 300 can perform release processing (S23). For example, the anchor AP 300 holds data on the drift AP 400 or the terminal 500 which is the call connection destination, and can delete the held data by the release processing.

Next, the anchor AP 300 ends the series of processing (S24).

4.1.2 Whole operation example of drift AP 400

The whole operation example of the drift AP 400 will now be described. FIG. 7 is a flow chart depicting the whole operation example of the drift AP 400.

When a processing is started (S30), the drift AP 400 receives the Measurement Report request transmitted from the anchor AP 300 (S31). For example, the Measurement Report request is for requesting a measurement of the route quality indicator between the anchor AP 300 and the drift AP (400-1). For example, the drift AP (400-1) located on the route 1 in FIG. 2 receives the Measurement Report request for requesting a measurement of the route quality indicator between the anchor AP #n (300-n) and the drift AP (400-1). The reception unit 412, for example, can receive radio signal indicating the Measurement Report request via the antenna 402, extract the Measurement Report request, and output the Measurement Report request to the processing unit 423 via the signal analysis unit 422.

Then the drift AP 400 transmits the Measurement Report request to another drift AP or terminal 500 subordinate to the drift AP 400 (S33). For example, "subordinate to the drift AP 400" is that, in the example in FIG. 2, the terminal 500 is subordinate to the drift AP (400-1) on the route 1, and the drift AP (400-3) and the terminal 500 are subordinate to the drift AP (400-2) on the route 2. For example, the Measurement Report request transmitted from the anchor AP 300 includes information on the transmit destination (or route information) on the drift AP 400 or terminal 500 to which the Measurement Report request is transmitted. The drift AP 400 can generate the Measurement Report request addressed to the transmit destination included in the Measurement Report request received from the anchor AP 300, and transmits the Measurement Report request. Thereby, the drift AP 400 can transmit the Measurement Report request to another drift AP or terminal 500 subordinate to the drift AP 400. For example, the processing unit 323 can extract information on the transmit destination from the Measurement Report, generate the Measurement Report request addressed to this transmit destination, and transmit the Measurement Report request to the subordinate drift AP 400 or terminal 500 via the signal generation unit 321 and the radio unit 310.

Next, referring back to FIG. 7, the drift AP 400 receives a Measurement Report corresponding to the Measurement Report request (S34). When the Measurement Report request is received, another drift AP or terminal 500 subordinates to the drift AP 400 can measure the route quality indicator, and transmit the measurement result by including the measurement result in the Measurement Report. The route quality indicator is the measurement event or a measured value between each radio block, for example.

In the example in FIG. 2, the terminal 500 received the Measurement Report request from the drift AP (400-1) in the route 1, measures the route quality indicator between the terminal 500 and the drift AP (400-1), and transmits the Measurement Report to the drift AP (400-1).

For example, in order to distinguish the locally measured Measurement Report from the Measurement Report measured by another node apparatus, the terminal 500 can transmit the Measurement Report including the IP address of the terminal 500. For example, the processing unit 423 of the terminal 500 can read an IP address stored in the memory 441, and transmit the IP address by including the IP address in the Measurement Report.

In the example in FIG. 2, the drift AP (400-3) can measure the route quality indicator between the drift AP (400-3) and the drift AP (400-2), and the terminal 500 can measure the route quality indicator between the terminal 500 and the drift AP (400-3). The terminal 500 transmits the Measurement Report including the measured route quality indicator to the drift AP (400-3), and the drift AP (400-3) can relay the Measurement Report to the drift AP (400-2). The drift AP (400-3) can transfer the route quality indicator between the drift AP (400-3) and the drift AP (400-2) to the drift AP (400-2) by including the route quality indicator in the Measurement Report. Thereby, the drift AP (400-2) can collect the route quality indicators between the subordinate drifts AP (400-3) and the indicators between the terminal 500 and the drift AP (400-3), for example.

For example, in order to distinguish the locally measured Measurement Report from the Measurement Report measured by another apparatus, the drift AP (400-3) can transmit the Measurement Report including the IP address of the drift AP (400-3). For example, the processing unit 423 of the drift AP (400-3) can read the IP address stored in the memory 441, and transmit the IP address by including the IP address in the Measurement Report.

Next, referring back to FIG. 7, the drift AP 400 determines whether the collected route quality indicator has a predetermined quality or more respectively (S35), and edits the route quality indicator (S36) when it has the predetermined quality or more (YES in S35). Whether the route quality indicator has the predetermined quality or not can be determined by the processing unit 423 comparing a threshold being held in the memory 441 with the route quality indicator, for example. Or, whether the route quality indicator has the predetermined quality or not may also be determined by the processing unit 423 determining whether each value of various route quality indicators (or route selection indicators) measured satisfies a reference value in the Measurement Report, for example. Editing is performed, for example, by the processing unit 423 organizing one or a plurality of the received Measurement Reports. For example, the processing unit 423 of the drift AP 400 can organize the route quality indicators into the sequence of receiving the Measurement Report, so that the route quality indicators are organized into a sequence similar to that of the drift AP 400 and regarded as one of the route information. For example, the term "quality" of "predetermined quality" in this processing (S35) means not only the transmission quality (or radio quality) between the drift AP 400 and the anchor AP 300, or between the anchor AP 300 and the terminal 500, but includes the number of hops and remaining ratio of radio resource.

On the other hand, when the collected route quality indicator does not have a predetermined quality or more (NO in S35), on the other hand, the drift AP 400 transmits the Measurement Report request to another drift AP (S33). For example, when the collected route quality indicator does not have the predetermined quality or more, the processing unit 423 of the drift AP 400 generates the Measurement Report request, and transmits the Measurement Report request to another drift AP or terminal 500 subordinate to the drift AP 400 via the signal generation unit 421 (S33). Hereafter the above mentioned processing (S34 and S35) is repeated.

When the route quality indicator is edited, the drift AP 400 generates the Measurement Report including the edited route quality indicator, and transmits the Measurement Report to the anchor AP 300 (S37). For example, the Measurement Report includes the route quality indicator between the drift AP 400 and the anchor AP 300 as well. For example, when the Measurement Report request is received from the anchor AP 300 (S31), the processing unit 423 measures the field strength of the radio signal from the anchor AP 300 received by the reception unit 412, and measures the packet loss ratio in a predetermined period, in order to measure the route quality indicator. For example, the processing unit 423 may measure the remaining ratio of the radio resource or measure the number of hops based on the transmit destination included in the Measurement Report request as well, in order to measure the route quality indicator.

Then the drift AP 400 ends the series of processing (S38).

4.2 Details on each processing of "initial set", "route quality indicator measurement", and "management document additional generation"

Now details on each processing of "initial set" (S12), "route quality indicator measurement" (S13), and "management document additional generation" (S14) in the whole operation by the anchor AP 300 will be described.

4.2.1 "Initial set"

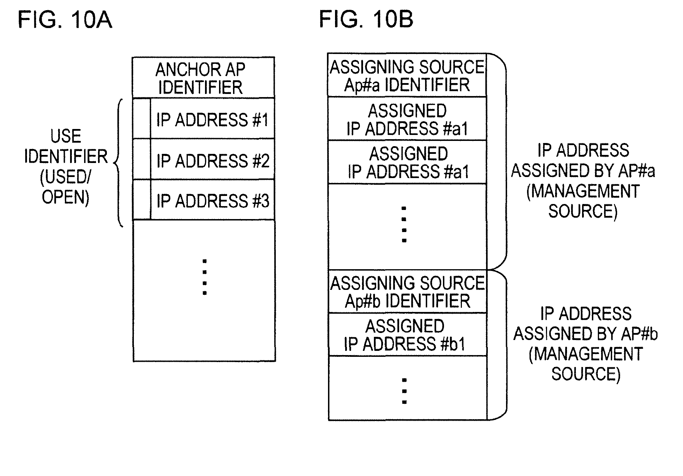

First "initial set" (S12) will be described. The "initial set" is a processing where a final drift AP route management table is generated by the anchor AP 300, for example, and the route quality indicator can be managed and maintained by generating the final drift AP route management table. The "initial set" will be described with reference to FIG. 8A to FIG. 30. The anchor AP 300, for example, generates the final drift AP route management table in FIG. 29 or FIG. 30 in the "initial set", and stores the route quality indicator in a "Measurement Result log" of the generated final drift AP route management table by the "route quality indicator measurement". When an entry is added to the final drift AP route management table by the "management document additional generation", the anchor AP 300 performs the processing to add the entry.
FIG. 8A to FIG. 9 are used for describing an example of registration processing by the drift AP 400 in the "initial set". For example, the drift AP 400 and the terminal 500 can move in the ad hoc network system 10. When the drift AP 400 or the terminal 500 performs registration processing in the anchor AP 300, the anchor AP 300 can transmit data to the drift AP 400 or the terminal 500. The drift AP 400 or the terminal 500 can also transmit data to the network via the anchor AP 300. The registration processing by the drift AP 400 in the anchor AP 300 will now be described. The terminal 500 can also perform the registration processing in the same manner as the registration processing by the drift AP 400.

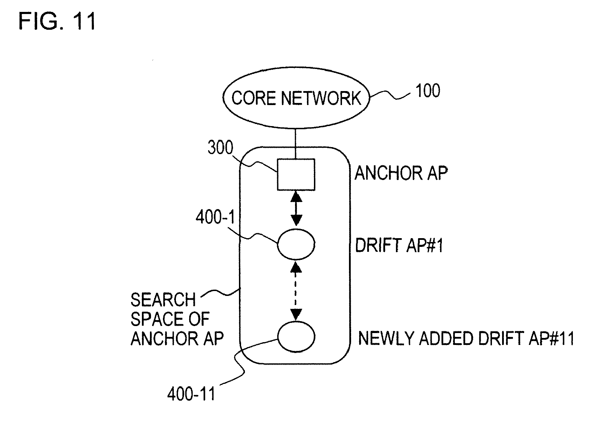

FIG. 8A illustrates a relationship example between the anchor AP 300 and the drift AP 400 when the registration processing is performed. When the anchor AP 300 recognizes the new drift AP 400 in the search space of the anchor AP 300 due to a movement of the drift AP 400, for example, the anchor AP 300 can perform the registration processing for this drift AP 400. For example, the "search space of the anchor AP 300" in this case is a range where the anchor AP 300 can transmit or receive radio signal, and includes not only a communicable range (or cell range) of the anchor AP 300, but also a range where the drift AP 400 can relay. For example, in the case of FIG. 11, the search space of the anchor AP 300 includes not only a local communicable range and a communicable range of the drift AP #1 (400-1), but also a communicable range of the newly added drift AP #11 (400-11).
FIG. 8B illustrates a sequence example of the registration processing in the relationship example in FIG. 8A.
Firstly, when the drift AP 400 enters the search space of the anchor AP 300, the drift AP 400 transmits an Attach request ("Attach REQ" in FIG.8B) to the anchor AP 300 (S40). For example, the Attach request is a message to request the anchor AP 300 to register this drift AP 400. For example, when the processing unit 423 (e.g. FIG. 5A) of the drift AP 400 becomes a state to communicate with the anchor AP 300 by handover, the processing unit 423 can generate an Attach request, and transmit the Attach request to the anchor AP 300 via the signal generation unit 421 and the radio unit 410.
Next, the anchor AP 300 transmits the Attach request transmitted from the drift AP 400 to the MME 200 (S41). In the second embodiment, for example, the registration processing is managed by the MME 200, and the Attach request is also transmitted to the MME 200. For example, when the Attach request is received from the drift AP 400 via the radio unit 310 and the signal analysis unit 322, the processing unit 323 of the anchor AP 300 (e.g. FIG. 4) can instruct the data transmission unit 324 to transmit the received Attach request to the MME 200. Based on this instruction, the data transmission unit 324 can transmit the Attach request outputted from the processing unit 323 to the MME 200 via the transmission line interface unit 350.
When the MME 200 receives the Attach request from the anchor AP 300, the MME 200 generates an Attach Accept, and transmits this message to the anchor AP 300 (S42). For example, the Attach Accept is a message to permit registration of the drift AP 400 to the anchor AP 300. For example, the control unit 220 of the MME 200 (e.g. FIG. 5B) performs processing to generate the Attach Accept.
When the anchor AP 300 receives the Attach Accept, the anchor AP 300 recognizes the new drift AP 400 in the search space of the anchor AP 300 it's self, assigns the IP address to the new drift AP 400, and updates this IP address in the IP address management table to "used" (S43). FIG. 10A is an example of the IP address management table. The IP address management table stores an identifier of the anchor AP 300 it's self and the IP address which can be assigned. The anchor AP 300 can search for the IP address of which state is "open" in the IP address management table, and assign one of the IP addresses to the new drift AP 400. When the IP address is assigned, the anchor AP 300 updates the use identifier in the IP address management table to "used". The anchor AP 300 can prevent assigning a redundant IP address since the use of the IP address is managed by the IP address management table. When the IP address is not assigned to the drift AP 400 or the terminal 500, the use identifier is "open". For example, the IP address management table is stored in the memory 341, and the processing unit 323 performs such processing as assigning an IP address and updating the use identifier.

FIG. 10B is also an example of the IP address management table. For example, the anchor AP 300 can assign the IP address to the drift AP 400 or the terminal 500 which is newly added to this anchor AP 300 directly, using the IP address management table in FIG. 10A. The anchor AP 300 can also assign the IP address to the drift AP or the terminal 500 which is newly added to the drift AP 400 subordinate to the anchor AP 300 using the IP address management table in FIG. 10B. For example, FIG. 10A illustrates the IP address management table for home use, and FIG. 10B illustrates the IP address management table for visitor use, and the anchor AP 300 can choose one depending on the situation. The IP address management table in FIG. 10B is also stored in the memory 341.

When the IP address is assigned to the drift AP 400 like this, the anchor AP 300 can generate a drift AP route management table, for example.

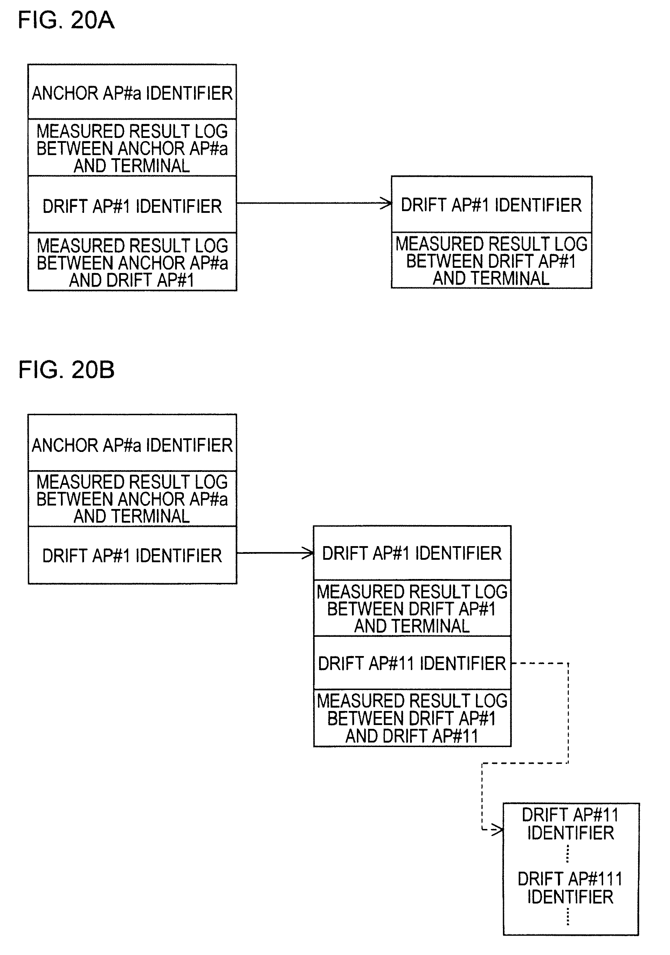

FIG. 20A and FIG. 20B are examples of the drift AP route management table. For example, the drift AP route management table indicates how the anchor AP 300, the drift AP 400 and the terminal 500 are connected in the search space of the anchor AP 300, and can store the route quality indicator in each block. The drift AP route management table includes, for example, an identifier of the anchor AP 300, the route quality indicator between the anchor AP 300 and the terminal 500, an identifier of the drift AP 400 which is directly connected with the anchor AP 300, and the route quality indicator between the anchor AP 300 and each drift AP 400.

The drift AP route management table in FIG. 20A stores the identifier of the anchor AP #a and the identifier of the drift AP #1 (400-1) which is directly connected (or which directly performs radio communication) with the anchor AP #a, for example. The drift AP route management table in FIG. 20A also stores the route quality indicator between the anchor AP #a and the terminal 500 and the route quality indicator between the anchor AP #a and the drift AP #1 (400-1). In the drift AP route management table in FIG. 20A, A pointer information to an address, where an entry on the drift AP #1 (400-1) is stored, is also stored in an entry for storing the identifier of the drift AP #1 (400-1). For the pointer destination, the identifier of the drift AP #1 (400-1) and the route quality indicator between the drift AP 400 and the terminal 500 is stored. The drift AP route management table in FIG. 20A corresponds to the relationship between the anchor AP 300 and the drift AP 400 illustrated in FIG. 8A, for example.

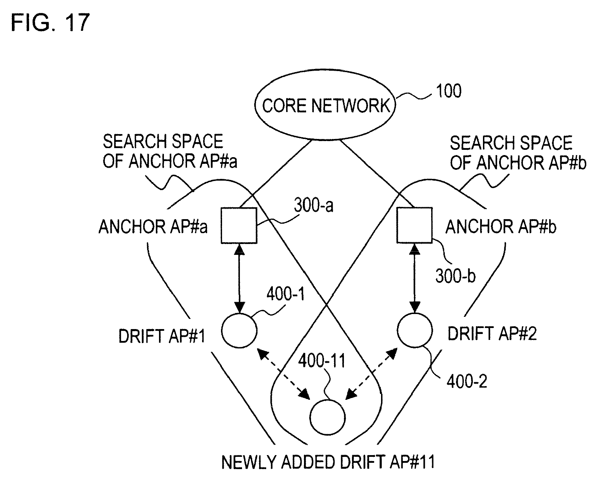

In the case of the configuration where the drift AP 400 is located in subordinate to the drift AP #1 (400-1) (e.g. FIG. 17), the drift AP route management table in FIG. 20B, for example, is generated. In this drift AP route management table, the item on the drift AP #11 (400-11) is hierarchically linked subordinate to the drift AP #1 (400-1).

The drift AP route management table is stored in the memory 341 of the anchor AP 300, for example. The drift AP route management table can be generated by the processing unit 323, for example. The timing of generating the drift AP route management table can be after the IP address is assigned, such as a time when a later mentioned Attach Accept is transmitted to the drift AP 400 or when a Connection Reconfiguration Complete is received from the drift AP 400. The timing of generating the drift AP route management table may also be when the Measurement Report is received (S13 in FIG. 6).

The processing in S43 in FIG. 8B is as follows. When the Attach Accept is received from the MME 200 via the transmission line interface unit 350, the processing unit 323 of the anchor AP 300 (e.g. FIG. 4) reads the IP address of which state is "open" from the IP address management table (e.g. FIG. 10A) stored in the memory 341. The processing unit 323 updates the state of the read IP address to "used" in the IP address management table. In the drift AP route management table in FIG. 20A, the processing unit 323 writes the pointer information in the entry of the "drift AP #1 identifier" of the "anchor AP #a identifier", and writes the read IP address in the entry of the "drift AP #1 identifier" at the pointer destination.

Next, referring back to FIG. 8B, the anchor AP 300 transmits the Attach Accept to the drift AP 400 (S44). For example, the Attach Accept includes the IP address assigned by the anchor AP 300. For example, the processing unit 323 can generate the Attach Accept that includes the IP address read from the IP address management table, and transmit the Attach Accept to the drift AP 400 via the signal generation unit 321 and the radio unit 310. The anchor AP 300 may transmit the Attach Accept as a Connection Reconfiguration.

When the drift AP 400 receives the Attach Accept, the drift AP 400 extracts the IP address from the Attach Accept, and registers this IP address as the IP address of the drift AP 400 (S45). For example, the processing unit 423 of the drift AP 400 can extract the IP address and store it in the memory 441, whereby this IP address is registered as the IP address of the drift AP 400.

Next, the drift AP 400 transmits a Connection Reconfiguration Complete to the anchor AP 300 (S46). For example, the Connection Reconfiguration Complete is a response message to notify that the drift AP 400 normally received the Attach Accept and acquired the IP address. For example, when the IP address is registered in the memory 441, the processing unit 423 of the drift AP 400 can generate the Connection Reconfiguration Complete, and transmits this message to the anchor AP 300 via the radio unit 410.

When the Connection Reconfiguration Complete is received, the anchor AP 300 transmits an Attach Complete to the MME 200 (S47). For example, when the Connection Reconfiguration Complete is received via the radio unit 310, the processing unit 323 can generate the Attach Complete message and transmit this message to the MME 200 via the transmission line interface unit 350.

Next, the anchor AP 300 generates a final drift AP route management table (S48). The final drift AP route management table generation processing will be described later. In the case of the example in FIG. 8A, the final drift AP route management table in FIG. 20A is generated.

Next, the communication is established among the anchor AP 300, the drift AP 400 and the MME 200 (S49).

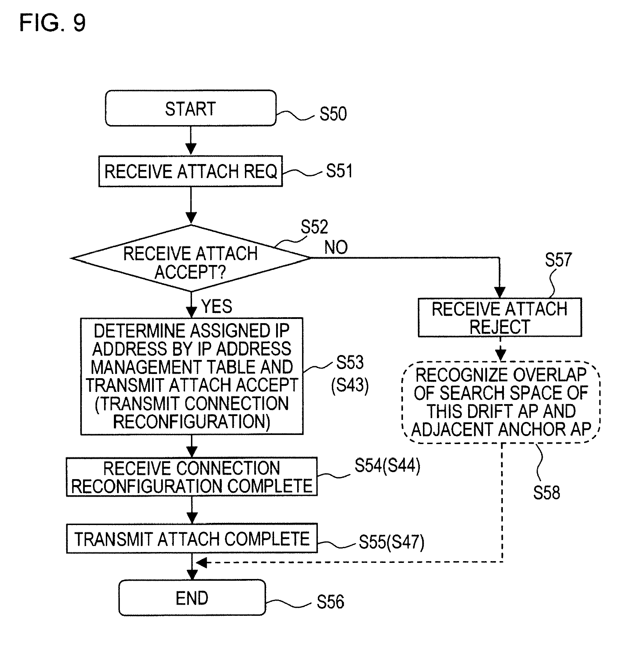

FIG. 9 is a flow chart depicting an operation example of the anchor AP 300 according to the sequence diagram in FIG. 8B. This flow chart will be described in brief minimizing redundant description.

When the anchor AP 300 starts a processing (S50), the anchor AP 300 receives an Attach request from the drift AP 400 (S51). The drift AP 400 transmits the received Attach request to the MME 200.

Next, the anchor AP 300 determines whether the Attach Accept is received from the MME 200 in response to the Attach request (S52). For example, the processing unit 323 of the anchor AP 300 can determine whether the Attach Accept is received within a predetermined period after transmitting the Attach request.

When the anchor AP 300 receives the Attach Accept from the MME 200 (YES in S52), the anchor AP 300 determines an address to be assigned referring to the IP address management table, generates the Attach Accept including the IP address to be assigned, and transmits the Attach Accept to the drift IP 400 (S53 (or S43)). For example, the Attach Accept transmitted from the anchor AP 300 to the drift AP 400 may be transmitted as a Connection Reconfiguration.

Next, the anchor AP 300 receives the Connection Reconfiguration Complete from the drift AP 400 (S54 (corresponds to S44 in FIG. 6)).

Next, the anchor AP 300 generates an Attach Complete, and transmits the Attach Complete to the MME 200 (S55 (corresponds to S47 in FIG. 6)).

Then, the anchor AP 300 ends the registration processing for the drift AP 400 (S56).

On the other hand, when the anchor AP 300 receives the Attach Accept from the MME 200 (NO in S52), the anchor AP 300 receives an Attach Reject from the MME 200 (S57). For example, the Attach Reject is a message to reject registration of the drift AP 400 to the anchor AP 300. For example, the MME 200 may transmit the Attach Reject when another drift AP 400 attempts to be registered to the anchor AP 300 at the same time, and registration is rejected due to exclusion processing.

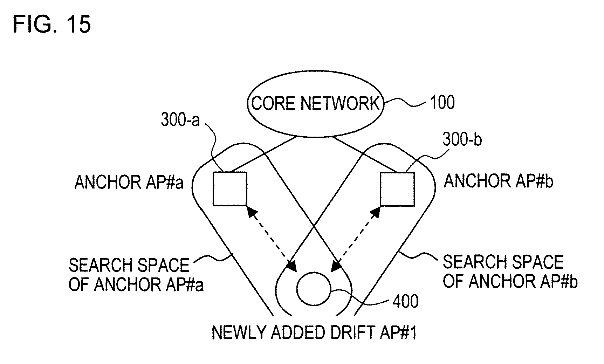

When the anchor AP 300 receives the Attach Reject, the anchor AP 300 recognizes that the search space of the drift AP 400, of which registration is rejected, overlaps with that of the adjacent anchor AP (S58). Although details will be described later, as illustrated, for example, in FIG. 15 when the drift AP 400 is located in the search space of the anchor AP #a (300-a) and that of the anchor AP #b (300-b), the two anchor APs #a (300-1) and #b (300-b) can receive the Attach request transmitted from the drift AP 400 at the same time. In such a case, both of the anchor APs #a (300-a) and #b (300-b) transmit the Attach request to the MME 200, but the MME 200 can transmit Attach Reject to the anchor AP #a (300-a) and transmit the Attach Accept to the anchor AP #b (300-b), for example, using the exclusion processing. The anchor AP #a (300-a) received the Attach Reject, can recognize that the search space of the drift AP 400 overlaps with the search space of the adjacent anchor AP #b (300-b).

Referring back to FIG. 9, if the anchor AP 300 recognizes that the search space of the drift AP 400 overlaps with the search space of the adjacent anchor AP (S58), the anchor AP 300 ends the registration processing for the drift AP 400 (S56).

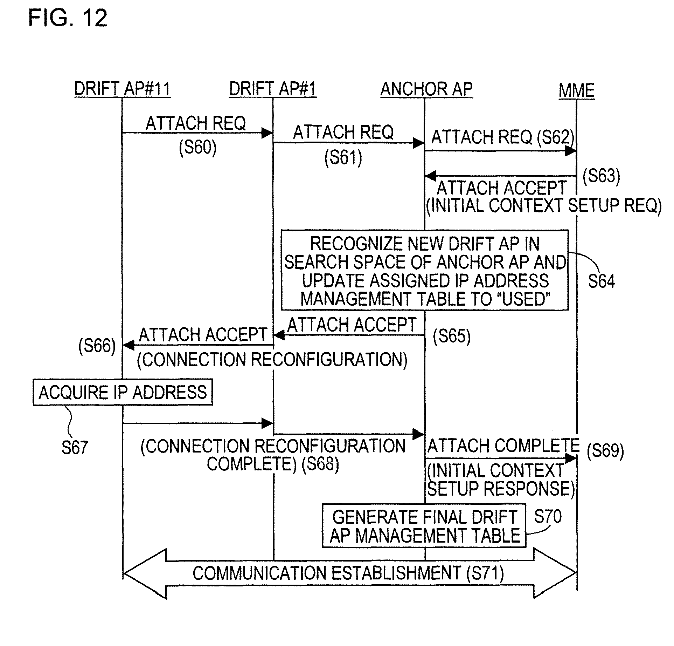

Now another example of the registration processing for the drift AP 400 will be described. FIG. 11 and FIG. 12 illustrate another example of the registration processing for the drift AP 400.

This example is an example when the drift AP #1 (400-1) is registered to the anchor AP 300, and in this state a drift AP #11 (400-11) is newly registered subordinate to the drift AP #1 (400-1). FIG. 11 illustrates a relationship example between the drift AP #1 (400-1), the drift AP #11 (400-11), and the anchor AP 300 when the registration processing is performed. When the anchor AP 300 recognizes the new drift AP #11 (400-11) in the search space of the anchor AP 300 due to a movement of the drift AP #11 (400-11), for example, the anchor AP 300 can perform the registration processing for the drift AP #11 (400-11). In this case, it is assumed that the drift AP #11 (400-11) moves to a range where the drift AP #1 (400-1) can perform radio communication, and the drift AP #1 (400-1) is located in a range where the anchor AP 300 can perform radio communication.

FIG. 12 is a sequence diagram depicting an example of the registration processing for the drift AP #11 (400-11) in the relationship example between the anchor AP 300 and the drift AP 400 in FIG. 11.

Firstly, the drift AP #11 (400-11) transmits the Attach request, for requesting registration to the anchor AP 300, to the drift AP #1 (400-1) (S60). For example, the processing unit 423 of the drift AP #11 (400-11) (e.g. FIG. 5A) can generate the Attach request when radio communication with the drift AP #1 (400-1) becomes possible by handover, and transmit the Attach request to the drift AP #1 (400-1) via the signal generation unit 421 and the radio unit 410.

Next, the drift AP #1 (400-1) receives the Attach request transmitted from the drift AP #11 (400-11), and transmits the Attach request to the anchor AP 300 (S61). For example, when the Attach request is received via the radio unit 410 or the signal analysis unit 422, the processing unit 423 of the drift AP #1 (400-1) can relay the Attach request to the anchor AP 300 with which this drift AP #1 (400-1) is connected. Therefore, the processing unit 423 can transmit the Attach request received from the drift AP #11 (400-11) to the anchor AP 300 via the signal generation unit 421 and the radio unit 410.

Next, the anchor AP 300 transmits the Attach request transmitted from the drift AP #1 (400-1) to the MME 200 (S62). For example, the processing unit 323 (e.g. FIG. 4) of the anchor AP 300 can instruct the data transmission unit 324 to transmit the Attach request, received via the radio unit 310 and the signal analysis unit 322, to the MME 200. The data transmission unit 324 received this instruction can transmit the Attach request outputted from the processing unit 323 to the MME 200 via the transmission line interface unit 350.

When the MME 200 receives the Attach request from the anchor AP 300, the MME 200 generates the Attach Accept, and transmits the Attach Accept to the anchor AP 300 (S63). The Attach Accept may be transmitted as an Initial Context Setup Request, for example.

Next, when the anchor AP 300 receives the Attach Accept, the anchor AP 300 recognizes the new drift AP #11 (400-11) in the search space of the anchor AP 300. And, the anchor AP 300 assigns the IP address to the drift AP #11 (400-11), and updates the state of the assigned IP address in the IP address management table to "used" (S64). For example, when the Attach Accept is received from the MME 200 via the transmission line interface unit 350, the processing unit 323 of the anchor AP 300 reads the IP address of which use state is "open" from the IP address management table stored in the memory 341. And, the processing unit 323 updates the use state of the read IP address in the IP address management table to "used". The processing unit 323 can update the drift AP route management table as well. For example, in the case of one hop hierarchical structure, as in the case of FIG. 11, the processing unit 323 can write pointer information and the assigned IP address or the like in each entry of the "drift AP #1 identifier" and the "drift AP #11 identifier", as depicted in FIG. 20B.

Next, the anchor AP 300 transmits the Attach Accept to the drift AP #1 (400-1) (S65). For example, when the state of the IP address management table is updated to "used", the processing unit 323 of the anchor AP 300 can generate the Attach Accept including the IP address read from the IP address management table. The processing unit 323 can transmit the generated Attach Accept to the drift AP #1 (400-1) via the signal generation unit 321 and the radio unit 310. The anchor AP 300 may transmit the Attach Accept as the Connection Reconfiguration.

Receiving the Attach Accept from the anchor AP 300, the drift AP #1 (400-1) transmits the Attach Accept to the drift AP #11 (400-11) (S66). For example, the processing unit 423 of the drift AP #1 (400-1) (e.g. FIG. 5A) can wait for the Attach Accept to be transmitted from the anchor AP 300 when the Attach request is received (S60). When the processing unit 423 receives the Attach Accept, the processing unit 423 can transmit the Attach Accept to the transmit destination of the Attach request (e.g. drift AP #11 (400-11)). For example, the processing unit 323 of the anchor AP 300 attaches information on the transmit destination (drift AP #1 (400-1) and drift AP #11 (400-11)) of the Attach Accept, whereby the drift AP #1 (400-1) can transmit the Attach Accept.

When the drift AP #11 (400-11) receives the Attach Accept from the drift AP #1 (400-1), the drift AP #11 (400-11) extracts the IP address from the Attach Accept, and registers the IP address as the IP address of this drift AP #11 (400-11) (S67). For example, the processing unit 423 of the drift AP #11 (400-11) can extract the IP address from the received Attach Accept, and store this IP address in the memory 441 so as to register this IP address as the IP address of the drift AP #11 (400-11).

Next, the drift AP #11 (400-11) transmits the Connection Reconfiguration Complete (S68). For example, this message is a response message to notify that the drift AP #11 (400-11) received the Attach Accept normally, and acquired the IP address. For example, when the processing unit 423 of the drift AP #11 (400-11) stores the IP address in the memory 441, the processing unit 423 can generate the Connection Reconfiguration Complete, and transmit this message via the signal generation unit 421 and the radio unit 410.

When the drift AP #1 (400-1) receives the Connection Reconfiguration Complete, the drift AP #1 (400-1) transmits this message to the anchor AP 300 (S68). For example, when the processing unit 423 of the drift AP #1 (400-1) receives the Connection Reconfiguration Complete in response to the Attach Accept (S66), the processing unit 423 of the drift AP #1 (400-1) can transfer this message to the anchor AP 300. Therefore, when the processing unit 423 receives the Connection Reconfiguration Complete, the processing unit 423 can transmit this message to the anchor AP 300 via the signal generation unit 421 and the radio unit 410.

When the anchor AP 300 receives the Connection Reconfiguration Complete from the drift AP #1 (400-1), the anchor AP 300 generates the Attach Complete and transmits this message to the MME 200 (S69).

Next, the anchor AP 300 generates the final drift AP route management table (S70). The final drift AP route management table generation processing will be described later. In the case of the example in FIG. 11, the final drift AP route management table in FIG. 20B is generated.

Next, referring back to FIG. 12, the communication is established among the drift AP #1 (400-1), the drift AP #11 (400-11), the anchor AP 300 and the MME 200 (S71).

The above is an example of the registration processing depicted in FIG. 12.

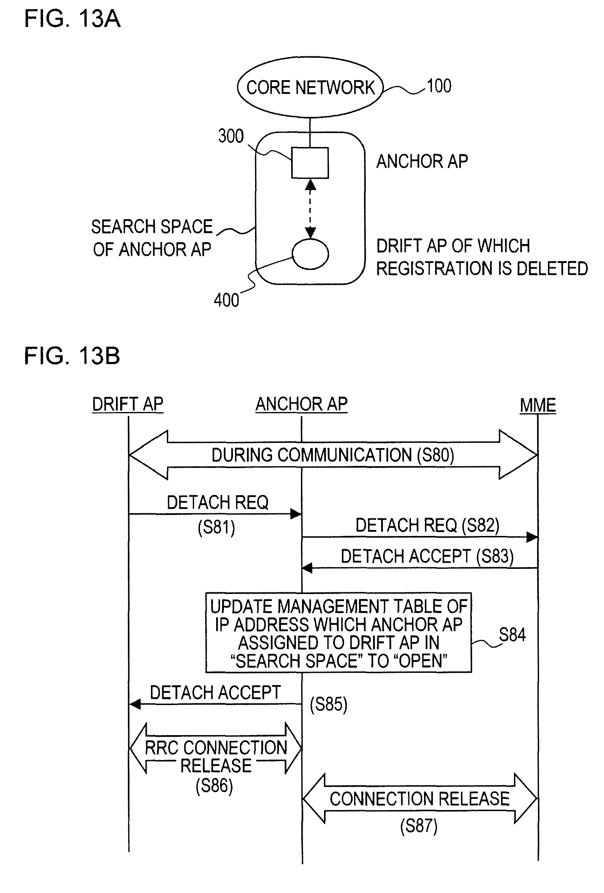

Now, an example of registration delete processing will be described. FIG. 13A to FIG. 14 illustrate the registration delete processing.

FIG. 13A illustrates a relationship example between the anchor AP 300 and the drift AP 400 when the drift AP 400 deletes registration from the anchor AP 300. For example, the registration delete processing is performed when the drift AP 400 moves from the search space of the anchor AP 300 to the search space of another anchor AP by handover. FIG. 13B illustrates a sequence example of the registration delete processing.

When the drift AP 400 deletes registration when the drift AP 400 is communicating with the anchor AP 300 and the MME 200 (S80), the drift AP 400 transmits the Detach request to the anchor AP 300 (S81). For example, the processing unit 423 of the drift AP 400 (e.g. FIG. 5A) can generate the Detach request when the receive power of radio signal from the anchor AP 300 becomes a threshold or less, and transmit the Detach request to the anchor AP 300 via the signal generation unit 421 and the radio unit 410. The processing unit 423 can include the IP address of this drift AP 400 in the Detach request.

When the anchor AP 300 receives the Detach request, the anchor AP 300 transmits the received Detach request to the MME 200 (S82). For example, the processing unit 323 of the anchor AP 300 can transfer the Detach request, received via the radio unit 310, to the MME 200, whereby the Detach request can be transmitted to the MME 200 via the data transmission unit 324 and the transmission line interface unit 350.

When the MME 200 receives the Detach request, the MME 200 generates Detach Accept, and transmits the generated Detach Accept to the anchor AP 300 (S83). For example, when the control unit 220 of the MME 200 (e.g. FIG. 5B) receives the Detach request, the control unit 220 of the MME 200 generates the Detach Accept, and transmits this message to the anchor AP 300. For example, the Detach Accept is a message to notify that the registration delete is permitted in response to the Detach request.

When the anchor AP 300 receives the Detach Accept, the anchor AP 300 updates the state of the IP address assigned to the drift AP 400 to "open" in the IP address management table (S84). For example, the processing unit 323 of the anchor AP 300 holds the IP address of the drift AP 400, included in the Detach request received from the drift AP 400, in the memory 341, and transmits the Detach request (S82) along with the identification code to the MME 200. When the identification code is included in the Detach Accept received from the MME 200, the processing unit 323 recognizes that this Detach Accept is a response to the Detach request, and deletes the IP address held in the memory 341. Then the processing unit 323 updates the state of the IP address, the same as the deleted IP address, to "open" in the IP address management table.

Next, the anchor AP 300 transmits the Detach Accept to the drift AP 400 (S85). For example, when the processing unit 323 of the anchor AP 300 updates the state of the corresponding IP address to "open" in the IP address management table, the processing unit 323 of the anchor AP 300 can generate the Detach Accept addressed to the drift AP 400, and transmit the Attach Accept to the drift AP 400 via the signal generation unit 321 and the radio unit 310.

For example, the drift AP 400 received the Detach Accept deletes the IP address stored in the memory 441. Then the RRC Connection release processing is performed between the anchor AP 300 and the drift AP 400 (S86), and the connection release processing is performed between the anchor AP 300 and the MME 200 (S87).

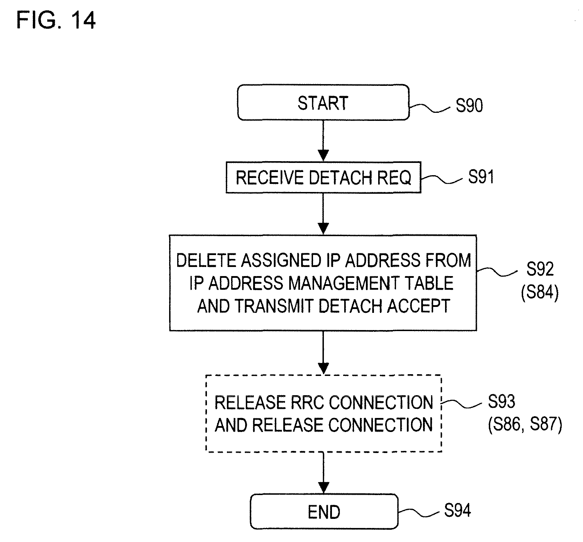

FIG. 14 is a flow chart depicting a registration delete operation example in the anchor AP 300. This flow chart will be described in brief minimizing redundant description as the sequence diagram in FIG. 13B.

When the anchor AP 300 starts the registration delete processing (S90), the anchor AP 300 receives the Detach request from the drift AP #11 (400-11) (S91). The anchor AP 300 transmits the received Detach request to the MME 200.

Next, the anchor AP 300 deletes the assigned IP address from the IP address management table, and transmits the Detach Accept to the drift AP 400 (S92 (or S84 in FIG. 13B)). For example, the processing unit 323 of the anchor AP 300 can delete the IP address included in the Detach request (S91) from the IP address management table when the Detach Accept is received in response to the Detach Request (S83 in FIG. 13B). For example, the processing unit 323 can delete the IP address by updating the use state of this IP address to "open" in the IP address management table. Then the processing unit 323 generates the Detach Accept, and transmits this message to the drift AP #11 (400-11) via the signal generation unit 321.

Next, the anchor AP 300 releases the connection with the drift AP #11 (400-11), and ends the registration delete processing (S93, S94).

Thereby, the anchor AP 300 can perform registration delete processing for the drift AP #11 (400-11).

Now, processing when redundant Attach requests for the registration processing are transmitted will be described. FIG. 15 to FIG. 19 illustrate an example of such processing. FIG. 15 illustrates a relationship example among the anchor AP #a (300-a), the anchor AP #b (300-b) and the drift AP 400. FIG. 15 is an example when the drift AP 400 to be newly added exists in an overlapping search space of the anchor AP #a (300-a) and the anchor AP #b (300-B), and the drift AP 400 transmits the Attach request to the anchor AP #a (300-a) and the anchor AP #b (400-b).

Depending on the way of moving, the drift AP 400 may move in an overlapping communicable range of the anchor AP #a (300-a) and the anchor AP #b (400-b). In some cases, both the anchor AP #a (300-a) and the anchor AP #b (300-b) may receive the Attach request transmitted by the drift AP 400. In such a case, the anchor AP #a (300-a) and the anchor AP #b (300-b) transmit the received Attach request to the MME 200 respectively. The MME 200 performs the exclusion processing and transmits an Attach Accept to one of the anchor APs (e.g. anchor AP #a (300-a)), and transmits the Attach Reject to the other anchor AP (e.g. anchor AP #b (300-b)). In the case of receiving the Attach request from three or more anchor APs 300 as well, the MME 200 can permit registration of one of the anchor APs 300, and reject registration of the other anchor APs 300.

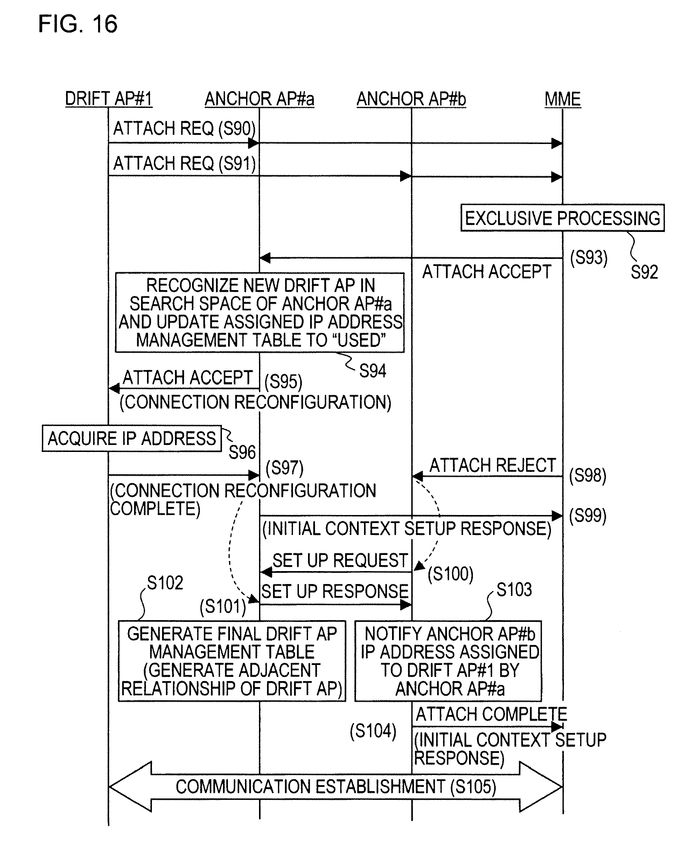

FIG. 16 is a sequence diagram depicting an operation example in the case of the example in FIG. 15.

When the drift AP #1 (400-1) moves into an overlapping search space (radio wave reachable range in the case of the example in FIG. 16) of the anchor AP #a (300-a) and the anchor AP #b (300-b), the drift AP #1 (400-1) transmits the Attach request as a registration request to the anchor AP #a (300-a) and the anchor AP #b (300-b) (S90, S91).

Next, both the anchor AP #a (300-a) and the anchor AP #b (300-b) receive the Attach request and transmit the Attach request to the MME 200 respectively (S90, S91).

Next, the MME 200 received the two Attach requests, performs the exclusion processing (S92). A timing of performing the exclusion processing is when two or more Attach requests are received simultaneously, or when one or more Attach requests are received within a predetermined period after receiving an Attach request. Examples of the exclusion processing are transmitting the Attach Accept to the Attach request received first, and transmitting the Attach Accept to one Attach request randomly selected from two or more Attach requests received simultaneously. This exclusion processing is performed by the control unit 220 of the MME 200 (e.g. FIG. 5B), for example. In the case of the example of FIG. 16, the MME 200 transmits the Attach Accept to the anchor AP #a (300-a) by the exclusion processing (S93).

The anchor AP #a (300-a) received the Attach Accept assigns an IP address, of which state is "open", in the IP address management table (e.g. FIG. 10A) to the drift AP #1 (400-1), and updates the state of this IP address to "used" in the IP address management table (S94).

Next, the anchor AP #a (300-a) transmits the Attach Accept that includes the assigned IP address to the drift AP #1 (400-1) (S95). The anchor AP #a (300-a) may transmit the Attach Accept as a Connection Reconfiguration.

Next, the drift AP #1 (400-1) extracts the IP address from the received Attach Accept, and registers this IP address as the IP address of the drift AP #1 (400-1) (S96).

Next, the drift AP #1 (400-1) transmits the Connection Reconfiguration Complete to the anchor AP #a (300-a) (S97). For example, when the processing unit 423 of the drift AP #1 (400-1) stores the IP address in the memory 441, the processing unit 423 of the drift AP #1 (400-1) can generate the Connection Reconfiguration Complete addressed to the anchor AP #a (300-a). The processing unit 423 can transmit the generated Connection Reconfiguration Complete to the anchor AP #a (300-a) via the signal generation unit 421 and the radio unit 410.

When the anchor AP #a (300-a) receives the Connection Reconfiguration Complete from the drift AP #1 (400-1), the anchor AP #a (300-a) can recognize that the drift AP #1 (400-1) receives the Attach Accept normally. Then the anchor AP #a (300-a) transmits an Initial Context Setup Response to the MME 200 (S99). The MME 200 received this message can recognize that processing for the anchor AP #a (300-a) ended normally.

On the other hand, the MME 200 transmits the Attach Reject to the anchor AP #b (300-b) to which registration is not permitted as a result of the exclusion processing (S98). For example, the control unit 220 of the MME 200 (e.g. FIG. 5B) performs the exclusion processing, and generates the Attach Reject addressed to the transmission source of the Attach request (e.g. Anchor AP #b (300-b)) in response to the Attach request by the anchor AP #b (300-b) to which registration is not permitted. Then the control unit 220 transmits the generated Attach Reject to the anchor AP #b (300-b) via the transmission line interface unit 250.

When the anchor AP #b (300-b) receives the Attach Reject from the MME 200, the anchor AP #b (300-b) transmits Set Up Request to the anchor AP #a (300-a) (S100).

For example, by transmitting the Set Up Request, the anchor AP #b (300-b) can request the anchor AP #a (300-b) to notify the drift AP #1 (400-1) the assigned IP address (S94). For example, if the processing unit 323 of the anchor AP #b (300-b) (e.g. FIG. 4) receives the Attach Reject transmitted from the MME 200 via the transmission line interface unit 350, the processing unit 323 of the anchor AP #b (300-b) generates Set Up Request addressed to the anchor AP #a (300-a), and transmits this message to the anchor AP #a (300-a) via the radio unit 310. The processing unit 323 of the anchor AP #b (300-b) knows other anchor APs 300 adjacent to the anchor AP #a (300-a), and can send the Set Up Request to all the adjacent anchor APs 300 if the anchor AP #b (300-b) receives the Attach Reject. In the case of FIG. 16, the anchor AP #a (300-a) is adjacent to the anchor AP #b (300-b), therefore the processing unit 323 transmits the Set Up Request to the anchor AP #a (300-a).

The anchor AP #a (300-a) received the Set Up Request generates a Set Up Response that includes the IP address assigned to the drift AP #1 (400-1), and transmits this message to the anchor AP #b (300-b) (S101). For example, when the processing unit 323 of the anchor AP #a (300-a) receives the Set Up Request via the radio unit 310, the processing unit 323 of the anchor AP #a (300-a) reads the IP address assigned to the drift AP #1 (400-1) from the IP address management table, and generates Set Up Response including this IP address. Then the processing unit 323 can transmit the generated Set Up Response to the anchor AP #b (300-b) via the radio unit 310.

For example, the anchor AP #b (300-b) can detect the IP address assigned by the adjacent anchor AP #a (300-a) assigned by exchanging the Set Up Request and Set Up Response between the anchor AP #a (300-a) and the anchor AP #b (300-b). Thereby the anchor AP #a (300-a) and the anchor AP #b (300-b) can update the adjacent relationship list to the latest content.

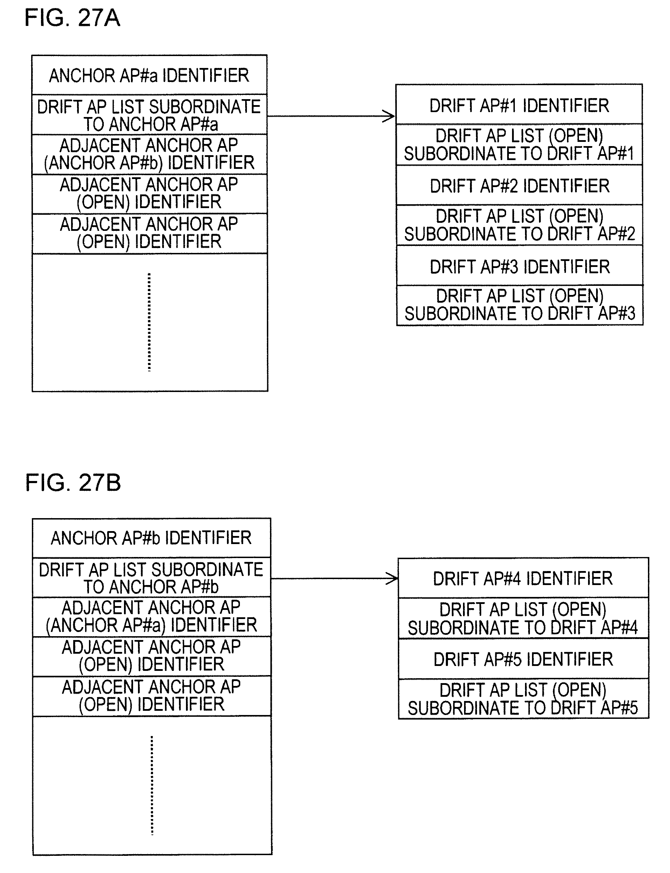

FIG. 27A is an example of the adjacent relationship list generated in the anchor AP #a (300-a), and FIG. 27B is an example of the adjacent relationship list generated in the anchor AP #b (300-b). For example, the adjacent relationship list of the anchor AP #a (300-a) stores an identifier of the anchor AP #a (300-a) and an identifier of an adjacent anchor AP (e.g. anchor AP #b (300-b)). The adjacent relationship list of the anchor AP #b (300-b) stores the identifier of the anchor AP #b (300-b) and the identifier of the adjacent anchor AP (e.g. anchor AP #a (300-a)).

The adjacent relationship list also stores an entry of the "drift AP subordinate to anchor AP #a" or the "drift AP subordinate to anchor AP #b". For example, the pointer information is written in this entry when the anchor AP #a (300-a) or the anchor AP #b (300-b) assign the IP address. In the pointer destination, the identifier of the drift AP 400 to which the IP address is assigned and the entry on the drift AP subordinate to this drift AP 400 are stored. In the case of this example in FIG. 16, the anchor AP #a (300-a) assigns the IP address to the drift AP #1 (400-1), hence the pointer information is stored in the entry of the "drift AP subordinate to anchor AP #a" of the adjacent relationship list of the anchor AP #a (300-a). In the pointer destination indicated by the pointer information, the identifier of the drift AP #1 (400-1) is stored. As the identifier of the drift AP #1 (400-1), the assigned IP address can be used, for example.

As mentioned above, the anchor AP #b (300-b) can recognize the IP address assigned by the anchor AP #a (300-a) by exchanging the Set Up Request and Set Up Response, for example. Thereby the anchor AP #b (300-b) can recognize that the drift AP 400 is subordinate to the anchor AP #a (300-a), and the received IP address is assigned to the drift AP 400. By repeating this processing, the anchor AP #a (300-a) and the anchor AP #b (300-b) can recognize the adjacent relationship of a part or all of the drift APs 400 registered subordinate to the anchor AP #b (300-b) and the anchor AP #a (300-a) respectively.

In the case of FIG. 27A, for example, when the anchor AP #a (300-a) assigns the IP address to the drift AP #2 (400-2), the IP address of the drift AP #2 (400-2) is stored in the adjacent relationship list. When the anchor AP #a (300-a) receives the Set Up Request from the anchor AP #b (300-b), the anchor AP #a (300-a) transmits the IP address of the drift AP #2 (400-2) by including this IP address in the Set Up Response. Thereby the anchor AP #b (300-b) can recognize that two drift APs exist subordinate to the anchor AP #a (300-a).

When the anchor AP #b (300-b) assigns IP address to the drift AP #4 (400-4) and the drift AP #5 (400-5) respectively, the anchor AP #b (300-b) also stores the IP addresses of the two drift APs 400 in the adjacent relationship list. When the anchor AP #b (300-b) receives the Set Up Request, the anchor AP #b (300-b) transmits the assigned IP address by including this IP address in the Set Up Response. Thereby the anchor AP #a (300-a) can recognize that the two drift APs 400 exist subordinate to the anchor AP #b (300-b).

Referring back to FIG. 16, when the anchor AP #b (300-b) receives the Set Up Response, the anchor AP #b (300-b) transmits the Attach Complete to the MME 200 (S104).

On the other hand, if the anchor AP #a (300-a) transmits the Set Up Response, the anchor AP #a (300-a) generates the final drift AP route management table (S102). This generation of the final drift AP route management table includes generation of the above mentioned adjacent relationship of the drift APs 400, and details thereof will be described later.

The newly added drift AP #1 (400-1) can establish communication with the anchor AP #a (300-a) by the exclusion processing (S105).

Now, a hierarchical processing when the redundant Attach request for the registration processing is transmitted will be described. FIG. 17 illustrates a relationship example between the anchor AP #a (300-a), the anchor AP #b (300-b) and the drift AP 400 in this case.

The example in FIG. 17 is a case when the drift AP #11 (400-11), as a newly added drift AP 400, moves to a range where communication is possible with both the drift AP #1 (400-1) and the drift AP #2 (400-2). In this case, it is assumed that the drift AP #1 (400-1) performs radio communication with the anchor AP #a (300-a), and the drift AP #2 (400-2) performs radio communication with the anchor AP #b (300-b). The radio signal transmitted from the newly added drift AP #11 (400-11) can be received by the drift AP #1 (400-1) and the drift AP #2 (400-2).

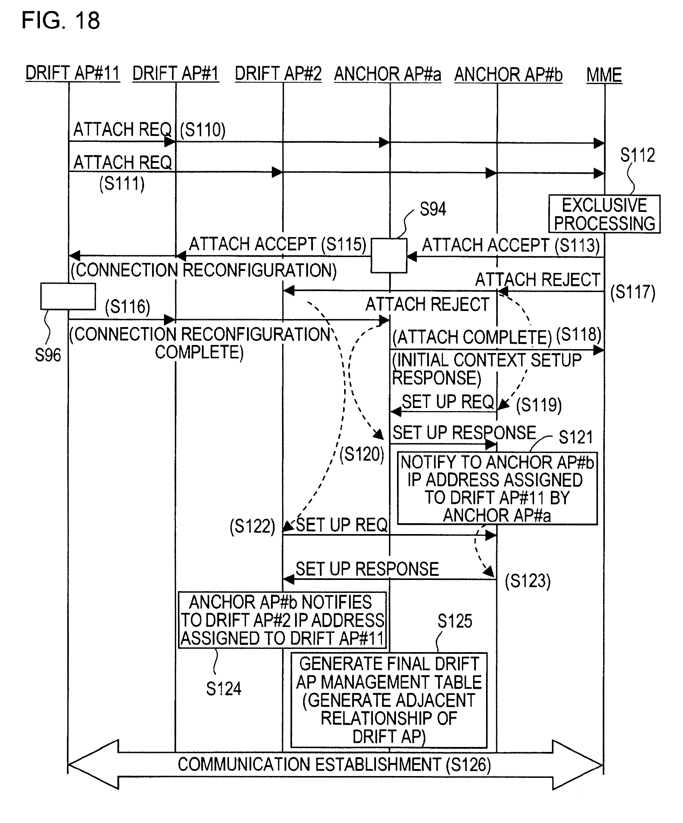

FIG. 18 is a sequence diagram depicting an operation example of a registration processing in the relationship example in FIG. 17.

The drift AP #11 (400-11) transmits an Attach request when the drift AP #11 (400-11) moves into a range where communication is possible with both the drift AP #1 (400-1) and the drift AP #2 (400-2) (S110, S111). For example, the Attach request transmitted from the drift AP #11 (400-11) is received by the drift AP #1 (400-1), and is transmitted to the MME 200 by the drift AP #1 (400-1) via the anchor AP #a (300-a). On the other hand, the Attach request transmitted from the drift AP #11 (400-11) is also received by the drift AP #2 (400-2), and is transmitted to the MME 200 by the drift AP #2 (400-2) via the anchor AP #b (300-b).

Next, the MME 200 performs an exclusion processing for the received two Attach requests (S112). In the exclusion processing, just like the above mentioned exclusion processing in S92 in FIG. 16, the Attach Accept is transmitted to an apparatus from which the Attach request is received first, or the Attach Accept is transmitted to one random apparatus for which the Attach request is received. In the example of FIG. 16, the control unit 220 transmits the Attach Accept in response to the Attach request from the anchor AP #a (300-a) (S113), and transmits the Attach Reject in response to the Attach request from the anchor AP #b (300-b) (S117).

When the anchor AP #a (300-a) receives the Attach Accept from the MME 200, the anchor AP #a (300-a) recognizes the new drift AP #11 (400-11) in the search space of the anchor AP #a (300-a), and assigns the IP address to the drift AP #11 (400-11) (S94). Then the anchor AP #a (300-a) updates the use state of the assigned IP address to "used" in the IP address management table.

Next, the anchor AP #a (300-a) generates the Attach Accept including the assigned IP address, and transmits this message to the subordinate drift AP #1 (400-1) (S115). For example, when the use state of the IP address is updated to "used" in the IP address management table, the processing unit 323 of the anchor AP #a (300-a) (e.g. FIG. 5A) can generate the Attach Accept including this IP address, and transmit this message to the drift AP #1 (400-a) via the signal generation unit 321.

When the drift AP #1 (400-1) receives the Attach Accept from the anchor AP #a (300-a), the drift AP #1 (400-1) transmits the received Attach Accept to the drift AP #11 (400-11) (S115). For example, when the processing unit 423 of the drift AP #1 (400-1) receives the Attach Accept from the anchor AP #a (300-a), the processing unit 423 of the drift AP #1 (400-1) can relay this message to the drift AP #11 (400-11), and can transmit the received Attach Accept to the drift AP #11 (400-11). Instead, the processing unit 323 of the anchor AP #a (300-a) may attach transmit destinations (e.g. drift AP #1 (300-1) and drift AP #11 (300-11)) to the generated Attach Accept. Thereby the drift AP #1 (400-1) can transmit the Attach Accept to the drift AP #11 (400-11).

The drift AP #11 (400-11) received the Attach Accept from the drift AP #1 (400-1), extracts the IP address and registers this IP address as the IP address of the drift AP #11 (400-11) (S96).

Next, the drift AP #11 (400-11) transmits the Connection Reconfiguration Complete to the drift AP #1 (400-1) (S116).

The drift AP #1 (400-1) received the Connection Reconfiguration Complete transmits this message to the anchor AP #a (300-a) (S116). For example, when the processing unit 423 of the drift AP #1 (400-1) receives the Connection Reconfiguration Complete, the processing unit 423 of the drift AP #1 (400-1) can transmit the data to the anchor AP #a (300-a), whereby the processing unit 423 can transmit this message to the anchor AP #a (300-a).

Next, the anchor AP #a (300-a) transmits the Attach Complete to the MME 200 (S118). For example, if the processing unit 323 of the anchor AP #a (300-a) (e.g. FIG. 4) receives the Connection Reconfiguration Complete, the processing unit 323 of the anchor AP #a (300-a) can generate the Attach Complete and transmit this message to the MME 200 via the transmission line interface unit 350. The Attach Complete may be transmitted as the Initial Context Setup Response. By receiving the Attach Complete, the MME 200 can recognize that the Attach Accept was processed normally.

On the other hand, the anchor AP #b (300-b) received the Attach Reject transmits this message to the subordinate drift AP #2 (400-2) (S117). For example, when the processing unit 323 of the anchor AP #b (300-b) receives the Attach Reject from the MME 200 via the transmission line interface unit 350, the processing unit 323 of the anchor AP #b (300-b) can transmit this message to the subordinate drift AP #2 (400-2).

The anchor AP #b (300-b) received the Attach Reject, transmits the Set Up Request to the anchor AP #a (300-a) (S119). By this message, the anchor AP #b (300-b) can request to notify the IP address assigned by the anchor AP #a.

The anchor AP #a (300-a) received the Set Up Request, generates the Set Up Response that includes the IP address (S94) assigned to the drift AP #11 (400-11), and transmits this message to the anchor AP #b (300-b) (S120, S121). Thereby the anchor AP #b (300-b) can detect the IP address assigned by the anchor AP #a (300-a), and update the adjacent relationship list to the latest content.

Furthermore, when the subordinate drift AP #2 (400-2) receives the Attach Reject from the anchor AP #b (300-b) (S117), the subordinate drift AP #2 (400-2) as well transmits the Set Up Request to the anchor AP #b (300-b) (S122).

When the anchor AP #b (300-b) receives the Set Up Request from the subordinate drift AP #2 (400-2), the anchor AP #b (300-b) generates the Set Up Request that includes the IP address received from the anchor AP #a (300-a) (S120), and transmits this message to the drift AP #2 (400-2) (S123, S124). Thereby the drift AP #2 (400-2) received the Attach Reject, for example, can detect the IP address of the drift AP #11 (400-11) assigned by another drift AP #1 (400-1), and update the adjacent relationship list to the latest content.

Then the anchor AP #a (300-a) generates the final drift AP 400 management table (S125). The processing to generate the final drift AP 400 management table will be described later.

Next, the newly added drift AP #11 (400-11) can establish the communication with the anchor AP #a (300-a), and communicate with the MME 200 (S126).

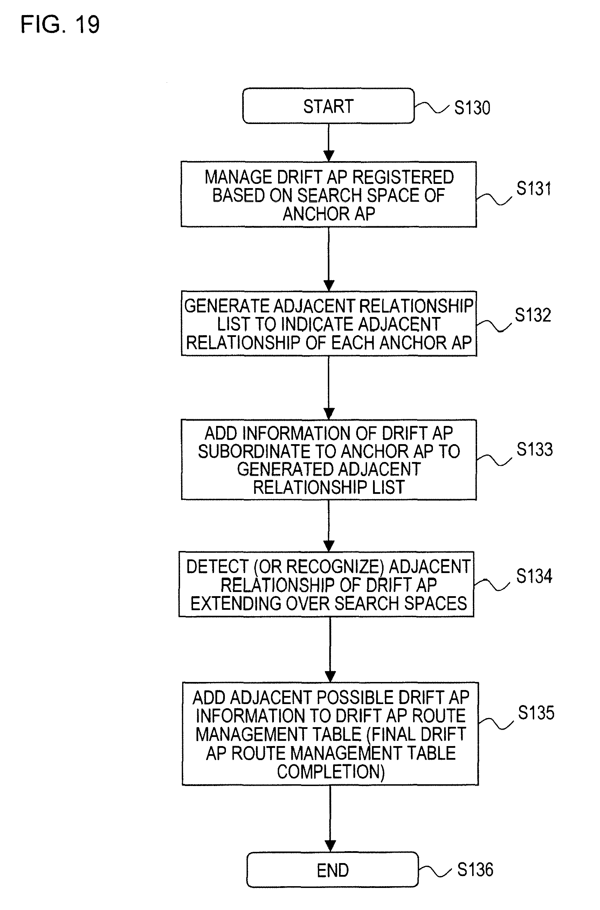

Now, an operation example to generate the final drift AP route management table will be described with reference to the drift AP route management table and the adjacent relationship list generated by the registration processing, for example. FIG. 19 is a flow chart depicting an operation example for generating the final drift AP route management table. The flow chart depicting in FIG. 19 is a processing performed by the processing unit 323 of the anchor AP 300, for example.

When the anchor AP 300 starts this processing (S130), the anchor AP 300 manages the drift AP 400 registered based on the search space of the anchor AP 300 (S131). For example, the anchor AP 300 generates the drift AP route management table in the search space of this anchor AP 300. For example, when the anchor AP 300 assigns the IP address to the drift AP 400 (e.g. drift AP 400 in FIG. 8A), the anchor AP 300 can generate the drift AP route management table including the drift AP 400 (e.g. FIG. 20A). When the anchor AP 300 assigns the IP address to the drift AP #11 (400-11) subordinate to the drift AP #1 (400-1) (e.g. FIG. 11), the anchor AP 300 can generate the drift AP route management table including the drift AP #11 (400-11) (e.g. FIG. 20B).

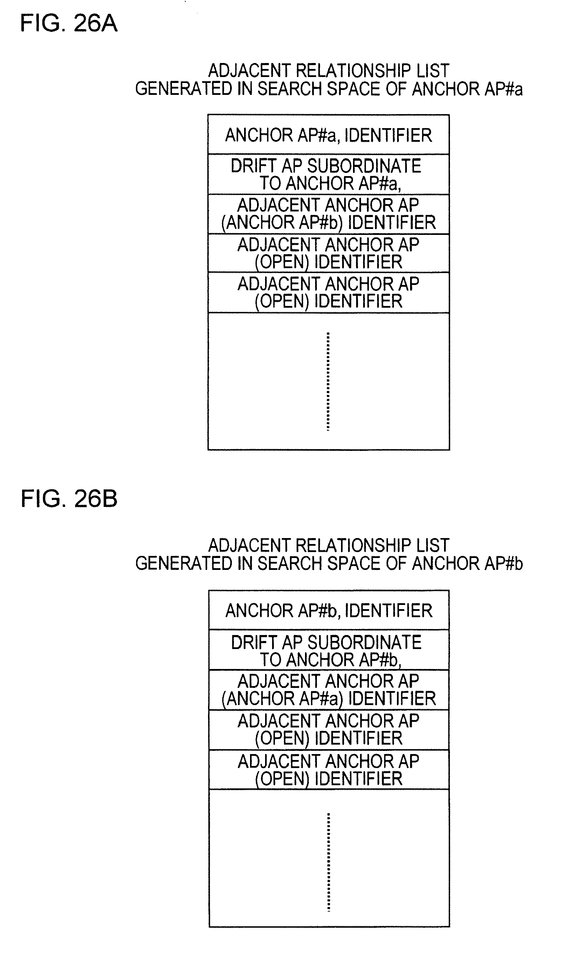

Next, referring back to FIG. 19, the anchor AP 300 generates the adjacent relationship list to indicate the adjacent relationship of each anchor AP 300 (S132). For example, the anchor AP #a (300-a) stores an identifier of an adjacent anchor AP #b (300-b) in the adjacent relationship list of this anchor AP #a (300-a) (e.g. FIG. 26A). The anchor AP #b (300-b) also stores an identifier of the adjacent anchor AP #a (300-a) in the adjacent relationship list of the anchor AP #b (300-b) (e.g. FIG. 26B). This adjacent relationship list can store the identifier of the adjacent anchor AP 300 by the adjacent anchor AP #a (300-a) and anchor AP #b (300-b) notifying to each other.

Next, referring back to FIG. 19, the anchor AP 300 then adds information on the drift AP subordinate to the anchor AP 300 to the generated adjacent relationship list (S133). For example, in FIG. 21, when the anchor AP #a (300-a) assigns IP addresses to the three drift APs: drift AP #1 (400-1) to the drift AP #3 (400-3), the anchor AP #a (300-a) stores the pointer information in the "drift AP list subordinate to anchor AP #a" in the adjacent relationship list (e.g. FIG. 27A). Then the anchor AP #a (300-a) stores the IP address of the drift AP #1 (400-1) in the pointer destination (e.g. FIG. 27A). For example, if the anchor AP #b (300-b) assigns IP addresses to the drift AP #4 (400-4) and the drift AP #5 (400-5) respectively, the anchor AP #b (300-b) stores the pointer information in the "drift AP list subordinate to anchor AP #b" in the adjacent relationship list, and stores the IP addresses of the drift Ap #4 (400-4) and the drift AP #5 (400-5) in the pointer destination (e.g. FIG. 27B).

Next, referring back to FIG. 19, the anchor AP 300 then detects (or recognizes) the adjacent relationship of the drift AP 400 extending over the search spaces (S134). For example, the anchor AP #b (300-b), which is adjacent to the anchor AP #a (300-a), notifies the adjacent relationship list generated by the anchor AP #b (300-b) (e.g. FIG. 27B) to the anchor AP #a (300-a). The anchor AP #a (300-a) also notifies the adjacent relationship list generated by the anchor AP #a (300-a) (e.g. FIG. 27A) to the anchor AP #b (300-b). By notifying to each other, the anchor AP #a (300-a) or the anchor AP #b (300-b) can detect the adjacent relationship list of the anchor AP #b (300-b) or the anchor AP #a (300-a) in the adjacent location respectively. For example, the anchor AP #a (300-a) can detect the drift AP 400 subordinate to the anchor AP #b (300-b) from the adjacent relationship list of the anchor AP #b (300-b) (e.g. FIG. 27B). The adjacent relationship list can be notified using the Set Up Request and the Set Up Response, for example (e.g. S100 and S101 in FIG. 16, and S119 and S120 in FIG. 18).

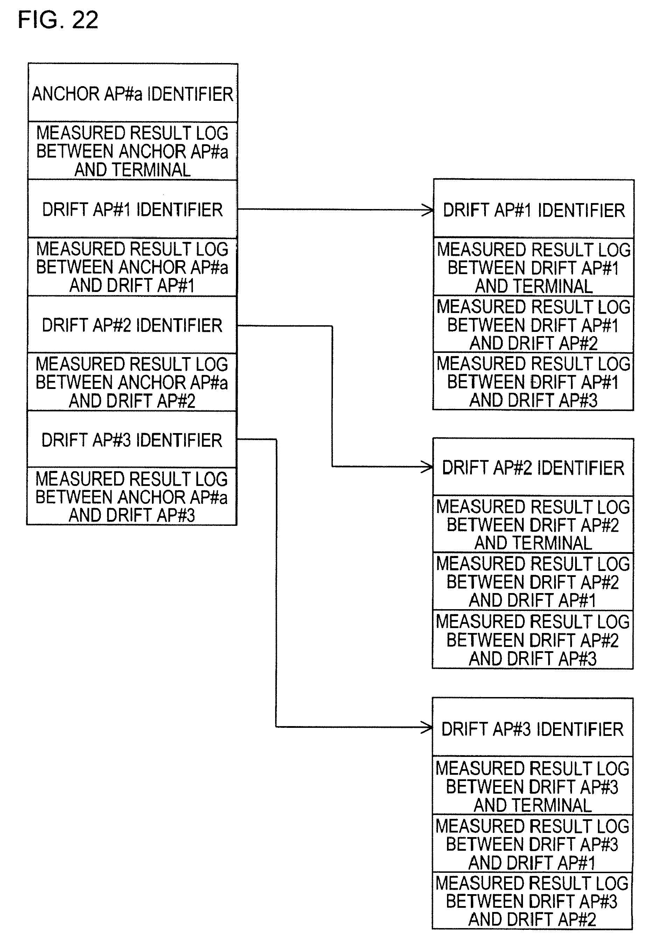

Referring back to FIG. 19, when the anchor AP 300 detects the adjacent relationship, the anchor AP 300 adds adjacent possible drift AP information to the drift AP route management information, and generates the final drift AP route management table (S135). For example, the anchor AP #a (300-a) adds the entries of the drift AP #4 (400-4) and the drift AP #5 (400-5) to the drift AP route management table of the anchor AP #a (300-a) (e.g. FIG. 22) based on the adjacent relationship list (e.g. FIG. 27B). FIG. 29 illustrates the final drift AP route management table.

In the final route management table of the drift AP 400 illustrated in FIG. 29, an entry of the Measured Result log between the drift AP #1 (400-1) and the drift AP #4 (400-4), and an entry of the Measured Result log between the drift AP #1 (400-1) and the drift AP #5 (400-5) are added.

In the final drift AP route management table in FIG. 29, an entry of the Measurement Result log between the drift AP #2 (400-2) and the drift AP #4 (400-4) is added to the pointer destination of the drift AP #2 (400-2). An entry of the Measured Result log between the drift AP #2 (400-2) and the drift AP #5 (400-5) is also added.

Thus the anchor AP #a (300-a) can generate the final drift AP route management table by adding each entry including the drift AP 400 adjacent to the adjacent anchor AP #b (300-b) to the drift AP route management table. FIG. 29 illustrates an example of the final drift AP route management table generated by the anchor AP #a (300-a).

The anchor AP #b (300-b) as well adds the Measured Result log among the drift AP #1 (400-1) to the drift AP #3 (400-3) to the subordinate drift AP #3 (400-3) and drift AP #4 (400-4) in the drift AP route management table. FIG. 30 illustrates an example of the final drift AP route management table generated by the anchor AP #b (300-b).

The final drift AP route management table can be generated by the processing unit 323 of the anchor AP 300, for example, accessing the adjacent relationship list and the drift AP route management table stored in the memory 341 when necessary.

Referring back to FIG. 19, the anchor AP 300 ends the series of processing after the final drift AP route management table is generated (S136).

Thus the anchor AP 300 can generate the final drift AP route management table.

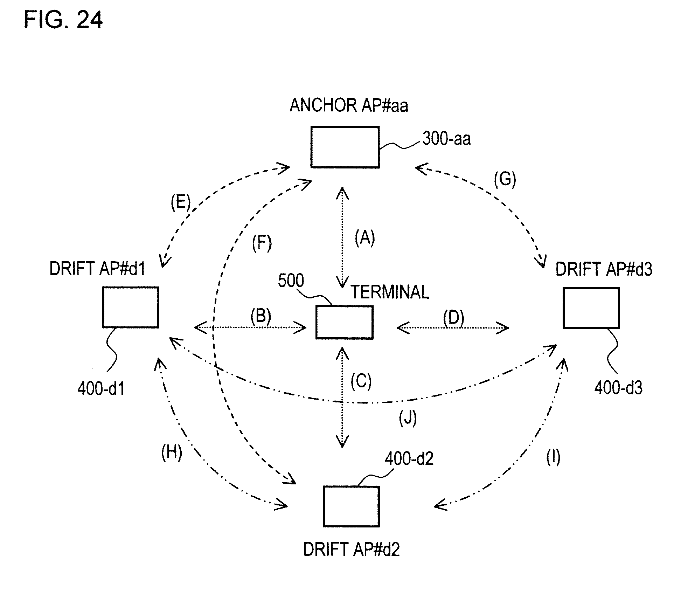

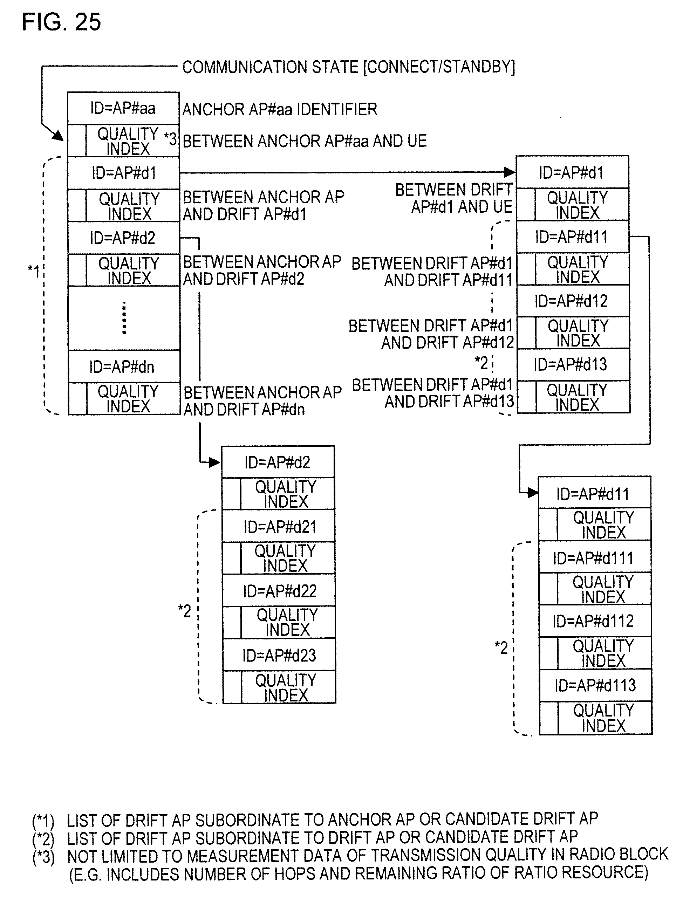

Now, the above mentioned drift AP route management table will be described in detail. FIG. 24 illustrates a relationship example of the anchor AP 300 and the drift AP 400, and FIG. 25 illustrates an example of the drift AP route management table. FIG. 25 also illustrates an example of a final drift AP route management table in the relationship of the anchor AP 300 and the drift AP 400 depicted in FIG. 24.

FIG. 24 is an example of a case when the terminal 500 moved in an intermediate position among three drift APs 400: #d1 (400-d1), #d2 (400-d2) and #d3 (400-d3). In FIG. 24, (A) to (J) indicate each route quality indicator among each node apparatus. For example, (A) indicates the route quality indicator between the anchor AP #Aaa (300-aa) and the terminal 500, and (J) indicates the route quality indicator between the drift AP 400 #d1 (400-d1) and the drift AP 400 #d3 (400-d3).

In the above example, it is described that the AP route management table is updated when the IP address is assigned by the anchor AP #Aaa (300-aa) to the newly added drift AP 400. The anchor AP #aa (300-aa) may update the AP route management table if the route quality indicator between the terminal 500 and each of the drift AP #d1 (400-d1) to drift AP #d3 (400-d3) can be observed by the Measurement Report. For example, the terminal 500 and the drift AP #d1 (400-d1) to the drift AP #d3 (400-d3) may transmit the Measurement Report when the route quality indicator is measured without transmitting the Attach request. In this case, the anchor AP #aa (300-aa) can receive the Measurement Report, and the terminal 500 or the drift AP #d1 (400-d1) to the drift AP #d3 (400-d3), which transmitted this message, can be stored in the drift AP route management table as a candidate that requires call setting. For example, as illustrated in FIG. 25, the communication state can be stored in the route quality indicator in the drift AP route management table, and for the drift AP 400 or the terminal 500 which are candidates that requires call setting, "standby" can be stored as a communication state. When the terminal 500 and the drift AP 400, of which call is connected by transmitting the Attach request, measure the route quality indicator, the terminal 500 and the drift AP 400 transmits the Measurement Report, and "connect" can be stored as the communication state of this terminal 500 or the drift AP 400. This communication state can be determined by the processing unit 323 of the anchor AP 300 (e.g. FIG. 5A), for example.

In the drift AP route management table in FIG. 27A and FIG. 27B, and in the final drift AP route management table in FIG. 29 and FIG. 30, the connection state illustrated in FIG. 25 may be stored. The Measured Result log between each node apparatus in FIG. 29 and FIG. 30 may be the route quality indicator illustrated in FIG. 25.

As illustrated in FIG. 25, the drift AP route management table has entries to store an identifier (ID = AP #aa) of an anchor AP #aa (300-aa), and the quality indicator and connection state between the anchor AP #aa (300-aa) and the terminal 500. In the drift AP route management table, each identifier of the drift AP 400, which is or may become subordinate to the anchor AP #aa (300-aa), and the route quality indicator and the connection state between the drift AP 400 and the anchor AP #aa (300-aa), are stored respectively. In the case of the example in FIG. 25, the drift APs 400, which are or may become subordinate to the anchor AP #aa (300-aa), are a drift AP #d1 (400-d1) to a drift AP #dn (400-dn).

In the drift AP route management table of this example, a drift AP #d11 (400-d11) to a drift AP #d13 (400-d13) are or may become subordinate to the drift AP #d1 (400-d1). For example, when the anchor AP #aa (300-aa) receives a Measurement Report of each drift AP #d11 (400-d11) to drift AP #d13 (400-d13) via the drift AP #d1 (400-d1), the anchor AP #aa (300-aa) can update the respective route quality indicator and the like in the AP route management table. In this case, the drift AP #d11 (400-d11) to the drift AP #d13 (400-d13) are or may become subordinate to the drift AP #d1 (400-d1) or its candidate - drift AP 400. Therefore the anchor AP #aa (300-aa) can update the drift AP route management table, and store each identifier of the drift AP #d1 (400-d1) and the drift AP #d11 (400-d11) to the drift AP #d13 (400-d13) in the pointer destination, and the route quality indicator and connection states thereof respectively.

The anchor AP #aa (300-aa) can also receive a Measurement Report on a drift AP #d111 (400-d111) to a drift AP #d113 (400-d113) which are or may become subordinate to the drift AP #d11 (400-d11). In this case, in the AP route management table, the entry of the pointer destination of the drift AP #d11 (400-d11) can be updated to the respective identifier and route quality indicator. In these examples as well, the anchor AP #aa (300-aa) may be updated when an IP address is assigned, as mentioned above.

Regarding the processing, referring back to FIG. 6, the anchor AP 300 can generate the above mentioned final drift AP route management table by the "initial setting".

Then, the anchor AP 300 performs "route quality indicator measurement" (S13), so as to receive the Measurement Report and store the route quality indicator in the final drift AP route management table.

4.2.2 "Route quality indicator measurement"

Now the processing of "route quality indicator measurement" (S13 in FIG. 6) will be described. When the anchor AP 300 generates the final drift AP route management table, the anchor AP 300 can transmit the Measurement Report request (S137 in FIG. 6). The transmit destination of the Measurement Report request can be the drift AP 400 or the terminal 500 stored in the final drift AP route management table, for example.

For example, in the case of the relationship example in FIG. 8A, the anchor AP 300 can transmit the Measurement Report request to the drift AP 400. In the case of the example in FIG. 11, the anchor AP 300 can transmit the Measurement Report request to the drift AP #1 (400-1) and the drift AP #11 (400-11). For example, in this case, the anchor AP 300 may include the Measurement Report request for the drift AP #11 (400-11) in the Measurement Report request for the drift AP #1 (400-1). In the case of the example in FIG. 29, the anchor AP #a (300-a) can transmit the Measurement Report request to the drift AP #1 (400-1) to the drift AP #3 (400-3).

in the case of the example in FIG. 29, the anchor AP #a (300-a) can transmit the Measurement Report for the drift AP #4 (400-4) and the drift AP #5 (400-5) to the drift AP #1 (400-1). Thereby, the anchor AP #a (300-a) can acquire Measured Result(s) between the drift AP #1 (400-1) and the drift AP #4 (400-4), and between the drift AP #1 (400-1) and the drift AP #5 (400-5). The anchor AP #a (300-a) can also transmit the Measurement Report request for the drift AP #4 (400-4) and the drift AP #5 (400-5) to the drift AP #2 (400-2). Thereby, the anchor AP #a (300-a) acquires the Measured Results between the drift AP #2 (400-2) and the drift AP #4 (400-4), and between the drift AP #2 (400-2) and the drift AP #5 (400-5).

Thus, the anchor AP 300 can transmit the Measurement Report request to the drift AP 400 stored in the final drift AP 400 management table. For example, for the transmit destinations of the Measurement Report request, the processing unit 323 of the anchor AP 300 accesses the memory 341, and reads the identifiers (e.g. IP addresses) of the drift APs 400 and the added drift AP 400 from the final drift AP 400 management table, so as to set these drift APs 400 as the transmit destinations. For example, the processing unit 323 can generate the Measurement Report request to which the transmit destinations are attached.

The drift AP 400 on the route can transmit the Measured Result to the anchor AP 300 by executing the above mentioned processing in FIG. 7, for example. Description on the processing of the drift AP 400 on each route is omitted here, since it is already described with reference to FIG. 7.

Referring back to FIG. 6, the anchor AP 300 can receive the Measurement Report from each drift AP 400 or terminal 500 (S138). The anchor AP 300 extracts the route quality indicator included in the Measurement Report, and stores the route quality indicator in a corresponding entry of the final drift AP route management table. For example, when the processing unit 323 of the anchor AP 300 receives the Measurement Report via the radio unit 310, the processing unit 323 of the anchor AP 300 extracts the route quality indicator, and stores the route quality indicator in a corresponding entry of the final drift AP route management table stored in the memory 341. For example, the Measurement Report includes information to indicate the route corresponding to the route quality indicator (e.g. a route between drift AP #1 (400-1) and drift AP #2 (400-2)), and the route quality indicator can be stored in an entry corresponding to this route information in the final drift AP 400 management table.

As mentioned above, the measured route quality indicator is collected in the anchor AP 300, and the anchor AP 300 can register the route quality indicator in the final AP route management table.

4.2.3 "management document additional generation"

Processing of the "management document additional generation" (S14 in FIG. 6) will now be described.

For example, when the route that does not be stored in the final drift AP route management table is included in the received Measurement Report, the anchor AP 300 can additionally register the route quality indicator extracted from this Measurement Report to the final drift AP route management table. For example, if the route quality indicator is measured without transmitting the Attach request, the drift AP 400 or the terminal 500 may transmit the Measurement Report. In such a case, the anchor AP 300 can additionally store the identifier of the drift AP 400 or terminal 500 transmitted this message and measured route quality indicator in the final AP route management table.

For example, it is assumed that the drift AP #6 (not illustrated) moves into a communicable range of the anchor AP #a (300-a) in FIG. 21, measures the route quality indicator, and transmits the Measurement Report to the anchor AP #a (300-a) without transmitting the Attach request. In this case, for example, the drift AP #6 can transmit the Measurement Report including the IP address of this drift AP #6. When the anchor AP #a (300-a) receives the Measurement Report, the anchor AP #a (300-a) extracts the IP address of the drift AP #6 and the route quality indicator, and additionally stores this data in the final drift AP route management table. For example, in the case of the example in FIG. 29, the anchor AP #a (300-a) stores the IP address of the drift AP #6 and the route quality indicator in the next entry of the "drift AP #3 identifier". In this case, the anchor AP #a (300-a) may store "standby" (e.g. FIG. 25) as the communication state in the final drift AP route management table.

For example, the processing of the "route document additional generation" is performed by the processing unit 323 of the anchor AP 300 by accessing the memory 341 and updating the final drift AP route management table.

4.3 "measurement event extraction" and "extraction result evaluation"

When the anchor AP 300 ends the processing of the "route document additional generation", the anchor AP 300 performs processing from "measurement event extraction" (S15 in FIG. 6) to "extraction result evaluation" (S18).

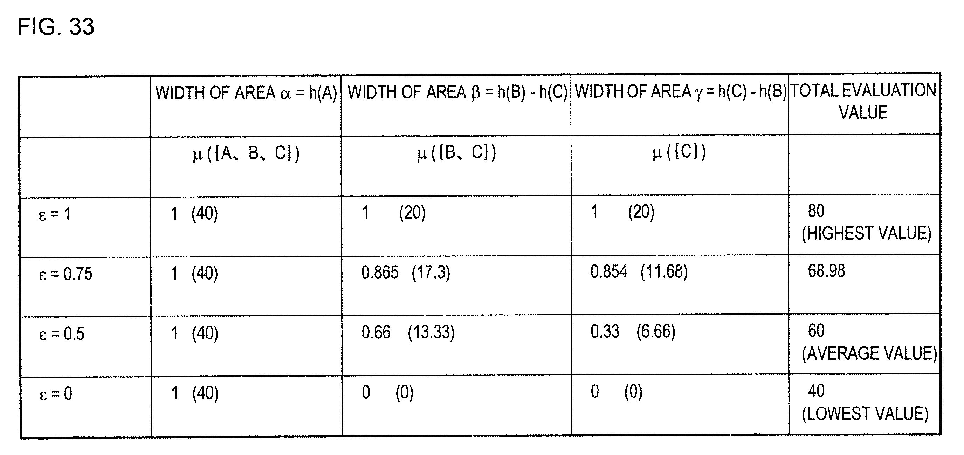

Now, two processing of "measurement event extraction" and "extraction result evaluation" will now be described in detail. The two processing will be described with reference to FIG. 33 to FIG. 35C.

Firstly, the point of the two processing ("measurement event extraction" and "extraction result") according to the second embodiment will be described. For example, in the route selection according to the second embodiment, the route selection indicator is selected from a plurality of route quality indicator, and a route of which selected route selection indicator satisfies the adaptability is adapted as the route selection rule, and the optimum route is selected according to the determined rule. For example, the anchor AP 300 selects the optimum route according to the rule determined like this for routes to the drift AP 400. In this case, for example, the adaptability is regarded as a kind of weight (w) of each node apparatus in the ad hoc network system 10.

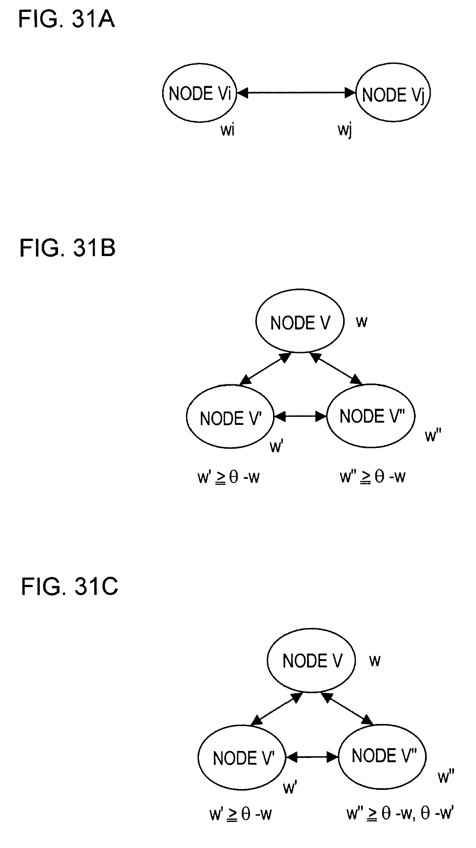

FIG. 31A illustrates a relationship example between the node apparatus and the weight. When a weight of a node Vi and a weight of a node Vj are wi and wj respectively, and each weight wi and wj may have a predetermined threshold ($\theta$) or more for the node Vi and the node Vj to generate a route, then a condition to generate the route is given by $wi + wj \geq \theta$.

FIG. 31B to FIG. 32 include conditions to generate the route in each node. In the example in FIG. 31B, when a weight w' of the node V' and a weight w" of the node V" satisfy the condition of the threshold ($\theta$) or more ($w' \geq \theta$ -w, $w" \geq \theta$ -w) where $w \leq w'$, then the route can be generated between the node V' and the node V".

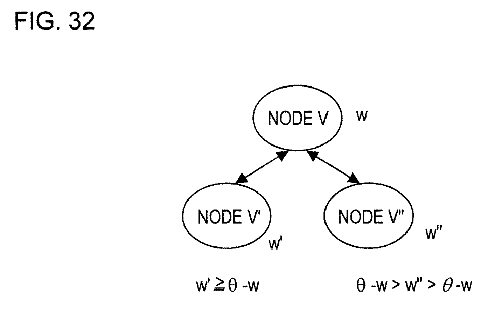

However, when w > w' and w' + w" < $\theta$ as depicted in FIG. 32, the weights w' and w" cannot satisfy the condition of the threshold ($\theta$) or more, therefore the route cannot be generated between the node V' and the node V". For example, whether the route can be generated or not is based on whether the weights satisfy the threshold or more, that is, whether the route has a value of the adaptability or more.

The route selection indicator and the adaptability can be determined as follows. For example, it is assumed that there is a plurality of types of measured route quality indicator. For example, there is the radio quality, the number of hops, and the remain of radio resource as the route quality indicator, and it is assumed that all indicators are measured.

For example, it is assumed that the route quality indicator (A) from the anchor AP 300 (= start) to the terminal 500 (= goal) is "40", another route quality indicator (B) thereof is "60", and still another route quality indicator (C) thereof is "80". In this case, for example, the route quality indicator (A) can be a packet loss ratio out of the radio qualities, the route quality indicator (B) can be an error frequency out of the radio qualities, and the route quality indicator (C) can be a noise ratio, for example. These are just examples, and the route quality indicator (A) to (C) can be other indicator including number of hops and remaining ratio of radio resource.

In this case, the anchor AP 300 can select the route quality indicator (C) having the highest value "80" out of the route quality indicator (A) to (C), as the route selection indicator. For example, the route quality indicator (C) is a noise ratio, hence the noise ratio can be used as the route selection indicator. In this case, the anchor AP 300 can set "80" as the adaptability.

Furthermore, the anchor AP 300 may select the route quality indicator (A) having the lowest value "40" out of the route quality indicator (A) to (C) as the route selection indicator. In this case, the route quality indicator (A) is the packet loss ratio, hence the anchor AP 300 can use the packet loss ratio as the route selection indicator. In this case, the anchor AP 300 can set "40" as the adaptability.

And, the anchor AP 300 can also select the route quality indicator (B) having an average value "60" out of the route quality indicator (A) to (C) as the route selection indicator. For example, the anchor AP 300 can use the error frequency as the route selection indicator. In this case, the anchor AP 300 can set "60" as the adaptability.

In the above example, for example, the measurement indicator extraction processing (S15) corresponds to selecting the route quality indicator (A), (B), (C) or the like. And, determining whether the threshold "Q" is satisfied (S16) corresponds to determining whether there is the route quality indicator of which the highest value of each indicator is "80" or more. The threshold "Q" corresponds to the highest value "80", for example. The extraction result evaluation (S18) corresponds to comparing and evaluating which of route 1 and route 2 is the route that satisfies the adaptability "80" based on the route quality indicator (C) having the highest value "80" or more, for example.

Furthermore, as the processing of the "measurement indicator extraction" (S15), it is also possible that the anchor AP 300 extracts the route quality indicator as follows. That is, the anchor AP 300 weights the measured route quality indicator, and selects the route selection indicator based on the result. For example, the route selection indicator can be determined by weighing as follows.

For example, in the above mentioned example, the difference between the route quality indicator (A) to the route quality indicator (C) is "40", that is, the width is "40". Regarding this width "40" as the width of the common area (area $\alpha$) of each route quality indicator (A) to (C), and as a value representing a common evaluation, the weight of is "3/3 = 1".

In the area between the quality route indicator (B) and (C) (area $\beta$), the width is "20" and the weight is "2/3 = 0.66" with respect to the entire area of the quality route indicator (A) to (C).

In the area of the quality route indicator (C) alone (area γ), the width is "0", and the weight is [1/3 = 0.33] with respect to the entire area of the quality route indicator (A) to (C).

Then the total evaluation value is given by the following expression.

[Expression 1]

$$total\,evaluation\,value=$$

$$\mu(\{A,B,C\})\times h(A)+\mu(\{B,C\})\times\{h(B)-h(A)\}+\mu(\{C\})\times\{h(C)-h(B)\}\quad\cdots(1)$$

In Expression (1), μ ({A, B, C}) is the weight of the area α (e.g. "1"), h(A) is the width of the area α (e.g. "40"). μ({B, C}) is the weight of the area β (e.g. "0.66") and h(B) - h(A) is the width of the area β (e.g. "20"). μ({C}) is the weight of the area γ (e.g. "0.33") and h(C) - h(B) is the width of the area γ (e.g. "20").

FIG. 33 is an example of a result of the total evaluation values. A reference ε is used to indicate a total evaluation value. For example, if the reference ε is "0.75", the total evaluation value is "68.98".

For example, in the case of FIG. 33, the indicator of which the route quality indicator has the highest value (e.g. "80") can be the route selection indicator, or indicators generated by weighting the three route quality indicators can be the route selection indicator. In the case of weighting three indicators, the packet loss rate, an error frequency, and the noise ratio, for example, can be the route selection indicator, and a value generated by weighting these route quality indicator (e.g. total evaluation value: "68.98") can be regarded as the adaptability. Depending on how to apply the reference, any two route quality indicators out of the three route quality indicators may be the route selection indicators, and the value to which the reference ε is applied may be regarded as the adaptability.

For example, calculation using Expression (1) can be performed by the processing unit 323 of the anchor AP 300 reading the Measured Result stored in the final drift AP route management table. In this case, the processing unit 323 may use a value generated by adding the route quality indicator of each route, for the route quality indicator from the anchor AP 300 (= start) to the terminal 500 (= goal).

Determining the route selection indicator based on the total evaluation value like this is just an example, and the route selection indicator and the adaptability can also be determined using other method.

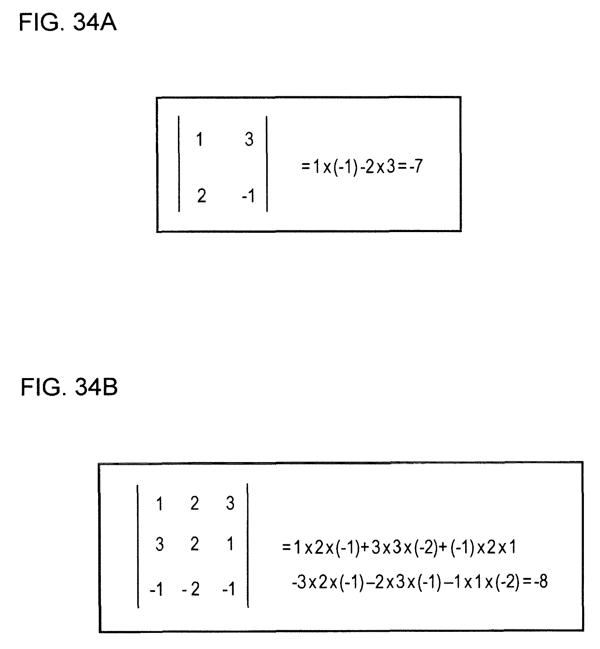

For example, the adaptability may be determined based on a multivariate analysis technique. For example, the route quality indicator is quantized into five levels (e.g. -2, -1, 0, 1, 2, 3). In a case of using two elements for the route quality indicators (e.g. two elements: "packet loss ratio" and "number of hops" are used for the route quality indicators), it is assumed that (1, 3) and (2, - 1) are acquired for the measured route quality indicators. In this case, the adaptability "-7" can be determined by computing using a determinant in FIG. 34. In a case of using three elements as the route quality indicators (e.g. "packet loss ratio", "number of hops" and "remaining ratio of radio resource"), it is assumed that (1, 2, 3), (3,2, 1) and (-1, -2, -1) are acquired as a result of quantizing the measured route quality indicators. In this case, the adaptability "88" is determined by computing the quantized route quality indicators using a determinant (e.g. FIG. 34B).

The adaptability can also be determined by a K means clustering, which is one cluster analysis method. For example, a central value (or a reference value) of each route quality indicator is determined in advance, a difference between this value and the route quality indicator measured at a certain timing is determined, and the measured route quality indicator closest to the central value can be regarded as the adaptability.

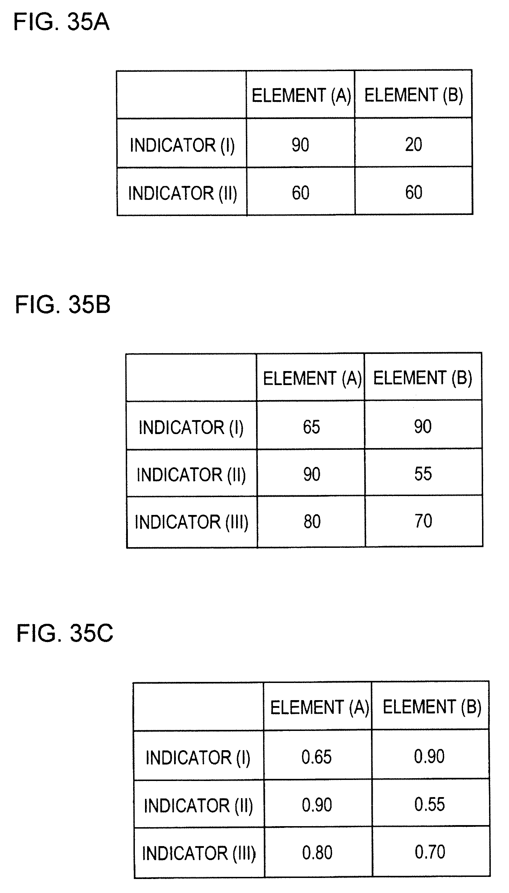

Furthermore the adaptability may be determined as follows. For example, it is assumed that route quality indicators (I) and (II) of two routes have composing elements (A) and (B) respectively, and each observation value in FIG. 35A is acquired.

Here, for example, a composing element in the route quality indicator is used for classifying the indicator into an element related to transmission quality in the radio block, and an element related to the radio resource amount of each node and is a measurement event of each attribute. For example, the composing element belonging to the attribute of a quality (e.g. composing element (A)) includes such measurement events as the packet loss ratio and field strength. The composing element belonging to the attribute of a radio resource amount of each node (e.g. composing element (B)) includes such measurement events as the remaining ratio of the radio resource and an operating ratio of a radio channel.

It is assumed that the degree of significance (degree of influence) of the composing elements (A) and (B) on route selection are "0.9" respectively. Here, the "degree of significance" is a value or a degree which the composing element influences on the route selection. The "degree of significance" may be different depending on the composing element, or be the same for all the composing elements. The route selection indicator to decide the route can be determined as follows based on the weight evaluation method.

Route selection indicator (I) = 90 × 0.9 + 20 × 0.9 = 99

Route selection indicator (II) = 60 × 0.9 + 60 × 0.9 = 101

As a result, when a greater value in the result of calculation is regarded as a better route, then the anchor AP 300 can determine the route selection indicator (II) (e.g. remaining ratio of radio resources and operating ratio of a radio channel) as the route selection indicator, and "101" as the adaptability. In this case, the anchor AP 300 may select a smaller value "99" instead as the adaptability.

The adaptability may also be determined as follows. For example, when composing elements (A) and (B) are used for the route quality indicators (I), (II) and (III) on three routes, it is assumed that the observation values in FIG. 35B are acquired.

The anchor AP 300 performs scaling for each route quality indicator, regarding 100 points as the highest, and weights each scaled element. FIG. 35C is an example of the result of scaling.

For weighting, it is assumed that weight (e.g. degree of significance) is "1.0" for a set of composing elements (A) and (B), is "0.5" for the composing element (A) alone, and is "0.3" for the composing element (B) alone. Here the route selection indicator can be regarded as a total evaluation of the degree of contribution which an entire set of each composing element of each route quality indicator and each composing element make on route quality. For example, the total evaluation can be performed using fuzzy integration, and in this case, the anchor AP 300 can calculate as follows.

Route selection indicator (I) $\rightarrow$ $(1 \wedge 0.65 \wedge 0.95) \vee (0.5 \wedge 0.65) \vee (0.3 \wedge 0.90) = 0.65$

Route selection indicator (II) $\rightarrow$ $(1 \wedge 0.90 \wedge 0.55) \vee (0.5 \wedge 0.95) \vee (0.3 \wedge 0.55) = 0.55$

Route selection indicator (III) $\rightarrow$ $(1 \wedge 0.80 \wedge 0.70) \vee (0.5 \wedge 0.80) \vee (0.3 \wedge 0.70) = 0.70$

As a result, the anchor AP 300 selects the route selection indicator (III) as the route selection indicator if the greater value is regarded as the better route, and "0.70" as the adaptability.

As described above, the anchor AP 300 can select the route selection indicator as the rule to search the optimum route, and select the adaptability as the reference to select the optimum route. Thus the anchor AP 300 can perform the "measurement event extraction" processing (S15) depicted in FIG. 6.

Next, the anchor AP 300 determines whether the extracted condition of the route selection indicator satisfies the threshold (hereafter Q) as the adaptability, whereby the anchor AP 300 can select a candidate of the route that satisfies the adaptability (S16).

When the extracted condition is not Q or more (NO in S16), the anchor AP 300 performs the measurement event extraction processing (S15) again, and extracts another route selection indicator and adaptability.

On the other hand, when the extracted condition is Q or more (YES in S16), the anchor AP 300 determines whether the handover request is transmitted (S17). In the case of the second embodiment, the handover request can be transmitted by the anchor AP 300, for example. When the anchor AP 300 is not in a state of transmitting an HO request (NO in S17), the anchor AP 300 moves to the route quality indicator measurement processing and repeats the above mentioned processing. For example, if the route quality indicator of the radio block included in the Measurement Report is a threshold or less, the processing unit 323 of the anchor AP 300 can determine that the handover is performed with the drift AP 400 or the terminal 500 in this radio block. Depending on this determination, the processing unit 323 of the anchor AP 300 can determine whether the handover request can be transmitted in the current state.

On the other hand, when a handover request can be transmitted in the current state (YES in S17), the anchor AP 300 performs the extraction result evaluation processing (S18). For the extraction result evaluation processing, it is determined, for example, that indicator is compared for the adaptability based on the route decision rule used by the ad hoc network, as mentioned above. This extraction result evaluation processing is a processing to compare and evaluate "route 1" and "route 2" or the like to determine a new route before the "optimum route decision processing" in a subsequent step.

4.4 "optimum route decision"

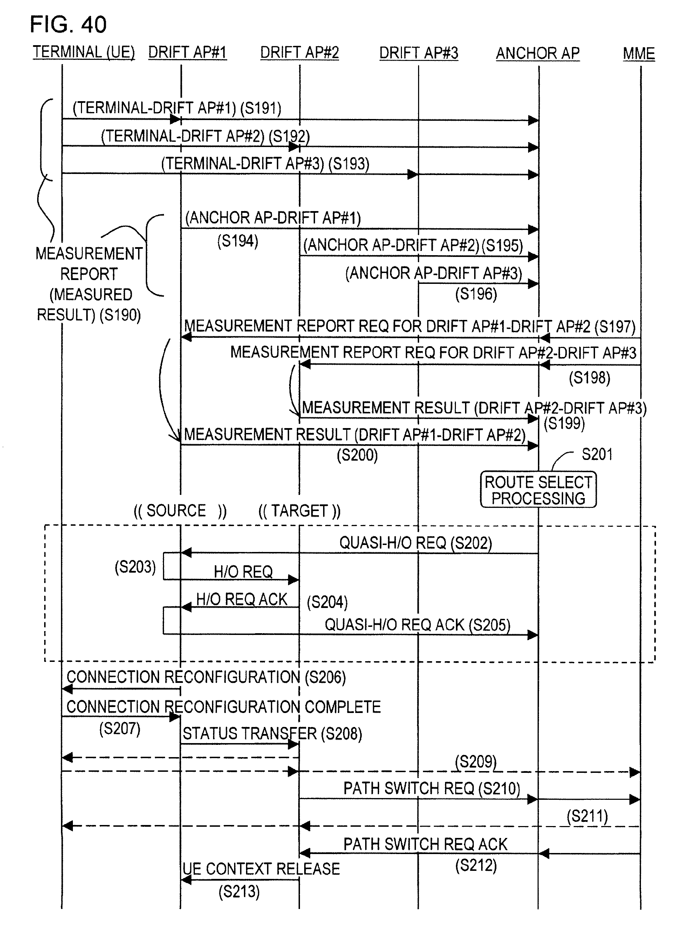

Now details on the "optimum route decision" processing in FIG. 6 will be described. The "optimum route decision" processing will be described with reference to FIG. 36 to FIG. 40. In this example, a case of applying the handover will be described as a case of performing the "optimum route decision" processing. Firstly, the processing of the "optimum route decision" processing in the case of applying handover will be described with reference to FIG. 36 to FIG. 38, and an example of another processing will be described next with reference to FIG. 39 and FIG. 40.

4.5 Operation when HO is applied

FIG. 36 illustrates a configuration example of the ad hoc network system 10. In this example, the terminal 500 is connected to then anchor AP #a (300-a), and moves into a range where radio communication can be performed with both the drift AP #1 (400-1) and the drift AP #2 (400-2) by handover. When the terminal 500 is moved, there are two routes that reach the terminal 500 from the anchor AP #a (300-a): a route via the drift AP #1 (400-1); and a route via the drift AP #2 (400-2). After the initial setting (S13 in FIG. 6) is performed with the terminal 500, the anchor AP #a (300-a) measures the route quality indicator (S13), and selects the optimum route by performing the processing from the measurement indicator extraction (S15) to the optimum route decision (S19). To simply explanation, it is assumed that the management document additional generation (S14) processing is not performed in the following operation example.

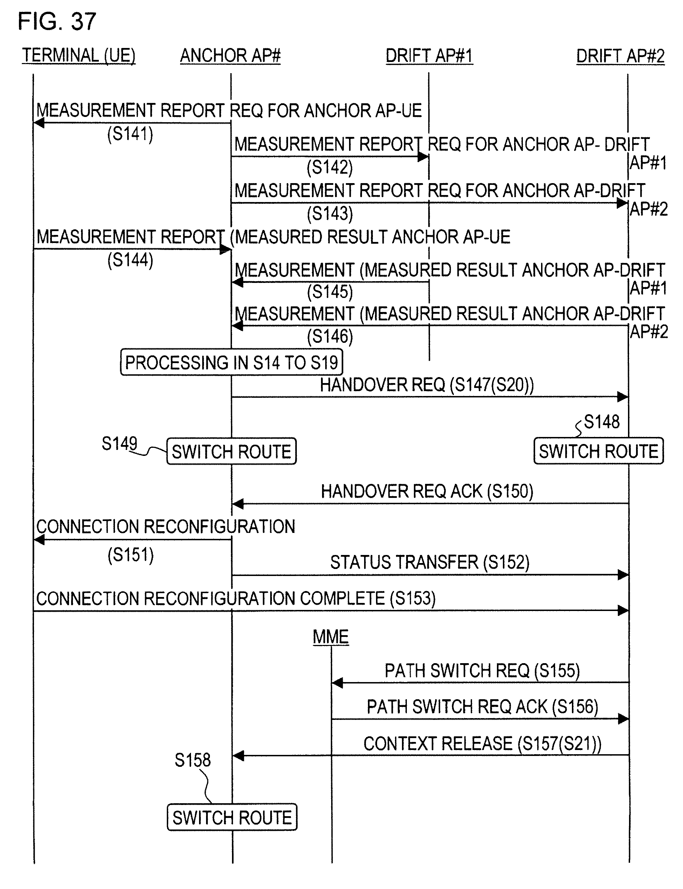

FIG. 37 is a sequence diagram depicting an operation example of each processing in the ad hoc network system 10 in this state. In the example in FIG. 37, the sequence diagram of the route quality indicator measurement (S13) or later processing is depicted, assuming that the initial setting (S12) is completed.

Based on the final drift AP route management table, the anchor AP #a (300-a) transmits the Measurement Report request to the terminal 500, the drift AP #1 (400-1) and the drift AP #2 (400-2) respectively (S141 to S143).

Next, the anchor AP #a (300-a) receives the Measurement Report from the terminal 500, the drift AP #1 (400-1) and the drift AP #2 (400-2) (S144 to S146). The Measurement Report includes each route quality indicator measured by the terminal 500, the drift AP #1 (400-1) and the drift AP #2 (400-2).

Next, then the anchor AP #a (300-a) performs processing from S14 to S19 in FIG. 6. For example, the anchor AP #a (300-a) extracts the route selection indicator having a highest value (e.g. highest value "80" in FIG. 33) out of the plurality of route selection indicators, and determines this highest value as the adaptability (YES in S15 and S16). When the anchor AP #a (300-a) detects that the route quality indicator in the radio block between the terminal 500 and the anchor AP #a (300-a) is a threshold for a handover or less, the anchor AP #a (300-a) determines that the handover is requested (YES in 17). Then the anchor AP #a (300-a) selects the route of which extracted route selection indicator satisfies the adaptability (or is more than the adaptability) as the route selection rule, and determines the selected route as the optimum route (S18, S19). For example, the anchor AP #a (300-a) can determine the route via the drift AP # 2 (400-2), which is the route of which remaining ratio of the radio resources (= rate selection indicator) is the highest value "80" or more (= adaptability), as the optimum route. In this case, the route via the drift AP #1 (400-1) is also evaluated whether the remaining ratio of the radio resources is the highest value "80" or more in the extraction result evaluation processing (S18). However the remaining ratio of the radio resources of the route via the drift AP #1 (400-1) is smaller than the highest value "80" (S18), therefore it is determined that this route does not become the optimum route (S19).

Hence, the anchor AP #a (300-a) can transmit the handover request to the drift AP #2 (400-s) on the route selected as the optimum route (S147, S20 in FIG. 6). For example, the processing unit 323 of the anchor AP #a (300-a) reads the route quality indicator in the anchor AP #a (300-a) and the drift AP #1 (400-1), and the route quality indicator in the anchor AP #a (300-a) and the drift AP #2 (400-2) stored in the final drift AP route management table. Then the processing unit 323 extracts the route selection indicator (e.g. remaining ratio of radio resources) from the route quality indicators (S15), determines the route quality indicator that satisfies the adaptability (e.g. "80" or more) (YES in S16) as the route selection rule, and determines the route that satisfies this rule (e.g. a route via the drift AP #2 (400-2)) as the optimum route (S18, S19). The processing unit 323 selected the optimum route, generates the handover request, and transmits the handover request to the drift AP #2 (400-2) via the signal generation unit 321.

When the anchor AP #a (300-a) transmits the handover request, the anchor AP #a (300-a) performs the route switching processing (S149). On the other hand, when the drift AP #2 (400-2) receives the handover request, the drift AP #2 (400-2) also performs the route switching processing (S148). For example, the anchor AP #a (300-a) switches the route for performing radio communication with the terminal 500 from the route for performing radio communication directly with the terminal 500 to the route via the drift AP #2 (400-2). The drift AP #2 (400-2) also switches the route so that radio communication can be performed with the anchor AP #a (300-a) and the terminal 500.

For example, the route switching processing is performed by overwriting the routing table so that the route from the anchor AP #a (300-a) to the terminal 500 via the drift AP #2 (400-2) is used. This route switching processing by overwriting the routing table may be performed only by the anchor AP #a (300-a), not by the drift AP #2 (400-2). Then the processing unit 323 of the anchor AP #a (300-a) transmit the data addressed to the terminal 500 to the drift AP #2 (400-2) according to the routing table stored in the memory 341, for example, with attaching the route information to notify that the data is transmitted via the drift AP #2 (400-2). Thereby the drift AP #2 (400-2) can transmit the received data to the terminal 500 according to the route information, without any need to perform the route switching processing. Therefore even if the number of hops is one or more, the drift AP 400 in the middle of the route can determine the transmit destination of the received data by referring to the attached route information.

Referring back to FIG. 27, when the drift AP #2 (400-2) performs the route switching processing, the drift AP #2 (400-2) transmits a Handover Request Ack in response to the handover request, to the anchor AP #a (300-a) (S150). Description on the subsequent processing (S151 to S158) which is executed by a known handover procedure, is omitted.

As depicted in FIG. 27, when the terminal 500 performs handover, the anchor AP #a (300-a) according to the second embodiment generates the handover request, and transmits the handover request to the drift AP #2 (400-2) at the handover destination. Therefore the drift AP #1 (400-1), the drift AP #2 (400-2) and the terminal 500 need not perform such processing as transmitting the handover request, and processing can be decreased compared with the case of these apparatuses transmitting the handover request. Thereby the information volume that flows through the ad hoc network 10 can also be decreased.

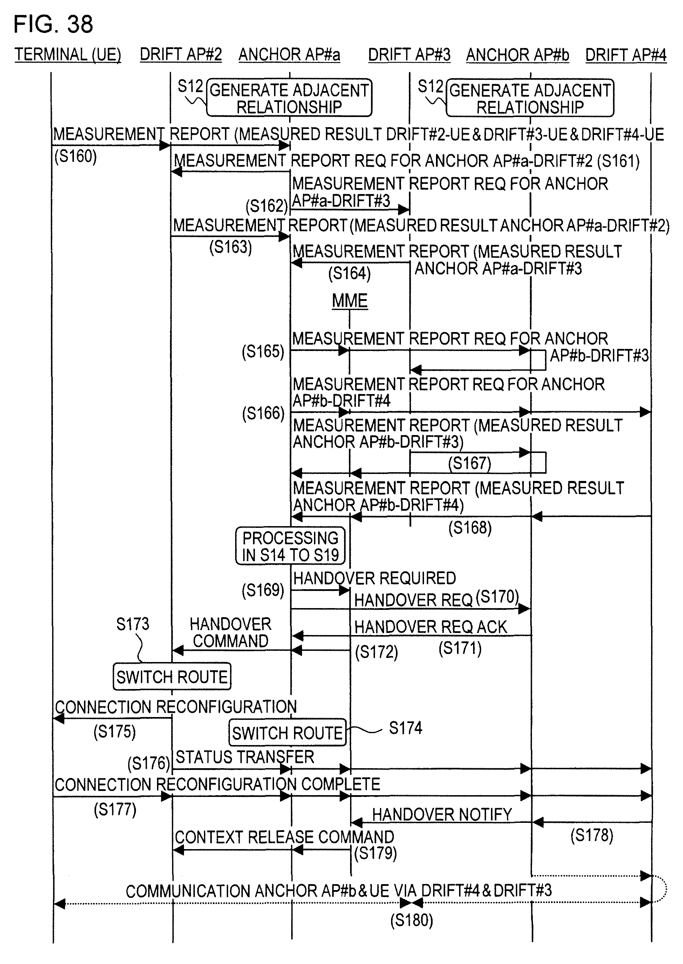

FIG. 38 also illustrates an operation example when the handover is applied. The relationship example of the anchor AP #a (300-a), the anchor AP #b (300-b) and the drift AP #2 (400-2) to the drift AP #4 (400-4) is depicted in FIG.

21, for example.

As FIG. 21 depicts, in this example, the terminal 500 performs communication using the route via the drift AP #2 (400-2) and the anchor AP #a (300-a), and then moves from the zone of the drift AP #2 (400-2) to the zone of the drift AP #3 (400-3). After the terminal 500 moves, there are four routes, that is:

1) anchor AP #a (300-a) to drift AP #2 (400-2) to drift AP #3 (400-3)
2) anchor AP #a (300-a) to drift AP #3 (400-3)
3) anchor AP #b (300-b) to drift AP #3 (400-3)
4) anchor AP #b (300-b) to drift AP #4 (400-4) to drift AP #3 (400-3).

FIG. 38 is a sequence diagram depicting an operation example when the route 4) is selected as the optimum route in the anchor AP #a (300-a).

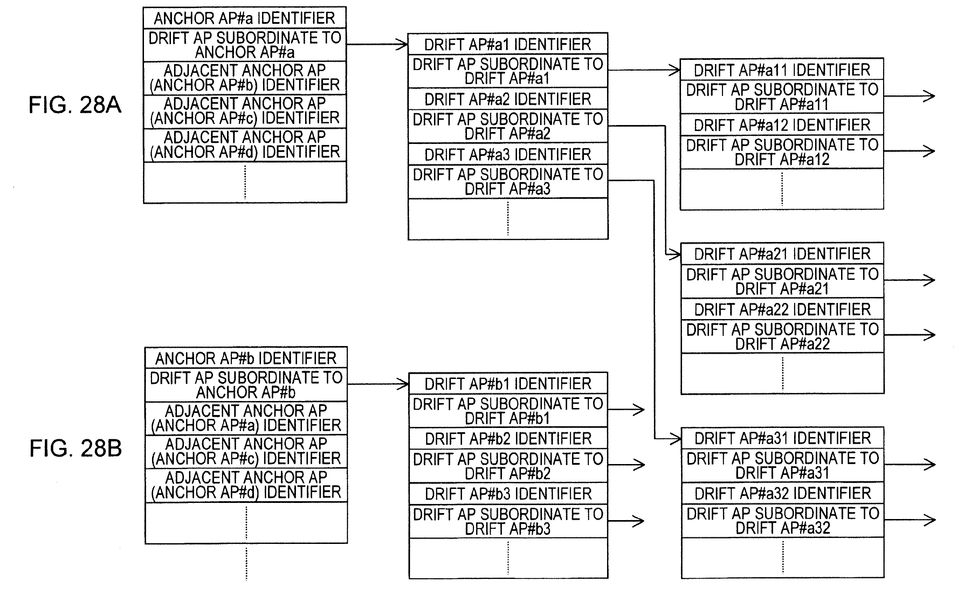

The anchor AP #a (300-a) and the anchor AP #b (300-b) can generate an adjacent relationship by the initial setting (S12), and generate the adjacent relationship list depicted in FIG. 28A and FIG. 28B (S12).

The anchor AP #a (300-a) can receive the Measurement Report from the drift AP #2 (400-2) to the drift AP #4 (400-4), which are or may become subordinate to the anchor AP #a (300-a), and the terminal 500 (S160, S163, S164, S167 and S168). In the case of the example in FIG. 38, the anchor AP #a (300-a) receives the Measurement Report by transmitting a Measurement Report request to the drift AP #2 (400-2) to the drift AP #4 (400-4) (S161, S162, S165 and S166).

The anchor AP #a (300-a) performs the processing from S14 to S19 based on the route quality indicator stored in the final drift AP route management table, and selects the route 4) as the optimum route. The anchor AP #a (300-a) transmits the handover request to the anchor AP #b (300-b) so as to perform communication with the terminal 500 using the selected route 4) (S170).

When the anchor AP #b (300-b) receives the handover request, the anchor AP #b (300-b) transmits the Handover Request Ack to the anchor AP #a (300-a) (S171). Thereby the handover is permitted and the handover processing (S172 to S180) is performed. The route information on the route 4) can be attached to the data addressed to the terminal 500 by the anchor AP #b (300-b), for example. Thereby, the drift AP #4 (400-4) and the drift AP #3 (400-3) on the route 4) can determine the transmit destination of the received data.

As illustrates in FIG. 38, the optimum route selection processing is performed by the anchor AP #a (300-a), and not by the drift AP #2 (400-2) to the drift AP #4 (400-4) and the terminal 500. Therefore the drift AP #2 (400-2) to the drift AP #4 (400-4) and the terminal 500 do not collect route information. As a consequence, the processing load related to the route selection on the drift AP #2 (400-2) to the drift AP #4 (400-4) and the terminal 500 becomes less compared with the case of the drift AP #2 (400-2) to the drift AP #4 (400-4) and the terminal 500 processing route selection individually. As a result, information flow through the ad hoc network system 10 is not interrupted.

FIG. 39 and FIG. 40 also illustrate an operation example when the handover is applied. FIG. 39 illustrates a relationship example of the drift AP #1 (400-1) to the drift AP #3 (400-3), the terminal 500 and the anchor AP 300, and FIG. 40 is a sequence chart depicting an operation example when the handover is applied.

As illustrated in FIG. 39, in this example, it is assumed that the anchor AP 300 and the terminal 500 are performing radio communication by a route via the drift AP #1 (400-1) (route indicated by a bold line in FIG. 39). As the terminal 500 moves, the anchor AP 300 selects a route of "anchor AP to drift AP #1 (400-1) to drift AP #3 (400-3)" (route indicated by a dashed line in FIG. 39) as the optimum route. FIG. 40 illustrates an operation example when this route is selected.

As illustrated in FIG. 40, if the anchor AP 300 selects the above mentioned route by the route selection processing (S201, processing in S14 to S19 in FIG. 6, for example), the anchor AP 300 transmits the handover request to the drift AP #1 (400-1) (S202).

The drift AP #1 (400-1) transmits this handover request to the drift AP #2 (400-2) which is a target node (S203). For example, the route information to indicate the transmission destination of the handover request (route information on optimum route) is attached by the anchor AP 300, and the drift AP #1 (400-1) can transmit the handover request to the drift AP #2 (400-2) according to this route information.

When the drift AP #2 (400-2) receives the handover request, the drift AP #2 (400-2) transmits the handover request Ack to the drift AP #1 (400-1) (S204). For example, the drift AP #2 (400-2) also attaches the route information attached to the handover request to the handover request Ack and transmits the handover request Ack.

The drift AP #1 (400-1) transmits the handover request Ack received from the drift AP #2 (400-2) to the anchor AP 300 (S205). For example, the drift AP #1 (400-1) can transmit the handover request Ack to the anchor AP 300 according to the route information attached to the handover request Ack. Hereafter a known handover processing, for example, is performed.

As illustrated in FIG. 40, in this example as well, the route selection processing is performed by the anchor AP 300, and processing in the drift AP #2 (400-2) to the drift AP #4 (400-4) and the terminal 500 can be decreased compared with the case of the drift AP #2 (400-2) to the drift AP #4 (400-4) and the terminal 500 performing the route selection processing. As a result of decreasing the processing, information flow through the ad hoc network system 10 is not interrupted by the processing related to the route selection.

[Other embodiments]

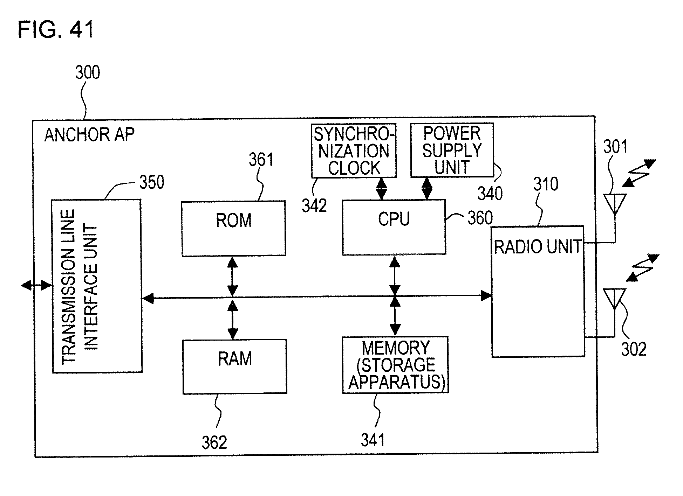

Other embodiments will now be described. FIG. 41 to FIG. 42B illustrate configuration examples of a hardware block of the anchor AP 300, the drift AP 400 (or a terminal 500) and the MME 200 respectively.

As illustrated in FIG. 41, the anchor AP 300 includes a CPU 360, a ROM (Read Only Memory) 361, and a RAM (Random Access Memory) 362. In the configuration example of the hardware block of the anchor AP 300 in FIG. 41, the CPU 360 corresponds to the control unit 370 according to the first embodiment, for example.

The CPU 360 corresponds to the control unit 320 of the anchor AP 300 according to the second embodiment, for example. In other words, for example, the CPU 360 corresponds to the signal generation unit 321, the signal analysis unit 322, the processing unit 323, the data transmission unit 324, and the control information reception unit 325 according to the second embodiment. The CPU 360 can read a program stored in the ROM 361, load the program in the RAM 362, and execute the program. For example, the processing executed by the processing unit 323 can be implemented by executing the program in the CPU 360.

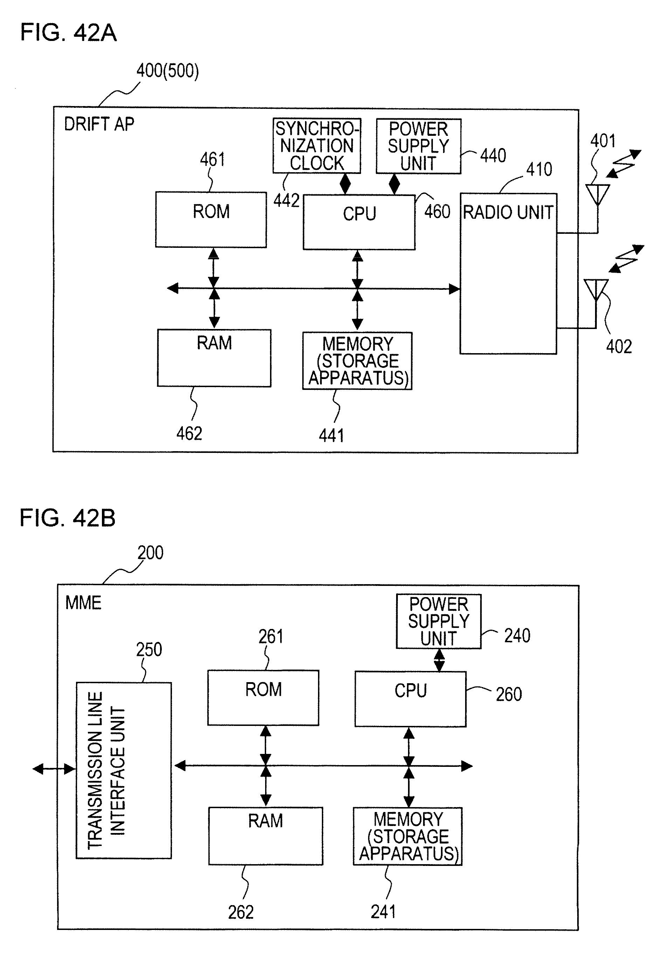

FIG. 42A illustrates a configuration example of a hardware block of the drift AP 400 (or terminal 500). The drift AP 400 includes a CPU 460, a ROM 461, and a RAM 462. The CPU 460 corresponds to the control unit 420 of the drift AP 400 according to the second embodiment, for example. In other words, for example, the CPU 460 corresponds to the signal generation unit 421, the signal analysis unit 422 and the processing unit 423 according to the second embodiment. The CPU 460 can read a program stored in the ROM 461 and load the program in RAM 462, and execute the program. The processing executed by the processing unit 423 can be implemented by executing the program in the CPU 460. The configuration example of the hardware block of the drift AP 400 (or terminal 500) in FIG. 42 corresponds to the second, third and fourth node apparatuses 400-1 to 400-3 in the first embodiment respectively, and can be implemented in each apparatus.

FIG. 42B illustrates a configuration example of a hardware block of the MME 200. The MME 200 includes a CPU 260, a ROM 261, and a RAM 262. The CPU 260 corresponds to the control unit 220 of the MME 200 according to the second embodiment, for example. The CPU 260 can read a program stored in the ROM 261, load the program in the RAM 262, and execute the program. The processing executed by the control unit 220 can be implemented by executing the program in the CPU 260.

The present invention can provide a communication network system and a node apparatus which can reduce processing for a route selection, and a route selection method used for the communication network. The present invention can also provide a communication network system and a node apparatus which can guarantee security, and a route selection method used for the communication network system. In any of the above aspects, the various features may be implemented in hardware, or as software modules running on one or more processors. Features of one aspect may be applied to any of the other aspects. The present invention can also provide a computer program or a computer program product for carrying out any of the methods described herein, and a computer-readable medium having stored thereon a program for carrying out any of the methods described herein. A computer program embodying the invention may be stored on a computer-readable medium, or it could, for example be in the form of a signal such as a downloadable data signal provided from an Internet website, or it could be in any other form.

**Claims**

1. A communication network system comprising:

   a first node apparatus which is connected to a network;
   a second and third node apparatuses which perform radio communication with the first node apparatus; and
   a fourth node apparatus which performs radio communication with the first node apparatus via the second node apparatus or the third node apparatus, wherein
   the first node apparatus includes a control unit which determines a route selection rule for a first route reaching the fourth node apparatus via the second node apparatus and a second route reaching the fourth node apparatus via the third node apparatus, based on an adaptability indicating a reference of the route selection to route selection indicators indicating a state of the first and second routes respectively, and selects the first route or the second route according to the determined route selection rule, and

the first and fourth node apparatuses perform the radio communication via the second node apparatus or the third node apparatus located on the selected first route or second route.

2. The communication network system according to Claim 1, wherein
the control unit selects the first route or the second route when the fourth node apparatus performs handover to the second or third node apparatus, and
the first radio unit transmits a handover request message to the second or third node apparatus located on the selected first or second route.

3. The communication network system according to Claim 1 or Claim 2, wherein
the second and third node apparatuses respectively transmit to the first node apparatus the route selection indicator observed in between the second and third node apparatuses and the first node apparatus respectively,
the fourth node apparatus transmits route selection indicator observed in between the fourth node apparatus and the second and third node apparatuses, to the first node apparatus respectively via the second and third node apparatuses, and
the control unit determines the route selection rule based on the adaptability to the route selection indicators transmitted from the second, third, and fourth node apparatuses respectively.

4. The communication network system according any one of Claims 1 to 3, wherein
the control unit determines the route selection rule based on the adaptability to the route selection indicator indicating the route states of the first, second and a third routes respectively when there is the third route reaching the fourth node apparatus via a fifth node apparatus connected to the network, and selects the first, second, or third route according to the determined route selection rule.

5. The communication network system according to Claim 4, wherein
the second and third node apparatuses transmit to the first node apparatus route selection indicator observed in between the second and third node apparatuses and the first node apparatus respectively,
the fourth node apparatus transmits route selection indicator observed in between the fourth node apparatus and the second and third node apparatuses, to the first node apparatus via the second and the third node apparatuses respectively, and transmits the route selection indicator observed in between the fourth node apparatus and the fifth node apparatus, to the first node apparatus via the fifth node apparatus, and
the control unit determines the route selection rule based on the adaptability to the route selection indicators transmitted from the second, third, and fourth node apparatuses respectively.

6. The communication network system according to Claim 4 or Claim 5, wherein
the fifth node apparatus transmits to the first node apparatus an adjacent relationship list indicating a communication relationship with the fourth node apparatus via the third route, and
the control unit requests observation of the route selection indicator to the fourth node apparatus via the fifth node apparatus based on the adjacent relationship list.

7. The communication network system according to any one of Claims 4 to 6, further comprising a storage unit which stores a route management table, wherein
the route management table stores the route selection indicators transmitted from the second, third, and fourth node apparatuses respectively, and
the control unit generates the route management table and stores in the storage unit based on the adjacent relationship list transmitted from the fifth node apparatus.

8. The communication network system according to any preceding Claim, wherein
the control unit determines the route selection rule based on the adaptability to the route selection indicator generated by weighting the route selection indicator.

9. The communication network system according to any preceding Claim, wherein
the control unit weights the first and second route selection indicators respectively, when the first and second route selection indicators are included in the route selection indicators and determines the route selection rule based on the adaptability to the weighted first and second route selection indicators.

10. A node apparatus connected to a network, for performing radio communication with first and second node apparatuses and performing radio communication with a third node apparatus via the first and second node apparatuses, the node apparatus comprising:

a control unit which determines a route selection rule for a first route reaching the third node apparatus via the first node apparatus and a second route reaching the third node apparatus via the second node apparatus, based on an adaptability indicating a reference of the route selection used to route selection indicators indicating a state of the first and second routes respectively, and selects the first route or the second route according to the determined route selection rule; and
a radio unit which performs a radio communication with the third node apparatus via the first node apparatus or the second node apparatus located on the selected first route or second route.

11. A route selection method in a communication network system including a first node apparatus connected to a network, a second and third node apparatuses which perform radio communication with the first node apparatus, and a fourth node apparatus which performs radio communication with the first node apparatus via the second node apparatus or the third node apparatus, the method comprising:

determining a route selection rule for a first route reaching the fourth node apparatus via the second node apparatus and a second route reaching the fourth node apparatus via the third node apparatus, based on an adaptability indicating a reference of the route selection to route selection indicators indicating a state of the first and second routes respectively, and selecting the first route or the second route according to the determined route selection rule, by the first node apparatus; and
performing the radio communication via the second node apparatus or the third node apparatus located on the selected first route or second route, by the first node apparatus and the fourth node apparatus.

FIG. 1

COMMUNICATION NETWORK SYSTEM 10

FIG. 2

AD HOC NETWORK SYSTEM 10

FIG. 3A

FIG. 3B

FIG. 4

300

ANCHOR AP

350 — TRANSMISSION LINE INTERFACE UNIT

320 — CONTROL UNIT

324 — DATA TRANS-MISSION UNIT

325 — CONTROL INFORMATION RECEPTION UNIT

323 — PROCESSING UNIT

321 — SIGNAL GENER-ATION UNIT

322 — SIGNAL ANALY-SIS UNIT

310 — RADIO UNIT

311 — TRANS-MISSION UNIT

312 — RECEP-TION UNIT

301

302

342 — SYNCHRO-NIZATION CLOCK

341 — MEMORY (STORAGE APPARATUS)

340 — POWER SUPPLY UNIT

## FIG. 5A

400 (500)

DRIFT AP

420

CONTROL UNIT

PROCESSING UNIT

423

SIGNAL GENER-ATION UNIT — 421

SIGNAL ANALY-SIS UNIT — 422

410

RADIO UNIT

TRANS-MISSION UNIT — 411

RECEP-TION UNIT — 412

401

402

442

SYNCHRO-NIZATION CLOCK

441

MEMORY (STORAGE APPARATUS)

POWER SUPPLY UNIT — 440

## FIG. 5B

200

MME

TRANSMISSION LINE INTERFACE UNIT — 250

220

CONTROL UNIT

MEMORY (STORAGE APPARATUS)

241

POWER SUPPLY UNIT

240

FIG. 6

```
                    START              S10

                   INITIAL SET         S12

              MEASUREMENT      S137   ROUTE
              REPORT REQUEST           QUALITY    S13
                                       INDEX
              MEASUREMENT              MEASUREMENT
              REPORT RECEPTION   S138

      S14   MANAGEMENT DOCUMENT
            ADDITIONAL GENERATION

                   MEASUREMENT
                   EVENT EXTRACTION

      S15
                   EXTRACTED
            NO    CONDITION ≥ Q?
                               S16
                        YES
                   RECEIVE
                   HO REQUEST?
            NO                 S17
                        YES
      S18   EXTRACTION RESULT
            EVALUATION

      S19   OPTIMUM ROUTE DECISION                    A      S22

                                                   END OF CALL   S23
                   HO REQUEST

                         S20  S21                   RELEASE
                   CONTEXT RELEASE

                                                      END


                          A                           S24
```

FIG. 7

```
                    ┌──────────────┐
                    │    START     │ ⌐ S30
                    └──────┬───────┘
                           │
                           ▼
          ┌────────────────────────────────────┐
          │  MEASUREMENT REPORT REQ            │ ⌐ S31
          │ (BETWEEN ANCHOR AP AND DRIFT AP)   │
          └────────────────┬───────────────────┘
                           │
          ┌────────────────┼──────────────────────────┐
          │    ┌───────────┘                           │
          │    │           ▼                           │
          │    │  ┌──────────────────────────┐  ⌐ S33  │
          │    │  │  MEASUREMENT REPORT REQ   │         │
          │    │  │ (SUBORDINATE TO DRIFT AP) │         │
          │    │  └────────────┬─────────────┘         │
          │    │               ▼          ⌐ S34         │
          │    │  ┌──────────────────────────────────┐ │
          │    │  │  MEASUREMENT REPORT (BETWEEN      │ │
          │    │  │ TERMINALS ETC. SUBORDINATE TO     │ │
          │    │  │         DRIFT AP)                 │ │
          │    │  └────────────┬─────────────────────┘ │
          │    │               ▼        ⌐ S35           │
          │    │        ◇───────────────◇              │
          │  NO└────────│  PREDETERMINED  │             │
          │             │    QUALITY?     │             │
          │             ◇───────┬─────────◇             │
          │                  YES│                       │
          │                     ▼         ⌐ S36         │
          │        ┌─────────────────────────┐         │
          │        │ MEASUREMENT RESULT EDIT  │         │
          │        └────────────┬────────────┘         │
          │                     ▼          ⌐ S37        │
          │      ┌──────────────────────────────────┐  │
          │      │  MEASUREMENT REPORT (BETWEEN      │  │
          │      │    ANCHOR AP AND DRIFT AP)        │  │
          │      └────────────┬─────────────────────┘  │
          └───────────────────┼───────────────────────┘
                              ▼
                    ┌──────────────┐
                    │     END      │ ⌐ S38
                    └──────────────┘
```

# FIG. 8A

CORE NETWORK ～100

300 ～ ANCHOR AP

SEARCH SPACE
OF ANCHOR AP

DRIFT AP

400

# FIG. 8B

DRIFT AP          ANCHOR AP          MME

ATTACH REQ
(S40)

ATTACH REQ (S41)

ATTACH ACCEPT (S42)

RECOGNIZE NEW DRIFT AP IN
SEARCH SPACE OF ANCHOR A AND
UPDATE ASSIGNED IP ADDRESS
MANAGEMENT TABLE TO "USED"

S43

S45          ATTACH ACCEPT          (S44)
(CONNECTION RECONFIGURATION)

ACQUIRE IP ADDRESS          (S46)

(CONNECTION RECONFIGURATION COMPLETE)

ATTACH COMPLETE (S47)

(INITIAL CONTEXT SETUP RESPONSE)

GENERATE FINAL DRIFT
AP MANAGEMENT TABLE          S48

COMMUNICATION ESTABLISHED (S49)

FIG. 9

START — S50

↓

RECEIVE ATTACH REQ — S51

↓

S52

RECEIVE ATTACH ACCEPT? — NO → RECEIVE ATTACH REJECT — S57

↓ YES                              ↓

DETERMINE ASSIGNED IP ADDRESS BY IP ADDRESS MANAGEMENT TABLE AND TRANSMIT ATTACH ACCEPT (TRANSMIT CONNECTION RECONFIGURATION) — S53 (S43)

RECOGNIZE OVERLAP OF SEARCH SPACE OF THIS DRIFT AP AND ADJACENT ANCHOR AP

S58

↓

RECEIVE CONNECTION RECONFIGURATION COMPLETE — S54(S44)

↓

TRANSMIT ATTACH COMPLETE — S55(S47)

↓

END — S56

## FIG. 10A

USE
IDENTIFIER
(USED/
OPEN)

| ANCHOR AP IDENTIFIER |
|---|
| IP ADDRESS #1 |
| IP ADDRESS #2 |
| IP ADDRESS #3 |
| ⋮ |

## FIG. 10B

| ASSIGNING SOURCE Ap#a IDENTIFIER |
|---|
| ASSIGNED IP ADDRESS #a1 |
| ASSIGNED IP ADDRESS #a1 |
| ⋮ |
| ASSIGNING SOURCE Ap#b IDENTIFIER |
| ASSIGNED IP ADDRESS #b1 |
| ⋮ |

IP ADDRESS
ASSIGNED BY AP#a
(MANAGEMENT
SOURCE)

IP ADDRESS
ASSIGNED BY AP#b
(MANAGEMENT
SOURCE)

41

FIG. 11

CORE NETWORK ~ 100

300

ANCHOR AP

400-1

DRIFT AP#1

SEARCH
SPACE OF
ANCHOR AP

NEWLY ADDED DRIFT AP#11

400-11

FIG. 12

## FIG. 13A

CORE NETWORK ⌒100

300

ANCHOR AP

SEARCH SPACE
OF ANCHOR AP

DRIFT AP OF WHICH
REGISTRATION IS DELETED

400

## FIG. 13B

DRIFT AP      ANCHOR AP      MME

DURING COMMUNICATION (S80)

DETACH REQ
(S81)

DETACH REQ (S82)

DETACH ACCEPT (S83)

UPDATE MANAGEMENT TABLE OF
IP ADDRESS WHICH ANCHOR AP
ASSIGNED TO DRIFT AP IN
"SEARCH SPACE" TO "OPEN"

S84

DETACH ACCEPT
(S85)

RRC CONNECTION
RELEASE
(S86)

CONNECTION RELEASE
(S87)

FIG. 14

START — S90

↓

RECEIVE DETACH REQ — S91

↓

DELETE ASSIGNED IP ADDRESS FROM
IP ADDRESS MANAGEMENT TABLE
AND TRANSMIT DETACH ACCEPT — S92
(S84)

↓

RELEASE RRC CONNECTION
AND RELEASE CONNECTION — S93
(S86, S87)

↓

END — S94

FIG. 15

300-a

CORE NETWORK ～100

300-b

ANCHOR AP#a

ANCHOR AP#b

SEARCH SPACE
OF ANCHOR AP#a

SEARCH SPACE
OF ANCHOR AP#b

～400

NEWLY ADDED DRIFT AP#1

FIG. 16

DRIFT AP#1      ANCHOR AP#a      ANCHOR AP#b      MME

ATTACH REQ (S90)

ATTACH REQ (S91)

EXCLUSIVE PROCESSING (S93)

S92

ATTACH ACCEPT

RECOGNIZE NEW DRIFT AP IN SEARCH SPACE OF ANCHOR AP#a AND UPDATE ASSIGNED IP ADDRESS MANAGEMENT TABLE TO "USED"

S94

ATTACH ACCEPT (S95)
(CONNECTION RECONFIGURATION)

ACQUIRE IP ADDRESS

S96

(S97)
(CONNECTION RECONFIGURATION COMPLETE)

ATTACH REJECT (S98)

(S99)
(INITIAL CONTEXT SETUP RESPONSE)

SET UP REQUEST (S100)

SET UP RESPONSE (S101)

S102

S103

GENERATE FINAL DRIFT AP MANAGEMENT TABLE (GENERATE ADJACENT RELATIONSHIP OF DRIFT AP)

NOTIFY ANCHOR AP#b IP ADDRESS ASSIGNED TO DRIFT AP#1 BY ANCHOR AP#a

(S104)

ATTACH COMPLETE
(INITIAL CONTEXT SETUP RESPONSE)

COMMUNICATION ESTABLISHMENT (S105)

FIG. 17

CORE NETWORK ~ 100

SEARCH SPACE
OF ANCHOR AP#a

SEARCH SPACE
OF ANCHOR AP#b

300-a

ANCHOR AP#a

ANCHOR AP#b

300-b

400-1

DRIFT AP#1

DRIFT AP#2

400-11

400-2

NEWLY ADDED DRIFT AP#11

## FIG. 18

DRIFT AP#11    DRIFT AP#1    DRIFT AP#2    ANCHOR AP#a    ANCHOR AP#b    MME

ATTACH REQ (S110)

ATTACH REQ
(S111)

S112

S94

EXCLUSIVE
PROCESSING

ATTACH ACCEPT (S115)                    ATTACH ACCEPT (S113)

(CONNECTION RECONFIGURATION)

ATTACH REJECT

(S117)

(S116)                    ATTACH REJECT

(CONNECTION RECONFIGURATION
COMPLETE)                    (ATTACH COMPLETE) (S118)

S96

(INITIAL CONTEXT SETUP
RESPONSE)

SET UP REQ    (S119)

SET UP RESPONSE    S121

(S120)

NOTIFY TO ANCHOR AP#b
IP ADDRESS ASSIGNED
TO DRIFT AP#11 BY
ANCHOR AP#a

(S122)    SET UP REQ

SET UP RESPONSE

(S123)

ANCHOR AP#b NOTIFIES
TO DRIFT AP#2 IP ADDRESS
ASSIGNED TO DRIFT AP#11

S125

S124

GENERATE FINAL DRIFT
AP MANAGEMENT TABLE
(GENERATE ADJACENT
RELATIONSHIP OF
DRIFT AP)

COMMUNICATION ESTABLISHMENT (S126)

# FIG. 19

START — S130

↓

MANAGE DRIFT AP REGISTERED BASED ON SEARCH SPACE OF ANCHOR AP — S131

↓

GENERATE ADJACENT RELATIONSHIP LIST TO INDICATE ADJACENT RELATIONSHIP OF EACH ANCHOR AP — S132

↓

ADD INFORMATION OF DRIFT AP SUBORDINATE TO ANCHOR AP TO GENERATED ADJACENT RELATIONSHIP LIST — S133

↓

DETECT (OR RECOGNIZE) ADJACENT RELATIONSHIP OF DRIFT AP EXTENDING OVER SEARCH SPACES — S134

↓

ADD ADJACENT POSSIBLE DRIFT AP INFORMATION TO DRIFT AP ROUTE MANAGEMENT TABLE (FINAL DRIFT AP ROUTE MANAGEMENT TABLE COMPLETION) — S135

↓

END — S136

## FIG. 20A

| |
|---|
| ANCHOR AP#a IDENTIFIER |
| MEASURED RESULT LOG BETWEEN ANCHOR AP#a AND TERMINAL |
| DRIFT AP#1 IDENTIFIER |
| MEASURED RESULT LOG BETWEEN ANCHOR AP#a AND DRIFT AP#1 |

| |
|---|
| DRIFT AP#1 IDENTIFIER |
| MEASURED RESULT LOG BETWEEN DRIFT AP#1 AND TERMINAL |

## FIG. 20B

| |
|---|
| ANCHOR AP#a IDENTIFIER |
| MEASURED RESULT LOG BETWEEN ANCHOR AP#a AND TERMINAL |
| DRIFT AP#1 IDENTIFIER |

| |
|---|
| DRIFT AP#1 IDENTIFIER |
| MEASURED RESULT LOG BETWEEN DRIFT AP#1 AND TERMINAL |
| DRIFT AP#11 IDENTIFIER |
| MEASURED RESULT LOG BETWEEN DRIFT AP#1 AND DRIFT AP#11 |

| |
|---|
| DRIFT AP#11 IDENTIFIER |
| ⋮ |
| DRIFT AP#111 IDENTIFIER |
| ⋮ |

FIG. 21

## FIG. 22

| ANCHOR AP#a IDENTIFIER |
|---|
| MEASURED RESULT LOG BETWEEN ANCHOR AP#a AND TERMINAL |
| DRIFT AP#1 IDENTIFIER |
| MEASURED RESULT LOG BETWEEN ANCHOR AP#a AND DRIFT AP#1 |
| DRIFT AP#2 IDENTIFIER |
| MEASURED RESULT LOG BETWEEN ANCHOR AP#a AND DRIFT AP#2 |
| DRIFT AP#3 IDENTIFIER |
| MEASURED RESULT LOG BETWEEN ANCHOR AP#a AND DRIFT AP#3 |

| DRIFT AP#1 IDENTIFIER |
|---|
| MEASURED RESULT LOG BETWEEN DRIFT AP#1 AND TERMINAL |
| MEASURED RESULT LOG BETWEEN DRIFT AP#1 AND DRIFT AP#2 |
| MEASURED RESULT LOG BETWEEN DRIFT AP#1 AND DRIFT AP#3 |

| DRIFT AP#2 IDENTIFIER |
|---|
| MEASURED RESULT LOG BETWEEN DRIFT AP#2 AND TERMINAL |
| MEASURED RESULT LOG BETWEEN DRIFT AP#2 AND DRIFT AP#1 |
| MEASURED RESULT LOG BETWEEN DRIFT AP#2 AND DRIFT AP#3 |

| DRIFT AP#3 IDENTIFIER |
|---|
| MEASURED RESULT LOG BETWEEN DRIFT AP#3 AND TERMINAL |
| MEASURED RESULT LOG BETWEEN DRIFT AP#3 AND DRIFT AP#1 |
| MEASURED RESULT LOG BETWEEN DRIFT AP#3 AND DRIFT AP#2 |

# FIG. 23

| ANCHOR AP#b IDENTIFIER |
|---|
| MEASURED RESULT LOG BETWEEN ANCHOR AP#b AND TERMINAL |
| DRIFT AP#4 IDENTIFIER |
| MEASURED RESULT LOG BETWEEN ANCHOR AP#b AND DRIFT AP#4 |
| DRIFT AP#5 IDENTIFIER |
| MEASURED RESULT LOG BETWEEN ANCHOR AP#b AND DRIFT AP#5 |

| DRIFT AP#4 IDENTIFIER |
|---|
| MEASURED RESULT LOG BETWEEN DRIFT AP#4 AND TERMINAL |
| MEASURED RESULT LOG BETWEEN DRIFT AP#4 AND DRIFT AP#5 |

| DRIFT AP#5 IDENTIFIER |
|---|
| MEASURED RESULT LOG BETWEEN DRIFT AP#5 AND TERMINAL |
| MEASURED RESULT LOG BETWEEN DRIFT AP#5 AND DRIFT AP#4 |

FIG. 24

ANCHOR AP#aa

300-aa

(E)

(G)

(F)

(A)

DRIFT AP#d1

DRIFT AP#d3

500

TERMINAL

(B)

(D)

400-d1

(C)

400-d3

(J)

(H)

(I)

400-d2

DRIFT AP#d2

## FIG. 25

COMMUNICATION STATE [CONNECT/STANDBY]

| ID=AP#aa | ANCHOR AP#aa IDENTIFIER |
| QUALITY INDEX *3 | BETWEEN ANCHOR AP#aa AND UE |
| ID=AP#d1 | BETWEEN ANCHOR AP AND DRIFT AP#d1 |
| QUALITY INDEX | |
| ID=AP#d2 | BETWEEN ANCHOR AP AND DRIFT AP#d2 |
| QUALITY INDEX | |
| ID=AP#dn | BETWEEN ANCHOR AP AND DRIFT AP#dn |
| QUALITY INDEX | |

*1

BETWEEN DRIFT AP#d1 AND UE

| ID=AP#d1 |
| QUALITY INDEX |
| ID=AP#d11 |
| QUALITY INDEX |
| ID=AP#d12 |
| QUALITY INDEX |
| ID=AP#d13 |
| QUALITY INDEX |

BETWEEN DRIFT AP#d1 AND DRIFT AP#d11

BETWEEN DRIFT AP#d1 AND DRIFT AP#d12

BETWEEN DRIFT AP#d1 AND DRIFT AP#d13

*2

| ID=AP#d2 |
| QUALITY INDEX |
| ID=AP#d21 |
| QUALITY INDEX |
| ID=AP#d22 |
| QUALITY INDEX |
| ID=AP#d23 |
| QUALITY INDEX |

*2

| ID=AP#d11 |
| QUALITY INDEX |
| ID=AP#d111 |
| QUALITY INDEX |
| ID=AP#d112 |
| QUALITY INDEX |
| ID=AP#d113 |
| QUALITY INDEX |

*2

(*1) LIST OF DRIFT AP SUBORDINATE TO ANCHOR AP OR CANDIDATE DRIFT AP
(*2) LIST OF DRIFT AP SUBORDINATE TO DRIFT AP OR CANDIDATE DRIFT AP
(*3) NOT LIMITED TO MEASUREMENT DATA OF TRANSMISSION QUALITY IN RADIO BLOCK
(E.G. INCLUDES NUMBER OF HOPS AND REMAINING RATIO OF RATIO RESOURCE)

FIG. 26A

ADJACENT RELATIONSHIP LIST
GENERATED IN SEARCH SPACE OF ANCHOR AP#a

| |
|---|
| ANCHOR AP#a, IDENTIFIER |
| DRIFT AP SUBORDINATE TO ANCHOR AP#a, |
| ADJACENT ANCHOR AP (ANCHOR AP#b) IDENTIFIER |
| ADJACENT ANCHOR AP (OPEN) IDENTIFIER |
| ADJACENT ANCHOR AP (OPEN) IDENTIFIER |
| ⋮ |

FIG. 26B

ADJACENT RELATIONSHIP LIST
GENERATED IN SEARCH SPACE OF ANCHOR AP#b

| |
|---|
| ANCHOR AP#b, IDENTIFIER |
| DRIFT AP SUBORDINATE TO ANCHOR AP#b, |
| ADJACENT ANCHOR AP (ANCHOR AP#a) IDENTIFIER |
| ADJACENT ANCHOR AP (OPEN) IDENTIFIER |
| ADJACENT ANCHOR AP (OPEN) IDENTIFIER |
| ⋮ |

## FIG. 27A

| ANCHOR AP#a IDENTIFIER |
| --- |
| DRIFT AP LIST SUBORDINATE TO ANCHOR AP#a |
| ADJACENT ANCHOR AP (ANCHOR AP#b) IDENTIFIER |
| ADJACENT ANCHOR AP (OPEN) IDENTIFIER |
| ADJACENT ANCHOR AP (OPEN) IDENTIFIER |
| ⋮ |

| DRIFT AP#1 IDENTIFIER |
| --- |
| DRIFT AP LIST (OPEN) SUBORDINATE TO DRIFT AP#1 |
| DRIFT AP#2 IDENTIFIER |
| DRIFT AP LIST (OPEN) SUBORDINATE TO DRIFT AP#2 |
| DRIFT AP#3 IDENTIFIER |
| DRIFT AP LIST (OPEN) SUBORDINATE TO DRIFT AP#3 |

## FIG. 27B

| ANCHOR AP#b IDENTIFIER |
| --- |
| DRIFT AP LIST SUBORDINATE TO ANCHOR AP#b |
| ADJACENT ANCHOR AP (ANCHOR AP#a) IDENTIFIER |
| ADJACENT ANCHOR AP (OPEN) IDENTIFIER |
| ADJACENT ANCHOR AP (OPEN) IDENTIFIER |
| ⋮ |

| DRIFT AP#4 IDENTIFIER |
| --- |
| DRIFT AP LIST (OPEN) SUBORDINATE TO DRIFT AP#4 |
| DRIFT AP#5 IDENTIFIER |
| DRIFT AP LIST (OPEN) SUBORDINATE TO DRIFT AP#5 |

**FIG. 28A**

ANCHOR AP#a IDENTIFIER
DRIFT AP SUBORDINATE TO ANCHOR AP#a
ADJACENT ANCHOR AP (ANCHOR AP#b) IDENTIFIER
ADJACENT ANCHOR AP (ANCHOR AP#c) IDENTIFIER
ADJACENT ANCHOR AP (ANCHOR AP#d) IDENTIFIER
.....

DRIFT AP#a1 IDENTIFIER
DRIFT AP SUBORDINATE TO DRIFT AP#a1
DRIFT AP#a2 IDENTIFIER
DRIFT AP SUBORDINATE TO DRIFT AP#a2
DRIFT AP#a3 IDENTIFIER
DRIFT AP SUBORDINATE TO DRIFT AP#a3
.....

DRIFT AP#a11 IDENTIFIER
DRIFT AP SUBORDINATE TO DRIFT AP#a11
DRIFT AP#a12 IDENTIFIER
DRIFT AP SUBORDINATE TO DRIFT AP#a12
.....

DRIFT AP#a21 IDENTIFIER
DRIFT AP SUBORDINATE TO DRIFT AP#a21
DRIFT AP#a22 IDENTIFIER
DRIFT AP SUBORDINATE TO DRIFT AP#a22
.....

DRIFT AP#a31 IDENTIFIER
DRIFT AP SUBORDINATE TO DRIFT AP#a31
DRIFT AP#a32 IDENTIFIER
DRIFT AP SUBORDINATE TO DRIFT AP#a32
.....

**FIG. 28B**

ANCHOR AP#b IDENTIFIER
DRIFT AP SUBORDINATE TO ANCHOR AP#b
ADJACENT ANCHOR AP (ANCHOR AP#a) IDENTIFIER
ADJACENT ANCHOR AP (ANCHOR AP#c) IDENTIFIER
ADJACENT ANCHOR AP (ANCHOR AP#d) IDENTIFIER
.....

DRIFT AP#b1 IDENTIFIER
DRIFT AP SUBORDINATE TO DRIFT AP#b1
DRIFT AP#b2 IDENTIFIER
DRIFT AP SUBORDINATE TO DRIFT AP#b2
DRIFT AP#b3 IDENTIFIER
DRIFT AP SUBORDINATE TO DRIFT AP#b3
.....

## FIG. 29

| ANCHOR AP#a IDENTIFIER |
|---|
| MEASURED RESULT LOG BETWEEN ANCHOR AP#a AND TERMINAL |
| DRIFT AP#1 IDENTIFIER |
| MEASURED RESULT LOG BETWEEN ANCHOR AP#a AND DRIFT AP#1 |
| DRIFT AP#2 IDENTIFIER |
| MEASURED RESULT LOG BETWEEN ANCHOR AP#a AND DRIFT AP#2 |
| DRIFT AP#3 IDENTIFIER |
| MEASURED RESULT LOG BETWEEN ANCHOR AP#a AND DRIFT AP#3 |

| DRIFT AP#1 IDENTIFIER |
|---|
| MEASURED RESULT LOG BETWEEN DRIFT AP#1 AND TERMINAL |
| MEASURED RESULT LOG BETWEEN DRIFT AP#1 AND DRIFT AP#2 |
| MEASURED RESULT LOG BETWEEN DRIFT AP#1 AND DRIFT AP#3 |
| MEASURED RESULT LOG BETWEEN DRIFT AP#1 AND DRIFT AP#4 |
| MEASURED RESULT LOG BETWEEN DRIFT AP#1 AND DRIFT AP#5 |

| DRIFT AP#2 IDENTIFIER |
|---|
| MEASURED RESULT LOG BETWEEN DRIFT AP#2 AND TERMINAL |
| MEASURED RESULT LOG BETWEEN DRIFT AP#2 AND DRIFT AP#1 |
| MEASURED RESULT LOG BETWEEN DRIFT AP#2 AND DRIFT AP#3 |
| MEASURED RESULT LOG BETWEEN DRIFT AP#2 AND DRIFT AP#4 |
| MEASURED RESULT LOG BETWEEN DRIFT AP#2 AND DRIFT AP#5 |

| DRIFT AP#3 IDENTIFIER |
|---|
| MEASURED RESULT LOG BETWEEN DRIFT AP#3 AND TERMINAL |
| MEASURED RESULT LOG BETWEEN DRIFT AP#3 AND DRIFT AP#1 |
| MEASURED RESULT LOG BETWEEN DRIFT AP#3 AND DRIFT AP#2 |
| MEASURED RESULT LOG BETWEEN DRIFT AP#3 AND DRIFT AP#4 |
| MEASURED RESULT LOG BETWEEN DRIFT AP#3 AND DRIFT AP#5 |

## FIG. 30

| ANCHOR AP#b IDENTIFIER |
| --- |
| MEASURED RESULT LOG BETWEEN ANCHOR AP#b AND TERMINAL |
| DRIFT AP#4 IDENTIFIER |
| MEASURED RESULT LOG BETWEEN ANCHOR AP#b AND DRIFT AP#4 |
| DRIFT AP#5 IDENTIFIER |
| MEASURED RESULT LOG BETWEEN ANCHOR AP#b AND DRIFT AP#5 |

| DRIFT AP#4 IDENTIFIER |
| --- |
| MEASURED RESULT LOG BETWEEN DRIFT AP#4 AND TERMINAL |
| MEASURED RESULT LOG BETWEEN DRIFT AP#4 AND DRIFT AP#5 |
| MEASURED RESULT LOG BETWEEN DRIFT AP#4 AND DRIFT AP#1 |
| MEASURED RESULT LOG BETWEEN DRIFT AP#4 AND DRIFT AP#2 |
| MEASURED RESULT LOG BETWEEN DRIFT AP#4 AND DRIFT AP#3 |

| DRIFT AP#5 IDENTIFIER |
| --- |
| MEASURED RESULT LOG BETWEEN DRIFT AP#5 AND TERMINAL |
| MEASURED RESULT LOG BETWEEN DRIFT AP#5 AND DRIFT AP#4 |
| MEASURED RESULT LOG BETWEEN DRIFT AP#5 AND DRIFT AP#1 |
| MEASURED RESULT LOG BETWEEN DRIFT AP#5 AND DRIFT AP#2 |
| MEASURED RESULT LOG BETWEEN DRIFT AP#5 AND DRIFT AP#3 |

FIG. 31A

NODE Vi ⟷ NODE Vj

wi          wj

FIG. 31B

NODE V  w

NODE V'      NODE V"

w'                    w"

$w' \geq \theta - w$          $w'' \geq \theta - w$

FIG. 31C

NODE V  w

NODE V'      NODE V"

w'                    w"

$w' \geq \theta - w$          $w'' \geq \theta - w, \theta - w'$

FIG. 32

$w' \geqq \theta - w$          $\theta - w > w'' > \theta - w$

FIG. 33

| | WIDTH OF AREA $\alpha$ = h(A) | WIDTH OF AREA $\beta$ = h(B) - h(C) | WIDTH OF AREA $\gamma$ = h(C) - h(B) | TOTAL EVALUATION VALUE |
|---|---|---|---|---|
| | $\mu(\{A、B、C\})$ | $\mu(\{B、C\})$ | $\mu(\{C\})$ | |
| $\varepsilon$ = 1 | 1 (40) | 1 (20) | 1 (20) | 80 (HIGHEST VALUE) |
| $\varepsilon$ = 0.75 | 1 (40) | 0.865 (17.3) | 0.854 (11.68) | 68.98 |
| $\varepsilon$ = 0.5 | 1 (40) | 0.66 (13.33) | 0.33 (6.66) | 60 (AVERAGE VALUE) |
| $\varepsilon$ = 0 | 1 (40) | 0 (0) | 0 (0) | 40 (LOWEST VALUE) |

FIG. 34A

$$\begin{vmatrix} 1 & 3 \\ 2 & -1 \end{vmatrix} = 1 \times (-1) - 2 \times 3 = -7$$

FIG. 34B

$$\begin{vmatrix} 1 & 2 & 3 \\ 3 & 2 & 1 \\ -1 & -2 & -1 \end{vmatrix} = 1 \times 2 \times (-1) + 3 \times 3 \times (-2) + (-1) \times 2 \times 1$$
$$-3 \times 2 \times (-1) - 2 \times 3 \times (-1) - 1 \times 1 \times (-2) = -8$$

FIG. 35A

|  | ELEMENT (A) | ELEMENT (B) |
|---|---|---|
| INDICATOR (I) | 90 | 20 |
| INDICATOR (II) | 60 | 60 |

FIG. 35B

|  | ELEMENT (A) | ELEMENT (B) |
|---|---|---|
| INDICATOR (I) | 65 | 90 |
| INDICATOR (II) | 90 | 55 |
| INDICATOR (III) | 80 | 70 |

FIG. 35C

|  | ELEMENT (A) | ELEMENT (B) |
|---|---|---|
| INDICATOR (I) | 0.65 | 0.90 |
| INDICATOR (II) | 0.90 | 0.55 |
| INDICATOR (III) | 0.80 | 0.70 |

FIG. 36

AD HOC NETWORK SYSTEM 10

## FIG. 37

| TERMINAL (UE) | ANCHOR AP# | DRIFT AP#1 | DRIFT AP#2 |

MEASUREMENT REPORT REQ FOR ANCHOR AP-UE (S141)

MEASUREMENT REPORT REQ FOR ANCHOR AP- DRIFT AP#1 (S142)

MEASUREMENT REPORT REQ FOR ANCHOR AP-DRIFT AP#2 (S143)

MEASUREMENT REPORT (MEASURED RESULT ANCHOR AP-UE (S144)

MEASUREMENT (MEASURED RESULT ANCHOR AP-DRIFT AP#1 (S145)

MEASUREMENT (MEASURED RESULT ANCHOR AP-DRIFT AP#2 (S146)

PROCESSING IN S14 TO S19

HANDOVER REQ (S147(S20))

S148 SWITCH ROUTE

S149 SWITCH ROUTE

HANDOVER REQ ACK (S150)

CONNECTION RECONFIGURATION (S151)

STATUS TRANSFER (S152)

CONNECTION RECONFIGURATION COMPLETE (S153)

MME

PATH SWITCH REQ (S155)

PATH SWITCH REQ ACK (S156)

CONTEXT RELEASE (S157(S21))

S158 SWITCH ROUTE

## FIG. 38

TERMINAL (UE)　DRIFT AP#2　ANCHOR AP#a　DRIFT AP#3　ANCHOR AP#b　DRIFT AP#4

S12 GENERATE ADJACENT RELATIONSHIP

S12 GENERATE ADJACENT RELATIONSHIP

MEASUREMENT REPORT (MEASURED RESULT DRIFT#2-UE & DRIFT#3-UE & DRIFT#4-UE
(S160)

MEASUREMENT REPORT REQ FOR ANCHOR AP#a-DRIFT#2 (S161)

MEASUREMENT REPORT REQ FOR ANCHOR
(S162) AP#a-DRIFT#3

MEASUREMENT REPORT (MEASURED RESULT ANCHOR AP#a-DRIFT#2)
(S163)

MEASUREMENT REPORT (MEASURED RESULT
(S164) ANCHOR AP#a-DRIFT#3

MME

MEASUREMENT REPORT REQ FOR ANCHOR
(S165) AP#b-DRIFT#3

MEASUREMENT REPORT REQ FOR ANCHOR
AP#b-DRIFT#4
(S166)

MEASUREMENT REPORT (MEASURED RESULT
ANCHOR AP#b-DRIFT#3)
(S167)

MEASUREMENT REPORT (MEASURED RESULT
ANCHOR AP#b-DRIFT#4)
(S168)

PROCESSING IN S14 TO S19

HANDOVER REQUIRED
(S169)
HANDOVER REQ (S170)

S173 HANDOVER REQ ACK
HANDOVER
COMMAND (S171)
(S172)

SWITCH ROUTE

CONNECTION RECONFIGURATION
(S175)
SWITCH ROUTE — S174

(S176) STATUS TRANSFER

CONNECTION RECONFIGURATION COMPLETE
(S177)

HANDOVER NOTIFY
(S178)

CONTEXT RELEASE COMMAND
(S179)

COMMUNICATION ANCHOR AP#b & UE VIA DRIFT#4 & DRIFT#3
(S180)

FIG. 39

## FIG. 40

TERMINAL (UE)　　DRIFT AP#1　　DRIFT AP#2　　DRIFT AP#3　　ANCHOR AP　　MME

(TERMINAL-DRIFT AP#1) (S191)

(TERMINAL-DRIFT AP#2) (S192)

(TERMINAL-DRIFT AP#3) (S193)

(ANCHOR AP-DRIFT AP#1)
(S194)

(ANCHOR AP-DRIFT AP#2)(S195)

(ANCHOR AP-DRIFT AP#3)
(S196)

MEASUREMENT
REPORT
(MEASURED
RESULT) (S190)

MEASUREMENT REPORT REQ FOR DRIFT AP#1-DRIFT AP#2 (S197)

MEASUREMENT REPORT REQ FOR DRIFT AP#2-DRIFT AP#3
(S198)

MEASUREMENT RESULT (DRIFT AP#2-DRIFT AP#3)
(S199)

MEASUREMENT RESULT (DRIFT AP#1-DRIFT AP#2)
(S200)

S201

ROUTE SELECT
PROCESSING

(( SOURCE ))　　(( TARGET ))

QUASI-H/O REQ (S202)

(S203)　　H/O REQ

H/O REQ ACK　(S204)

QUASI-H/O REQ ACK (S205)

CONNECTION RECONFIGURATION (S206)

CONNECTION RECONFIGURATION COMPLETE
(S207)　　STATUS TRANSFER (S208)

(S209)

PATH SWITCH REQ (S210)

(S211)

PATH SWITCH REQ ACK
(S212)

UE CONTEXT RELEASE
(S213)

FIG. 41

EP 2 595 432 A1

FIG. 42A

400(500)

DRIFT AP

| SYNCHRO-NIZATION CLOCK | POWER SUPPLY UNIT | 440 |

461

ROM

442

CPU

460

RADIO UNIT  410

401

402

RAM

462

MEMORY (STORAGE APPARATUS)

441

FIG. 42B

200

MME

250

TRANSMISSION LINE INTERFACE UNIT

261

ROM

POWER SUPPLY UNIT  240

CPU  260

RAM

262

MEMORY (STORAGE APPARATUS)

241

73

Europäisches
Patentamt

European
Patent Office

Office européen
des brevets

# EUROPEAN SEARCH REPORT

Application Number

EP 12 18 0092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENG-SHIH WANG ET AL: "An Effective Path Selection Metric for IEEE 802.16-based Multi-hop Relay Networks", COMPUTERS AND COMMUNICATIONS, 2007. ISCC 2007. IEEE SYMPOSIUM ON, IEEE, PI, 1 July 2007 (2007-07-01), pages 1051-1056, XP031159826, ISBN: 978-1-4244-1520-5 * abstract * * paragraphs [0001], [0003], [03.1] * | 1-11 | INV. H04W40/32 |
| X | EP 1 701 486 A1 (BRITISH TELECOMM [GB]) 13 September 2006 (2006-09-13) * abstract * * paragraphs [0016] - [0018], [0022] - [0024], [0045] - [0049]; claims 1,5,8 * | 1-11 | |
| X | SRENG V ET AL: "Coveragege enhancment through two-hop relaying in cellular radio systems", THESIS SUBMITTED IN FULFILLMENT OF THE REQUIREMENTS FOR THE AWARD OF THE DEGREE MASTER OF ENGINEERING RESEARCH FROM THE UNIVERSITY OF LAUSANNE, SCHOOL OF ELECTRICAL, COMPUTER AND TELECOMMUNICATIONS ENGINEERING, CH, 1 January 2002 (2002-01-01), pages 24-39, XP002986110, * paragraph [3.23.2.2] * | 1-11 | TECHNICAL FIELDS SEARCHED (IPC) H04W |

-/--

The present search report has been drawn up for all claims

| Place of search | Date of completion of the search | Examiner |
|---|---|---|
| Berlin | 11 April 2013 | Goller, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 12 18 0092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YI-TING CHIEN ET AL: "An Alternative-Path Approach to Improve Robustness of TCP Connections in Wireless Mesh Networks", INTELLIGENT INFORMATION HIDING AND MULTIMEDIA SIGNAL PROCESSING (IIH-MSP), 2010 SIXTH INTERNATIONAL CONFERENCE ON, IEEE, PISCATAWAY, NJ, USA, 15 October 2010 (2010-10-15), pages 248-251, XP031803549, ISBN: 978-1-4244-8378-5 * abstract * * paragraphs [0001], [0003] * | 1-11 | |
| X | WO 2004/098131 A1 (NORTEL NETWORKS LTD [CA]) 11 November 2004 (2004-11-11) * abstract * * page 4, line 10 - page 5, line 22 * * page 9, line 30 - page 11, line 12 * | 1-11 | |
| X | US 2004/029553 A1 (CAIN JOSEPH BIBB [US]) 12 February 2004 (2004-02-12) * abstract * * paragraphs [0013], [0014], [0016], [0031], [0036] * | 1-11 | TECHNICAL FIELDS SEARCHED (IPC) |
| A | ZAHARY A ET AL: "On-demand multiple route maintenance in AODV extensions (ORMAD)", COMPUTER ENGINEERING&SYSTEMS, 2008. ICCES 2008. INTERNATIONAL CONFERENCE ON, IEEE, PISCATAWAY, NJ, USA, 25 November 2008 (2008-11-25), pages 225-230, XP031417771, ISBN: 978-1-4244-2115-2 * paragraph [0001] * | 1-11 | |

The present search report has been drawn up for all claims

| Place of search | Date of completion of the search | Examiner |
|---|---|---|
| Berlin | 11 April 2013 | Goller, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 0092

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2013

| Patent document cited in search report | | Publication date | Patent family member(s) | | Publication date |
|---|---|---|---|---|---|
| EP 1701486 | A1 | 13-09-2006 | AT | 453984 T | 15-01-2010 |
| | | | EP | 1701486 A1 | 13-09-2006 |
| | | | EP | 1856856 A1 | 21-11-2007 |
| | | | US | 2008221988 A1 | 11-09-2008 |
| | | | WO | 2006095148 A1 | 14-09-2006 |
| WO 2004098131 | A1 | 11-11-2004 | AU | 2003286028 A1 | 23-11-2004 |
| | | | DE | 60311327 T2 | 22-11-2007 |
| | | | EP | 1620977 A1 | 01-02-2006 |
| | | | US | 2004219922 A1 | 04-11-2004 |
| | | | WO | 2004098131 A1 | 11-11-2004 |
| US 2004029553 | A1 | 12-02-2004 | AU | 2003257072 A1 | 25-02-2004 |
| | | | CA | 2495490 A1 | 19-02-2004 |
| | | | CN | 1679358 A | 05-10-2005 |
| | | | EP | 1527645 A2 | 04-05-2005 |
| | | | JP | 4060316 B2 | 12-03-2008 |
| | | | JP | 2005535256 A | 17-11-2005 |
| | | | TW | I226199 B | 01-01-2005 |
| | | | US | 2004029553 A1 | 12-02-2004 |
| | | | WO | 2004015904 A2 | 19-02-2004 |

EPO FORM P0459

For more details about this annex : see Official Journal of the European Patent Office, No. 12/82

**EP 2 595 432 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010035068 A